Europäisches Patentamt

European Patent Office

Office européen des brevets

(19)

(11) EP 1 473 945 A2

(12) EUROPEAN PATENT APPLICATION

(43) Date of publication:
03.11.2004 Bulletin 2004/45

(51) Int Cl.7: H04N 9/804

(21) Application number: 04008745.4

(22) Date of filing: 13.04.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 28.04.2003 JP 2003124318

(71) Applicant: Kabushiki Kaisha Toshiba
Tokyo 105-8001 (JP)

(72) Inventors:
• Nakashika, Masahiro
Minato-ku Tokyo 105-8001 (JP)

• Kikuchi, Shinichi
Minato-ku Tokyo 105-8001 (JP)
• Unno, Hiroaki
Minato-ku Tokyo 105-8001 (JP)
• Ito, Yuji
Minato-ku Tokyo 105-8001 (JP)

(74) Representative: Henkel, Feiler & Hänzel
Möhlstrasse 37
81675 München (DE)

(54) Information recording medium, information recording/playback method, and information recording/playback apparatus

(57) There is provided a system configured to prevent recording contents of various broadcasting schemes from being recorded together on a single recording medium while supporting various broadcasting schemes. An optical disc used here can record a digital stream complying with a predetermined digital broadcasting scheme and including specific information APP_NAME corresponding to a broadcasting scheme to be recorded. The broadcasting scheme to be recorded is checked (ST1116). If another digital stream has already been recorded on the optical disc, its broadcasting scheme is detected from APP_NAME, and is compared with that of the stream to be recorded. If these broadcasting schemes are different (NO in step ST1120), recording is aborted (ST1124).

FIG.39

## Description

The present invention relates to an information recording medium (or data structure), an information recording/playback method, and an information recording/playback apparatus, which are suited to record/play back a digital stream signal (MPEG-TS) used in satellite digital TV broadcast or terrestrial digital TV broadcast.

In recent years, TV broadcast has entered the era of digital broadcasts having Hi-Vision programs as principal broadcast contents. The current digital broadcast adopts an MPEG transport stream (to be abbreviated as MPEG-TS as needed hereinafter). In the field of digital broadcast using moving pictures, MPEG-TS will be used as a standard format in the future.

At the start of such digital TV broadcast, market needs for a streamer that can directly record digital TV broadcast contents (without digital/analog conversion) are on the rise. As a currently, commercially available, typical streamer that directly records digital broadcast data (MPEG-TS or the like), a video cassette recorder (D-VHS streamer) named D-VHS® is known.

Upon stream-recording digital broadcast data, MPEG-TS data of a digital broadcast received by a tuner system (normally, a set-top box called an STB) is input to a D-VHS streamer via an IEEE1394 cable. The streamer records the input data on a D-VHS tape. Note that IEEE1394 is the interface standard, which specifies exchange of commands and transmission/reception of data.

Upon playing back broadcast data, the D-VHS streamer reads recorded data (MPEG-TS data or the like) from the recorded D-VHS tape, and sends the read MPEG-TS data to a data expansion unit in the STB via the IEEE1394 cable. In this way, the recorded data is played back.

Since the D-VHS streamer directly records the broadcasted bitstream on a tape, a plurality of programs are multiplexed and recorded on the tape. For this reason, upon playback of the multiplexed recorded programs, the D-VHS streamer sends all data to the STB regardless of whether they are to be played back from the beginning or middle of a program. In this case, the user selects and plays back a desired one of a plurality of multiplexed recorded programs.

Since a tape is used as a recording medium, the D-VHS streamer can make sequential playback but cannot make a random access to the recorded contents. For this reason, it is difficult to quickly jump to a desired position in the desired recorded program and to start playback from that position (difficulty of special playback).

In addition to D-VHS, in recent years, STBs that use hard disc drives (HDD) are put on the marker as a digital broadcast streamer. This STB saves stream data in an HDD and realizes excellent random access performance. However, in this apparatus, the user cannot easily exchange the HDD. For this reason, such apparatus is not suited to preserve a large volume of recorded data as a library over a long term.

As a prevailing solution to the problems (difficulty of random access/difficulty of special playback) of D-VHS, and that (difficulty of media exchange) of the HDD, a currently, commercially available streamer that uses large-capacity disc media such as a DVD-RAM and the like may be used.

As an example of the "streamer using the DVD-RAM", "Digital Video Recording System" disclosed in patent reference 1 (= Jpn. Pat. Appln. KOKAI Publication No. 2000-268537) is known.

"Digital Video Recording System" disclosed in patent reference 1 is premised on a specific streamer standard. As an example of this streamer standard, the DVD stream recording standard (Version 1.0) developed February of 2001 (although it is not open to the public) is known (but, no product using this standard is yet commercially available).

This streamer standard aims at scrambled contents and also broadcast contents of various worldwide broadcast stations. For this reason, a minimum playback unit in video contents is defined by a data amount with reference to ECC blocks. For this reason, upon making special playback, even when data is read out from a target address, 1-picture data that can be played back is not found, and the playback start position may shift considerably. That is, it is very difficult for this standard to attain special playback.

The streamer standard has contents unsuitable for special playback. However, in patent reference 1 above, special playback is facilitated by matching the head of a data unit (VOBU/SOBU) with that of I-picture data (paragraph 0117) or recording the head position of each I-picture data in a management area (paragraph 0118).

The streamer standard packetizes and records irrespective of contents to be recorded. For this reason, upon playback, the arrival time of packets that store the recorded contents can be detected, but the playback time of the recorded contents cannot be directly detected. Hence, it is not easy for the user to designate the playback start position on a time basis, and playback operations such as time search and the like are inconvenient.

As a disc recorder standard free from the above inconvenience (of time search and the like), the DVD video recording (DVD-VR) standard is known, and many products based on this DVD video recording standard are currently commercially available. This video recording standard adopts time map information. With this time map information (which is not available in the conventional streamer standard), it is easy for the user to designate the playback start position on a time basis.

However, the video recording standard is not compatible to stream recording of digital TV broadcast (in order to record digital broadcast contents using a recorder based on the video recording standard, an analog video signal that has temporarily undergone D/A conversion is sent from the STB to the analog video input of the recorder and is MPEG-encoded in the recorder again, and the encoded data is digitally recorded on a DVD-RAM disc or the like). Therefore, the existing video recording standard cannot meet needs of users who want to air-check digital TV broadcast contents (especially, Hi-Vision programs) while maintaining their quality.

Furthermore, various broadcasting schemes of digital broadcast are known (e.g., Association of Radio Industries and Businesses (ARIB); Advanced Television Systems Committee (ATSC); Digital Video Broadcasting (DVB)). Stream recording can support any of these broadcasting schemes. However, when contents of various methods and schemes are recorded together on a single disc, a playback process is complicated and their management becomes troublesome.

The present invention has been made to solve the aforementioned problems, and has as its object to provide a mechanism which can prevent recording contents of various broadcasting schemes from being recorded together on a single recording medium while supporting various broadcasting schemes.

In order to achieve the above object, an information recording medium to which an embodiment of the present invention can be applied is configured so that management information (ESOBI in VMG and/or VMGI_MAT) to be recorded on a management area includes specific information (APP_NAME) in which a value corresponding to a broadcasting scheme to be recorded is set.

In an initialization method of a medium to which an embodiment of the present invention can be applied, a value corresponding to a broadcasting scheme to be recorded can be set in the specific information (APP_NAME) included in management information (VMG).

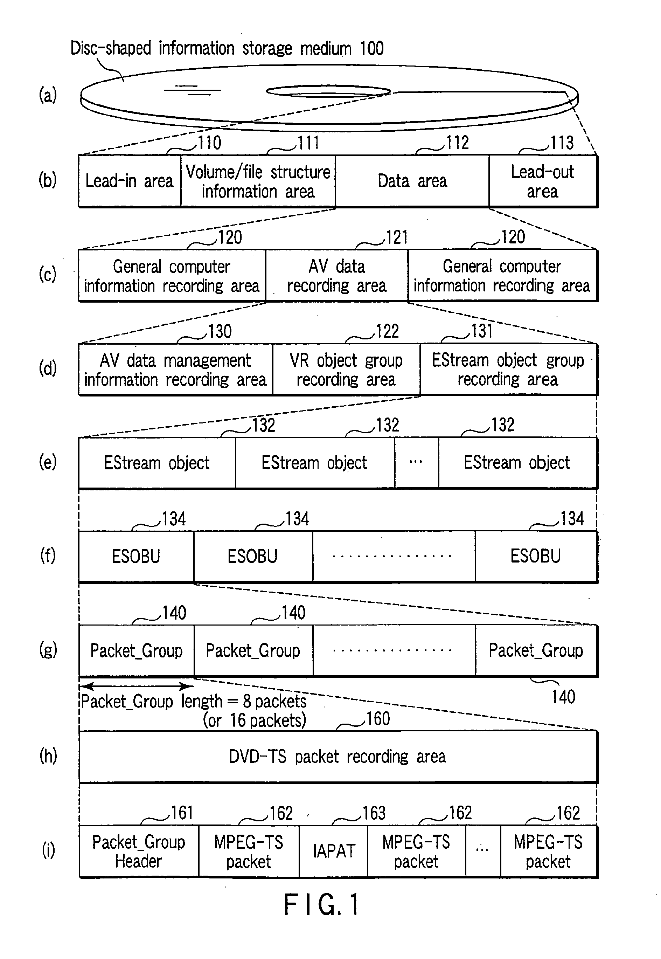

In a recording pre-processing method to which an embodiment of the present invention can be applied, when a digital stream signal has already been recorded on a data area, the broadcasting scheme of this recorded digital stream signal is checked based on the specific information (APP_NAME). If the broadcasting scheme of a digital stream signal to be recorded is different from that of the recorded digital stream signal, recording of the digital stream signal to be recorded is aborted. In other words, this configuration can prevent an information recording medium to which the present invention is applied from stream-recording data of a plurality of different broadcasting schemes. In each individual medium (more specifically, one logical recording area of each individual recording medium), only stream data of one broadcasting scheme is recorded. However, this feature does not eliminate any possibility that when one medium has a plurality of logically distinguished recording areas (e.g., 121 and 120 in FIG. 1), one recording area (120) undergoes MPEG-TS recording of a given broadcasting scheme, and the other area (121) undergoes recording of another broadcasting scheme.

In a management information setting method to which an embodiment of the present invention can be applied, the broadcasting scheme to be recorded is checked, and a value corresponding to the checked broadcasting scheme is set in specific information (APP_NAME) included in management information (VMG).

In a playback process method or data transfer method to which an embodiment of the present invention can be applied, the broadcasting scheme of the recorded digital stream signal is read out from specific information (APP_NAME). Only when the broadcasting scheme indicated by the readout specific information (APP_NAME) is a scheme that allows playback or data transfer, the playback process or data transfer process of the recorded digital stream signal is performed.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view for explaining the data structure according to an embodiment of the present invention;

FIG. 2 is a view for explaining the relationship among a playback management information layer, object management information layer, and object layer in the data structure according to the embodiment of the present invention;

FIG. 3 is a view for explaining an example of the configuration of a field (RTR_VMGI) of one management information (RTR_VMG) recorded on AV data management information recording area 130 shown in FIG. 1;

FIG. 4 is a view for explaining an example of the configuration of another field (ESFIT) of one management information (RTR_VMG) in the data structure according to the embodiment of the present invention;

FIG. 5 is a view for explaining an example of the configuration of the contents of respective elements in the other field (ESFIT) of the management information shown in FIG. 4;

FIG. 6 is a view for explaining an example of the configuration of the contents of stream information (one of ESOBI_STI#1 to ESOBI_STI#m) contained in the management information shown in FIG. 5;

FIG. 7 is a view for explaining an example of the configuration of the contents of video attribute information (V_ATR) contained in the stream information shown in FIG. 6;

FIG. 8 is a view for explaining an example of the configuration of the contents of ESFITI_GI and ESFI of respective elements in the other field (ESFIT) of the management information shown in FIG. 4;

FIG. 9 is a view for explaining an example of the configuration of the contents of ESOBI_VSTI and. ESOBI_ASTI of respective elements in the other field (ESFIT) of the management information shown in FIG. 4;

FIG. 10 is a view for explaining an example of the configuration of the contents (especially, ESOB_GI) of ESOBI shown in FIG. 8;

FIG. 11 is a view for explaining an example of the configuration of the contents (especially, ESOB elementary stream (ES), ES group, TMAP_GI, and ES_MAPI) of ESOBI shown in FIG. 8;

FIG. 12 is a view for explaining an example of the configuration of the contents of ES_MAP_GI shown in FIG. 11;

FIG. 13 is a view for explaining an example of the configuration of the contents of ESOBU_ENT shown in FIG. 11;

FIG. 14 is a view for explaining the contents of ESOBU shown in FIG. 2 depending on the availability of video and audio data;

FIG. 15 is a view for explaining an example of the configuration of the contents (especially, ESOB_GI and MAP_GroupI) of ESOBI shown in FIG. 5;

FIG. 16 is a view for explaining an example of the configuration of some fields (MAP_Group_GI and MAP_ENT#) of map group information (MAP_GroupI#) shown in FIG. 15;

FIG. 17 is a view for explaining an example of the configuration of another field (ESOBU_ENT#) of the map group information (MAP_Group#) contained in the object information (ESOBI#) shown in FIG. 15;

FIG. 18 is a view for explaining an example of the contents of information (PCRL_LB count number or 1st_Ref_PIC_PTM), which is contained in another field (ESOBU_ENT#1) of the map group information (MAP_GroupI#n) shown in FIG. 17 and is associated with the location of a program clock reference, depending on the availability of video and audio data;

FIG. 19 is a view for explaining an example of the configuration of program chain information as one field of another management information (RTR_ESMG) recorded on AV data management information recording area 130 shown in FIG. 1;

FIG. 20 is a view for explaining an example of the configuration of the contents of respective elements of the program chain information shown in FIG. 19;

FIG. 21 is a view for explaining an example of the configuration of playlist information (user-defined information table information or playlist search pointer table) as another field of another management information (RTR_ESMG) recorded on AV data management information recording area 130 shown in FIG. 1;

FIG. 22 is a view for explaining an example of the configuration of the contents of respective elements of the playlist information shown in FIG. 21;

FIG. 23 is a view for explaining another example of the configuration of the contents of respective elements of the program chain information shown in FIG. 19;

FIG. 24 is a view for explaining an example of the configuration of a data unit (ESOBU) for a stream object shown in FIG. 1 or 2;

FIG. 25 is a view for explaining an example of the configuration of an arrival time (ATS) of a packet contained in a packet group header shown in FIG. 24;

FIG. 26 is a view for explaining an example of the configuration of validity information (DCI_CCI_SS) contained in the packet group header shown in FIG. 24;

FIG. 27 is a view for explaining an example of the configuration of display control information (DCI) contained in the packet group header shown in FIG. 24;

FIG. 28 is a view for explaining an example of the configuration of copy generation management information (or copy control information CCI) contained in the packet group header shown in FIG. 24;

FIG. 29 is a view for .explaining an example of the configuration of an increment (IAPAT) of the packet arrival time contained in a packet group shown in FIG. 24 after the packet group header;

FIG. 30 is a view for explaining an example of the configuration of PCR position information (PCR_LB count number or the like) contained in the packet group header shown in FIG. 24;

FIG. 31 is a block diagram for explaining an example of an apparatus for recording and playing back AV information (digital TV broadcast program and the like) on and from an information recording medium (optical disc, hard disc, or the like) using the data structure according to the embodiment of the present invention;

FIG. 32 is a flow chart (overall operation process flow) for explaining an example of the overall operation of the apparatus shown in FIG. 31;

FIG. 33 is a flow chart (interrupt process flow) for explaining an example of an interrupt process in the operation of the apparatus shown in FIG. 31;

FIG. 34 is a flow chart (edit operation process flow) for explaining an example of the contents of an edit process (ST28) shown in FIG. 32;

FIG. 35 is a flow chart (recording flow) for explaining an example of a recording operation (part 1) of the apparatus shown in FIG. 31;

FIG. 36 is a flow chart (recording flow) for explaining an example of a recording operation (part 2) of the apparatus shown in FIG. 31;

FIG. 37 is a flow chart (initialize process flow) for explaining a process for initializing a disc-shaped information storage medium shown in FIG. 1;

FIG. 38 is a view for explaining an example of the contents of APP_NAME shown in FIG. 10, which is used in a VMG generation process (ST1026) shown in FIG. 37;

FIG. 39 is a flow chart (recording pre-process flow) for explaining a process before the start of recording on a disc-shaped information storage medium shown in FIG. 1;

FIG. 40 is a flow chart (STI setting process flow) for explaining the contents of a stream information (VSTI and ASTI) generation process (ST120) shown in FIG. 36;

FIG. 41 is a flow chart (buffer fetch process flow) for explaining an example of the contents of a buffer fetch process (ST130) shown in FIG. 36;

FIG. 42 is a flow chart (stream file information generation process flow) for explaining an example of the contents of a stream file information (SFI or ESFI) generation process in a recording end process (ST150) shown in FIG. 36;

FIG. 43 is a flow chart (program generation process flow) for explaining an example of a program generation process including a process (ST1704) for setting an ID to be referred to upon playback when the cell type in cell information (CI) shown in FIG. 20 or 23 indicates stream recording (C_TY or CELL_TY = "2");

FIG. 44 is a flow chart (overall playback operation flow with reference to APP_NAME) for explaining an example of a playback operation (part 1) of the apparatus shown in FIG. 31;

FIG. 45 is a flow chart (overall playback operation flow) for explaining an example of a playback operation (part 2) of the apparatus shown in FIG. 31;

FIG. 46 is a flow chart (process flow upon cell playback using ADR_OFS of logical block units, and packet units together) for explaining an example of a process (part 1) upon cell playback in the apparatus shown in FIG. 31;

FIG. 47 is a flow chart (process flow upon cell playback) for explaining an example of a process (part 2) upon cell playback in the apparatus shown in FIG. 31;

FIG. 48 is a view for explaining an example of the data structure of a program map table (PMT) that can be used by the apparatus shown in FIG. 31;

FIG. 49 is a view showing an example of the contents of a digital copy control descriptor that can be used by the PMT shown in FIG. 48 and the like (service description table SDT, event information table EIT, and the like);

FIG. 50 is a view for explaining an application example of digital copy control to video data;

FIG. 51 is a view for explaining an application example of digital copy control to audio data;

FIG. 52 is a view showing an example of the contents of a component descriptor that can be used by the PMT shown in FIG. 48 and the like (event information table EIT in FIG. 56 and the like);

FIG. 53 is a view for explaining an example of the contents of component types shown in FIG. 52;

FIG. 54 is a view for explaining an example of the contents of a registration descriptor;

FIG. 55 is a view for explaining an example of the contents of a short event descriptor;

FIG. 56 is a view for explaining an example of the data structure of an event information table (EIT) that can be used in the apparatus shown in FIG. 31;

FIG. 57 is a view for explaining an example of the contents of a component group descriptor;

FIG. 58 is a flow chart (overall transfer operation flow with reference to APP_NAME) for explaining an example of the overall data transfer operation (part 1) in the apparatus shown in FIG. 31;

FIG. 59 is a flow chart (overall transfer operation flow) for explaining an example of the overall data transfer operation (part 2) in the apparatus shown in FIG. 31;

FIG. 60 is a flow chart (process flow upon cell transfer using ADR_OFS of logical block units, and packet units together) for explaining an example (part 1) of the process upon cell transfer (ST320) shown in FIG. 59;

FIG. 61 is a flow chart (process flow upon cell transfer) for explaining an example (part 2) of the process upon cell transfer (ST320) shown in FIG. 41;

FIG. 62 is a flow chart (process flow upon time search; part 1) for explaining an example of a time search process with respect to already recorded stream information of a digital TV broadcast program or the like in the apparatus shown in FIG. 31;

FIG. 63 is a flow chart (process flow upon time search; part 2) for explaining another example of a time search process with respect to already recorded stream information of a digital TV broadcast program or the like in the apparatus shown in FIG. 31;

FIG. 64 is a view for explaining another example of the configuration of a data unit (ESOBU) for the stream object (ESOB);

FIG. 65 is a view for explaining another example of the configuration of management information (EHDVR_MG) recorded on AV data management information recording area 130 shown in FIG. 1;

FIG. 66 exemplifies contents of the extended video manager information management table (EVMGI_MAT) shown in FIG. 65;

FIG. 67 exemplifies contents of the extended play list search pointer (EPL_SRP) shown in FIG. 65;

FIG. 68 exemplifies contents of the play list resume marker information (EPL_SRP) shown in FIG. 65;

FIG. 69 exemplifies contents of the extended movie AV file information table (EM_AVFIT) shown in FIG. 65;

FIG. 70 exemplifies contents of the extended movie video object general information (EM_VOB_GI) shown in FIG. 69;

FIG. 71 exemplifies contents of the extended video object time map general information (EVOB_TMAP_GI) shown in FIG. 69;

FIG. 72 exemplifies contents of the extended still picture AV file information table (ES_AVFIT) shown in FIG. 65;

FIG. 73 exemplifies contents of the extended stream file information table (ESTR_FIT) shown in FIG. 65;

FIG. 74 exemplifies contents of the extended stream object information (ESOBI) shown in FIG. 73;

FIG. 75 exemplifies contents of the extended stream object information general information (ESOBI_GI) shown in FIG. 74;

FIG. 76 exemplifies contents of the extended stream object type (ESOB_TY) shown in FIG. 75;

FIG. 77 exemplifies contents of the copy control information (CP_CTRL_INFO) shown in FIG. 75;

FIG. 78 exemplifies contents of extended stream object elementary stream information (ESOB_ESI for video ES) shown in FIG. 74;

FIG. 79 exemplifies contents of extended stream object elementary stream information (ESOB_ESI for audio ES) shown in FIG. 74;

FIG. 80 exemplifies contents of extended stream object elementary stream information (ESOB_ESI for other ES) shown in FIG. 74;

FIG. 81 exemplifies contents of stream type information (ES_TY) shown in each of FIGS. 59 to 61;

FIG. 82 exemplifies contents of the video attribute information (V_ATR) shown in FIG. 78;

FIG. 83 exemplifies contents of the audio attribute information (A_ATR) shown in FIG. 79;

FIG. 84 exemplifies contents of the grouping information general information (GPI_GI) shown in FIG. 74;

FIG. 85 exemplifies contents of the elementary stream packet identifier (ES_PID) shown in FIG. 74;

FIG. 86 exemplifies contents of the extended stream object time map general information (ESOB_TMAP_GI) shown in FIG. 74;

FIG. 87 exemplifies contents of the extended elementary stream time map general information (EES_TMAP_GI) shown in FIG. 74;

FIG. 88 exemplifies contents of the extended program chain information (EPGCI; or EORG_PGCI) shown in FIG. 65;

FIG. 89 exemplifies contents of the extended program chain general information (EPGCI_GI) shown in FIG. 88;

FIG. 90 exemplifies contents of the extended program information (EPGI) shown in FIG. 88;

FIG. 91 exemplifies contents of the program resume marker information (PG_RSM_MRKI) shown in FIG. 90;

FIG. 92 exemplifies contents of the extended video time map information table (EVTMAPIT) shown in FIG. 65; and

FIG. 93 exemplifies contents of the extended stream time map information table (ESTMAPIT) shown in FIG. 65.

Digital TV broadcast and broadcast which uses a wired network such as the Internet or the like broadcast (distribute) compress moving picture data. A TS stream as a basic format common to these broadcasting schemes is divided into a packet management data field and payload. The payload includes data to be played back in a scrambled state. According to ARIB (Association of Radio Industries and Businesses) as one digital broadcasting scheme, a PAT (Program Association Table), PMT (Program Map Table), and SI (Service Information) are not scrambled. Also, various kinds of management information can be generated using the contents (SDT: Service Description Table, EIT: Event Information Table, BAT: Bouquet Association Table) of the PMT and SI.

The digital broadcast contents to be played back include MPEG video data, Dolby AC3® audio data, MPEG audio data, data broadcast data, and the like. The digital broadcast contents include information required upon playback (e.g., PAT, PMT, SI, and the like) although they are not directly related to the contents to be played back. The PAT includes the PID (Packet Identification) of the PMT for each program, and the PMT records the PIDs of video data and audio data.

For example, a normal playback sequence of an STB (Set Top Box) or the like is as follows. That is, when the user determines a program based on EPG (Electronic Program Guide) information, the PAT is loaded at the beginning of the target program, and the PID of a PMT, which belongs to the desired program, is determined on the basis of that data. The target PMT is read out in accordance with that PIT, and the PIDs of video and audio packets to be played back, which are contained in the PMT, are determined. Video and audio attributes are read out based on the PMT and SI and are set in respective decoders. The video and audio data are extracted and played back in accordance with their PIDs. Note that the PAT, PMT, SI, and the like are transmitted at intervals of several 100 ms since they are used during playback.

Upon recording on a disc medium such as a DVD-RAM or the like using these data, it is advantageous to directly record broadcast data as digital data. Hence, the present invention proposes ESR (Extended Stream Recording) as a format which is different from the existing VR (video recording) format and directly records a stream. This ESR is obtained by merging the conventional SR (stream recording) with VR (video recording), and supports stream recording of digital broadcast while taking advantages of existing VR resources.

Preferred embodiments of the present invention based on the ESR will be described in detail hereinafter with reference to the accompanying drawings.

FIG. 1 is a view for explaining the data structure according to an embodiment of the present invention. As a disc-shaped information recording medium 100 (FIG. 1(a)), recordable optical discs such as a DVD-RAM, DVD-RW, DVD-R, and the like, and recordable magnetic discs such as a hard disc and the like are available. The following explanation will be given taking an optical disc such as a DVD-RAM or the like as an example.

Disc 100 has lead-in area 110, volume/file structure information area 111, data area 112, and lead-out area 113 from its inner periphery side toward the outer periphery side (FIG. 1(b)). Volume/file structure information area 111 stores a file system. The file system includes information indicating the recording locations of files. Recorded contents are stored in data area 112 (FIG. 1(c)).

Data area 112 is divided into areas 120 that record general computer data, and area 121 that records AV data. AV data recording area 121 includes AV data management information area 130 that stores a file (VMG/ESMG file) used to manage AV data, VR object group recording area 122 that records object data (VOBS) files (VRO files) complying with the video recording standard, and EStream object group recording area 131 that records stream objects (ESOBS: Extend Stream Object Stream) compatible to digital broadcast (FIG. 1(d)). That is, in this embodiment, stream objects of digital broadcast are recorded as EStream objects 132 (ESOBS) as files independent from VR objects (FIG. 1(e)).

Each EStream object 132 is made up of one or more data units (ESOBU: Extend Stream Object Unit) 134 each of which serves as an access unit to disc 100 (FIG. 1(f)). Each data unit (ESOBU) 134 is made up of one or more packet groups (Packet Group) 140, each of which includes a group of a plurality of TS packets (FIG. 1(g)).

In this embodiment, each packet group 140 includes a group of eight LBs (Logical Blocks). If one LB size is 2 kbytes, the size of each packet group 140 is 16 kbytes. This size is equal to an integer fraction of the ECC block size in the video recording standard.

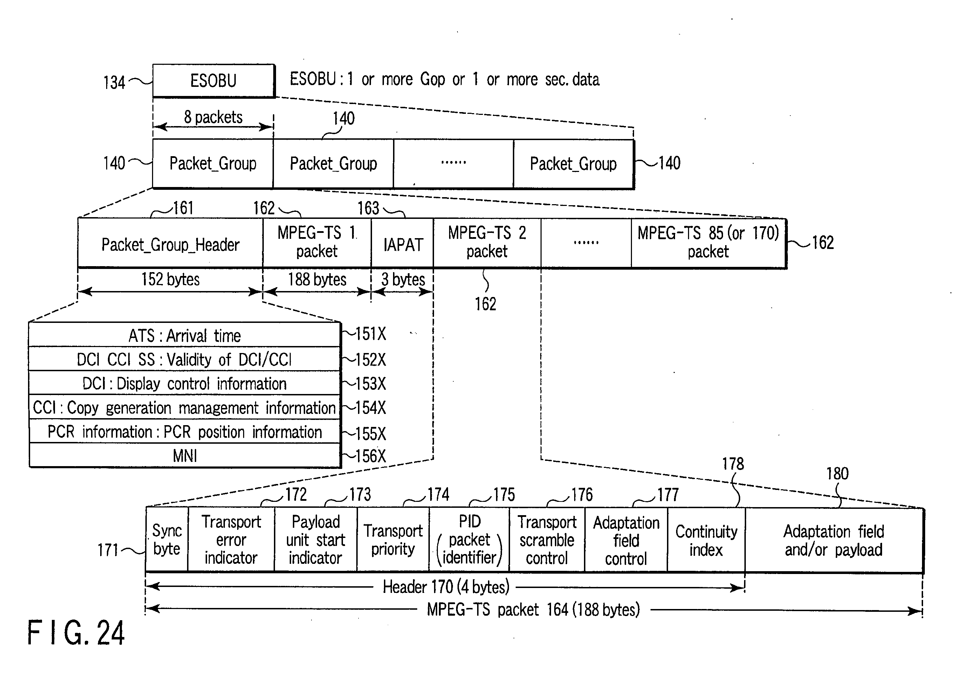

Each packet group 140 forms packet recording area (DVD-TS packet recording area) 160 in stream recording (ESR) proposed by the present invention (FIG. 1(h)). DVD-TS packet recording area 160 can be formed of packet group header 161, a plurality of (e.g., 85) MPEG-TS packets 162, and a plurality of (e.g., 84) pieces of packet arrival time difference information (IAPAT: Incremental Packet Arrival Time) (FIG. 1(i)). The contents of packet group 140 will be described in detail later with reference to FIG. 24.

Note that the directories of recording files are independently assured for respective formats (e.g., a VIDEO-TS directory for DVD-Video (ROM Video) and a DVD-R TAV directory for DVD-RTR (recordable/reproducible DVD)). In new stream recording (ESR) compatible to digital broadcast, a recording file is similarly recorded in, e.g., a DVD_HDR directory (not shown).

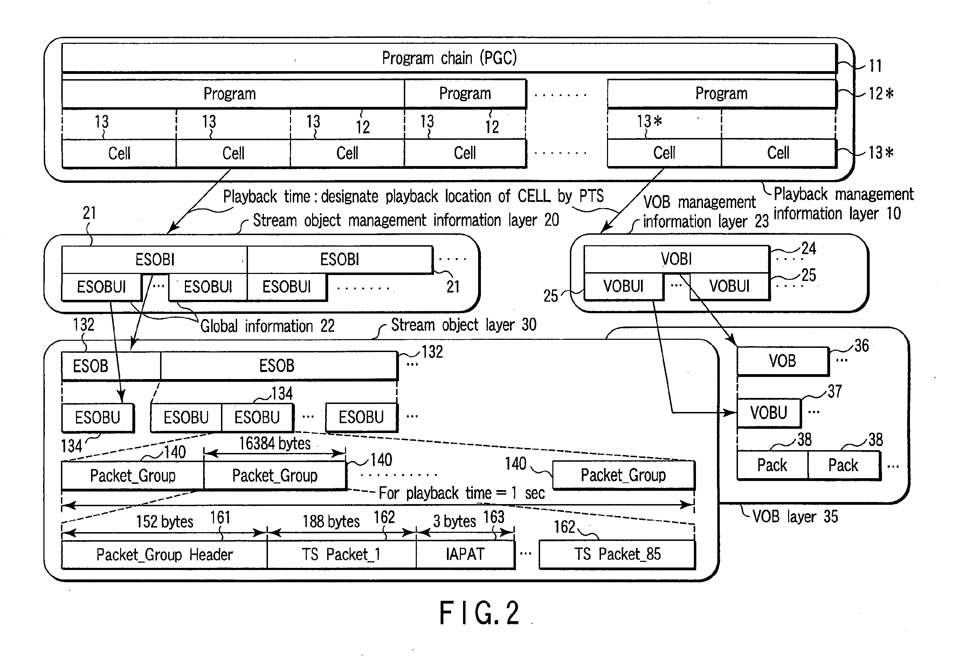

FIG. 2 is a view for explaining the relationship among a playback management information layer, object management information layer, and object layer in the data structure according to the embodiment of the present invention. Management information (VMG/ESMG file) recorded on AV data management information recording area 130 in FIG. 1 has playback management information layer 10 used to manage the playback sequences of both the recorded contents based on the video recording standard and the stream recording recorded contents based on the present invention.

That is, a group of one or more cells 13 each of which serves as a playback unit of stream-recorded objects forms program 12, and a group of one or more cells 13* each of which serves as a playback unit of video-recorded objects forms program 12*. A sequence (playback sequence) of these programs 12 and 12* is managed by management information (PGCI) of program chain (PGC) 11.

Even when the user wants to start playback from the middle of either cell 13 on the stream recording side or cell 13* on the video recording side, he or she can designate the playback location using a playback time (PTS).

That is, when playback is to start from the middle of cell 13 on the stream recording side using the playback time (PTS), stream object ESOB 132 in stream object layer 30 is designated via stream object information ESOBI 21 in stream object management information layer 20, and stream object unit ESOBU 134 in stream object layer 30 is designated via stream object unit information ESOBUI 22 in stream object management information layer 20. When ESOB 132 and its ESOBU 134 are designated, the playback start location is specified. (ESOBUI in this case may be restated as global information 22.)

This ESOBU 134 is formed of one or more packet groups 140. ESOBU 134 corresponds to, e.g., 1 or 2 GOP data. Alternatively, ESOBU 134 corresponds to an interval from the head of I-picture data to a location immediately before the head of I-picture data an integer number of data ahead of the former data. If no GOP delimiter is found, ESOBU 134 is delimited in units corresponding to a data amount for a maximum of 1 sec as a playback time. In this way, overflow of each information field is prevented.

Each packet group 140 includes 8 LBs (16384 bytes), and has packet group header 161 at its head position. Packet group header 161 is followed by a plurality of transport stream packets (TS_Packet) 162 and a plurality of pieces of packet arrival time difference information (IAPAT) 163. These TS packets 162 store stream recording recorded contents.

On the other hand, when playback is to start from the middle of cell 13* on the video recording side using the playback time (PTS), video object VOB 36 in video object layer 35 is designated via video object information VOBI 24 in video object (VOB) management information layer 23, and video object unit VOBU 37 in video object layer 35 is designated via video object unit information VOBUI 25 in video object management information layer 23. When VOB 36 and its VOBU 37 are designated, the playback start location is specified. VOBU 37 includes a plurality of packs 38, which store video recording recorded contents.

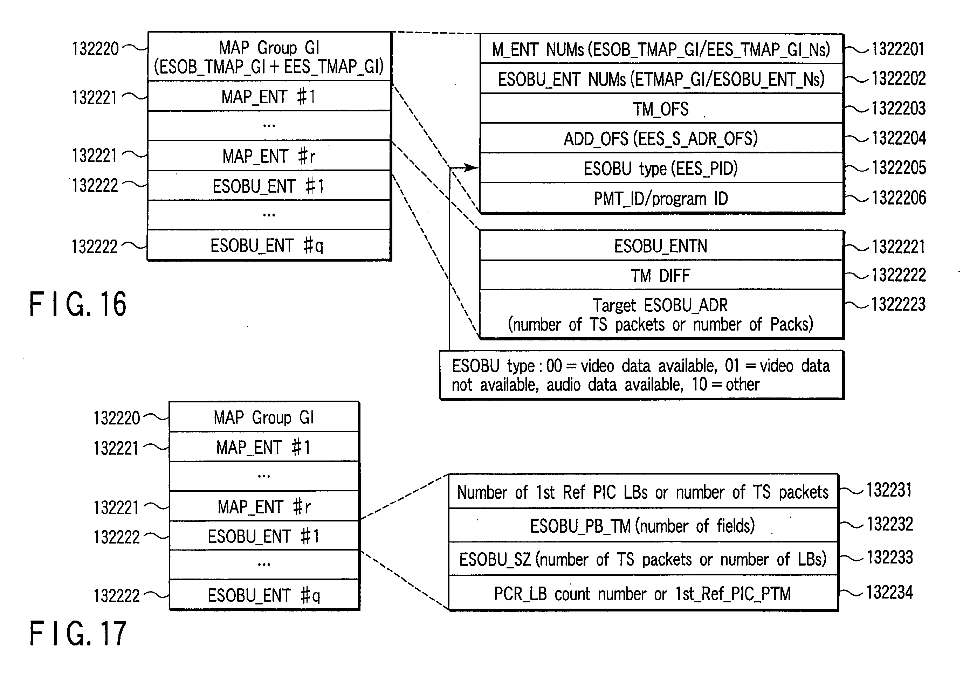

As will be described in detail later, when playback is to start from the middle of cell 13 on the stream recording side, the playback start location can be designated using a time in units of the number of fields by ESOBU_PB_TM (FIG. 17). On the other hand, when the playback is to start from the middle of cell 13* on the video recording side, the playback start location can be designated by VOBU_PB_TM (not shown) in time map information (TMAPI) specified by the video recording standard.

The contents of FIG. 2 can be summarized as follows. That is, stream recording management data (PGCI) can be recorded in a file common to video recording, and stream recording can be controlled common to video recording. Also, stream recording and video recording can be linked for respective cells, and the playback location in each of stream recording and video recording can be designated by a playback time.

Irrespective of the recording method (stream or video recording), after a given broadcast program (program) is recorded on disc 100, special playback requirements (e.g., the user wants to start playback (time search) from a desired time or to make fast-forwarding (FF)/fast-rewinding (FR) in a desired program) are often generated. To meet such requirements, special management information is required to manage recorded data.

That is, digital broadcast objects are recorded as an ESOBS (Extended stream object stream) as a file independent from VR objects. As shown in FIG. 2, management data of the ESOBS is recorded in a VMG file common to VR, is controlled common to VR, and is linked for respective CELLs. Also, the playback location of the ESOBS is designated for respective playback times.

The ESOBS structure is made up of one or more ESOB data, each of which corresponds to, e.g., one program. Each ESOB includes one or more data units ESOBU (Extended stream object unit), each of which corresponds to object data for 1s (1 second), one or two GOP data, or one or more I-picture data. When the transfer rate is low, one GOP data cannot often be sent within 1s (VR can freely set data units since it adopts internal encoding, but digital broadcast cannot specify the next incoming data since encoding is done by a broadcast station).

On the other hand, the transfer rate may be high, and I-picture data may be sent frequently. In such case, ESOBU is delimited frequently, and ESOBU management information increases accordingly, thus ballooning the whole management information. For this reason, it is appropriate to delimit ESOBU by, e.g., 0.4s to 1s (a minimum limit = 0.4 sec is applied to ESOBUs other than the least ESOBU of the ESOB), by one GOP data, or by one or more I-picture data.

One ESOBU includes one or more Packet Groups, each of which is formed of 8 LBs (one LB = one sector: 2048 bytes). Each Packet Group includes a Packet Group Header, '(85) TS packets, and (84) IAPAT (Incremental Packet Arrival Time) data.

As for the arrival time of each TS packet, the arrival time of the first TS packet in the Packet Group is expressed by ATS in the Packet Group Header. The arrival time of the second TS packet is expressed by the sum of this ATS and IAPAT. Furthermore, the arrival time of each of the third and subsequent TS packets is expressed by the sum of the immediately preceding arrival time and IAPAT. In this manner, the arrival times of the second and subsequent TS packets can be expressed by the sum totals of IAPAT data as a kind of difference information. Hence, each IAPAT data can be expressed by a relatively small data size (3 bytes), and the total data size can be reduced (compared to a case wherein the arrival times of all TS packets are expressed by ATS).

As will be described later with reference to FIG. 24, the Packet Group Header includes the arrival time (Arrival Time Stamp) of the first TS packet of the Packet Group, display control information DCI, copy control information CCI, validity information of DCI/CCI, manufacturer's information MNFI, presentation time stamp PTS, and the like.

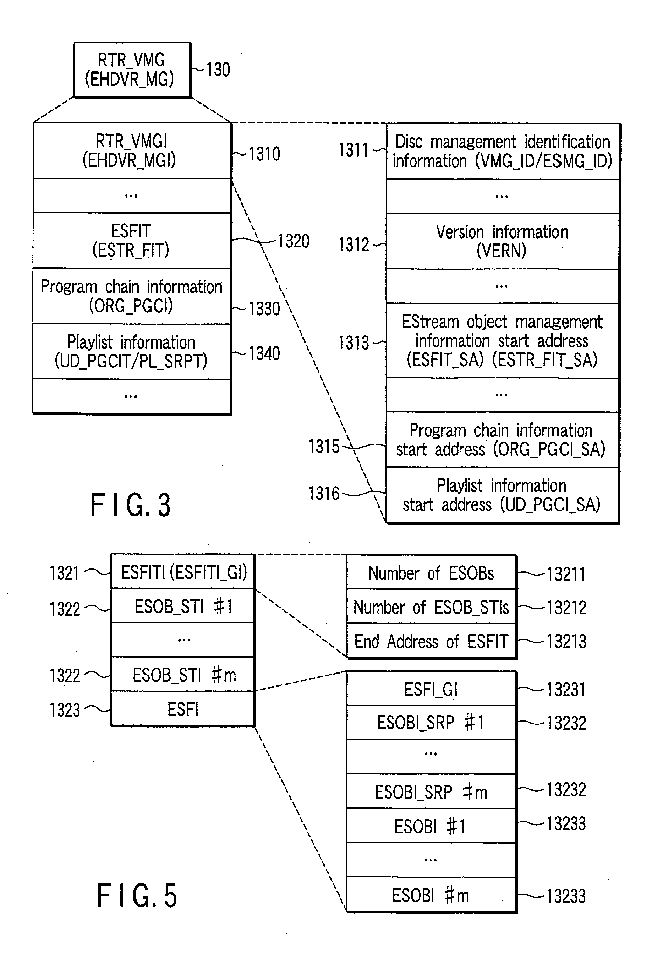

The management information will be described below with reference to FIGS. 3 to 30.

FIG. 3 is a view for explaining an example of the configuration of a field (RTR_VMGI) of one piece of management information (RTR_VMG) recorded on AV data management information recording area 130 shown in FIG. 1.

Note that stream recording in this embodiment will be abbreviated as ESR (Extended Stream Recording), and video recording will be abbreviated as VR. Management information of ESR data is saved in RTR_VMG 130, and is managed in the same way as VR data, as shown in FIG. 3.

RTR_VMG 130 includes video manager information (RTR_VMGI) 1310, stream file information table (ESFIT: Extend Stream File Information Table) 1320, (original) program chain information (ORG_PGCI) 1330, and playlist information (PL_SRPT; or user-defined program information table: UD_PGCIT) 1340.

Note that the playlist and user-defined program chain have substantially equivalent meanings although they have different names, and are synonymous with a playlist and user-defined program chain used in the video recording standard. Hence, in the following description, playlist related information (PL_SRP and the like) and user-defined program chain related information (UD_PGCIT_SRP and the like) are included as needed.

RTR_VMGI 1310 includes disc management identification information (VMG_ID/ESMG_ID) 1311, version information (VERN) 1312, EStream object management information start address (ESFIT_SA) 1313, program chain information start address (ORG_PGCI_SA) 1315, and playlist information start address (UD_PGCIT_SA) 1316. ESR stream management information is saved in ESFIT 1320.

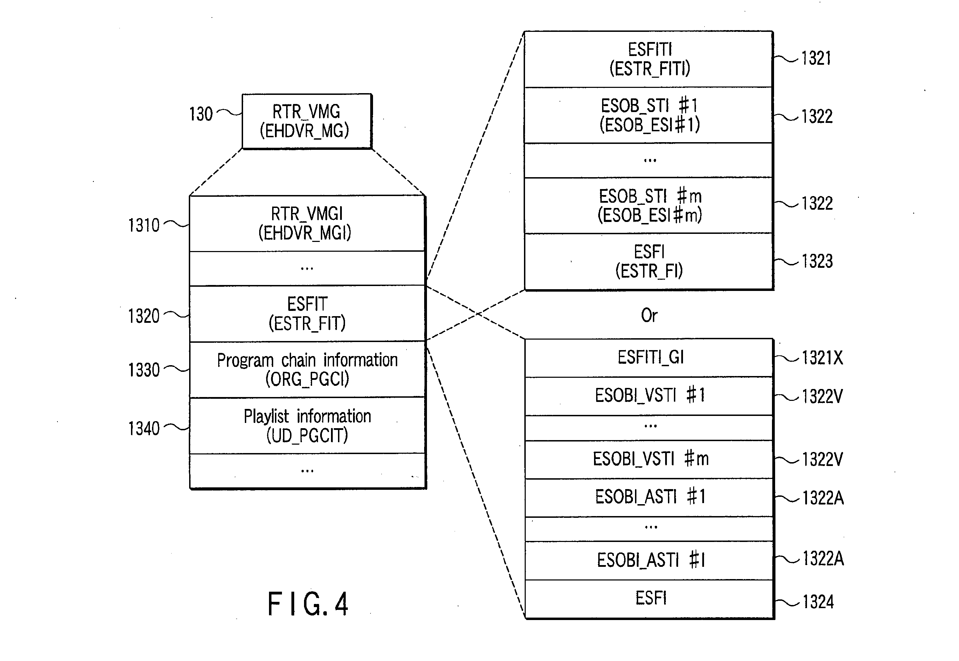

FIG. 4 is a view for explaining an example of the configuration of ESFIT 1320 in FIG. 3. This ESFIT 1320 includes stream file information table information (ESFITI) 1321, one or more pieces of ESOB stream information (ESOB_STI#1 to ESOB_STI#m) 1322, and stream file information (ESFI) 1323. (Note that 1321 may be considered as general information.)

Or, ESFIT 1320 includes ESFIT general information ESFIT_GI (General Information) 1321X, VSTI (Video Status Information) 1322V, ASTI (Audio Status Information) 1322A, and ESFI (Extended Stream File Information 1324. The ESFIT_GI may include the number of ESOBs, the number of pieces of VSTI, the number of pieces of ASTI, the end address of the ESFIT, and the like.

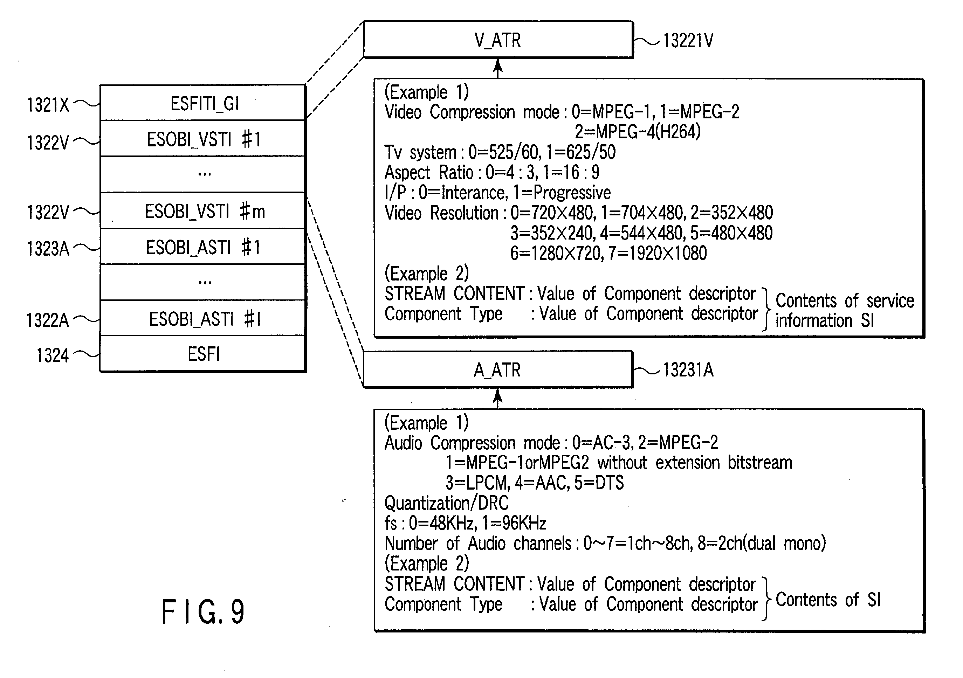

Each of VSTI and ASTI is attribute information of a stream in the ESOB; video attribute information can be expressed by VSTI, and audio attribute information can be expressed by ASTI. In the VR standard, one stream information STI is formed of a pair of VIDEO and AUDIO data. However, in the case of digital broadcast, a broadcast signal is likely to include a plurality of video and/or audio data. For this reason, STI is not always expressed by a video/audio pair unlike in the VR standard. Hence, the total information size of STI can be reduced when video and audio data are managed using independent attribute information. These video attribute information (V_ATR) and audio attribute information (A_ATR) will be described in detail later with reference to FIG. 9.

In the embodiment of the present invention, a data structure as a combination of VR management information VMG and ESR management information ESMG is also available. Although not shown, the stream file information table (ESFIT) may be allocated after a movie AV file information table (M_AVFIT), and original program chain information (ORG_PGCI), user-defined PGC information table (UD_PGCIT), text data manager (TXTDT_MG), and manufacturer's information table (MNFIT) may be allocated after the ESFIT. Upon adopting such data structure of management information (similar to the video recording standard), it becomes easier to effectively utilize existing control software resources that have been developed for recorders based on the existing video recording standard (by partially modifying them).

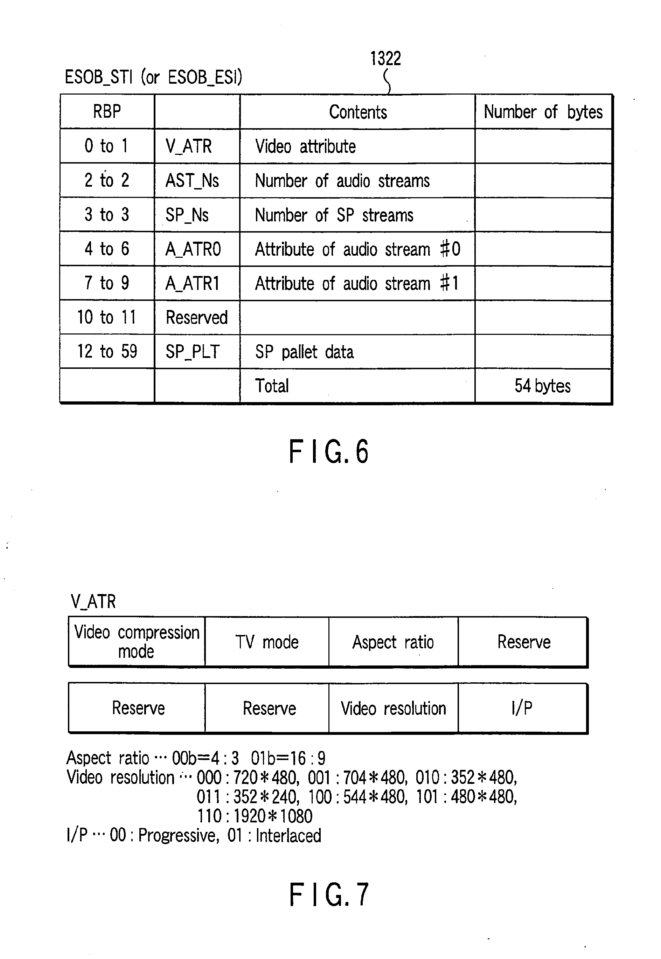

FIG. 5 is a view for explaining an example of the configuration of ESFITI 1321 (or ESFITI_GI) and ESFI 1323 in FIG. 4. ESFITI 1321 includes information 13211 indicating the number of ESOBs, information 13212 indicating the number of pieces of ESOB_STI, and information 13213 indicating the end address of the ESFIT. ESFI 1323 includes general information ESFI_GI 13231, one or more pieces of stream object information (ESOBI#1 to ESOBI#m) 13233, and one or more search pointers (ESOBI_SRP#1 to ESOBI_SRP#m) 13232 for these (ESOBI#1 to ESOBI#m).

FIG. 6 is a view for explaining an example of the configuration of the contents of stream information (one of ESOBI_STI#1 to ESOBI_STI#m) included in management information (ESFIT) 1322 shown in FIG. 5. This ESOBI_STI includes, in turn from lower relative byte positions, video attribute V_ATR, the number AST_Ns of audio streams, the number SP_Ns of sub-picture streams, attribute A_ATR0 of audio stream #0, attribute A_ATR1 of audio stream #1, and pallet data SP_PLT of sub-picture data.

FIG. 7 is a view for explaining an example of the configuration of the contents of video attribute information (V_ATR) included in the stream information shown in FIG. 6. This V_ATR includes information (MPEG1, MPEG2, or the like) indicating a video compression mode, information (NTSC, PAL, or the like, or SD, HD, or the like) indicating a TV mode, information indicating an aspect ratio, information indicating a video resolution, and interlaced/progressive identification information I/P.

If the information indicating an aspect ratio is "00b", it indicates an aspect ratio = 4 : 3; if the information is "01b", it indicates an aspect ratio = 16 : 9. If identification information I/P is "00", it indicates progressive display; if the information is "01", it indicates interlaced display.

If the information indicating a video resolution is "000", it indicates horizontal*vertical resolutions = 720*480; if the information is "001", it indicates horizontal*vertical resolutions = 704*480; if the information is "010", it indicates horizontal*vertical resolutions = 352*480; if the information is "011", it indicates horizontal*vertical resolutions = 352*240; if the information is "100", it indicates horizontal*vertical resolutions = 544*480; if the information is "101", it indicates horizontal*vertical resolutions = 480*480; and if the information is "110", it indicates horizontal*vertical resolutions = 1920*1080. Note that 720*480 progressive display or 1920*1080 interlaced or progressive display corresponds to the HD resolution of Hi-Vision or equivalent. Other resolutions correspond to the SD resolutions.

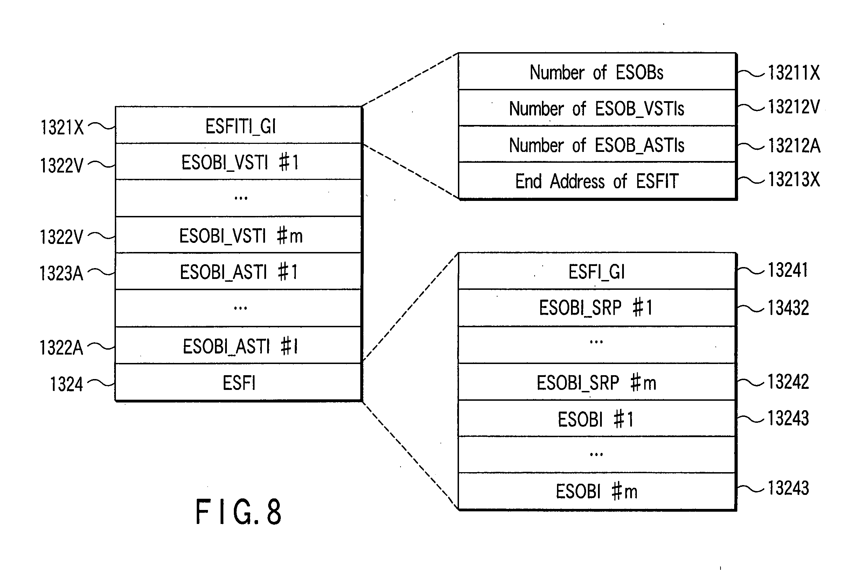

FIG. 8 is a view for explaining an example of the configuration of ESFITI_GI 1321X and ESFI 1324 in FIG. 4. ESFITI_GI 1321X includes information 13211X indicating the number of ESOBs, information 13212V indicating the number of pieces of ESOB_VSTI, information 13212A indicating the number of pieces of ESOB_ASTI, and information 13213X indicating the end address of the ESFIT. ESFI 1324 includes general information ESFI_GI 13241, one or more pieces of stream object information (ESOBI#1 to ESOBI#m) 13243, and one or more search pointers (ESOBI_SRP#1 to ESOBI_SRP#m) 13242 for these (ESOBI#1 to ESOBI#m).

FIG. 9 is a view for explaining an example of the configuration of the contents of ESOBI_VSTI and ESOBI_ASTI of elements in another field (ESFIT) of the management information shown in FIG. 4.

Two different types of VSTI attribute information V_ATR 13221V are available. In example 1 in FIG. 9, an I/P (Interlaced/Progressive) identification flag, 1280 × 720 resolution information, and 1920 × 1080 resolution information are added as HD (High Definition) support information (although basically the same bit configuration as that of the VR standard is adopted). On the other hand, in example 2, V_ATR is configured to utilize SI (Service Information). That is, data on SI are set in V_ATR without any modifications, and the values of a Component descriptor are directly used in stream content and component type setups.

In ASTI attribute information A_ATR 13221A, in example 1, a sampling frequency = 96 kHz is set and compression modes such as AAC (Advanced Audio Coding), DTS (Digital Theater Systems; trademark), and the like are added as HD support information (although the same bit configuration as that of VR is adopted). In example 2, the values of a Component descriptor are directly set in A_ATR.

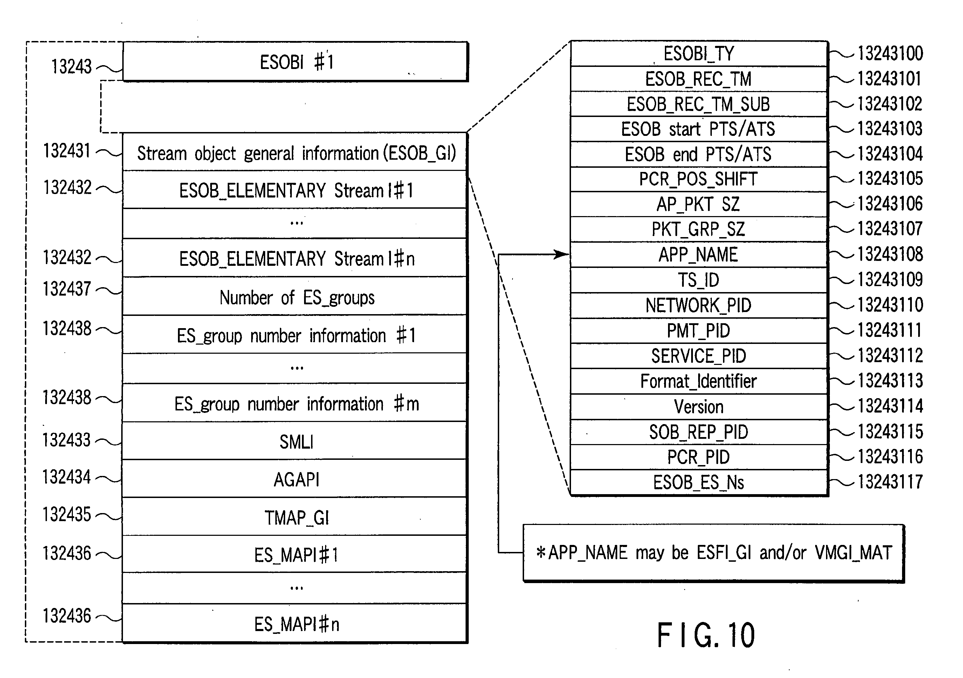

FIG. 10 is a view for explaining an example of the configuration of the contents (especially, ESOB_GI) of ESOBI shown in FIG. 8.

File management information ESFI includes ESFI_GI, ESOBI search pointers, and ESOBI, as has been explained using FIG. 8. This ESOBI 13243 includes ESOBI general information ESOBI_GI 132431, ESOB elementary stream information 132432, the number of elementary stream groups 132437, elementary stream groups 132438, seamless information SMLI 132433, audio gap information AGAPI 132434, time map general information TMAP_GI 132435, and elementary stream map information ES_MAPI 132436, as shown in FIG. 10.

ESOBI_GI 132431 includes ESOBI type ESOBI_TY, ESOB recording start time ESOB_REC_TM, recording time sub unit ESOB_REC_TM_SUB, ESOB start PTS (playback time) or ATS (arrival time), and ESOB end PTS or ATS.

ESOBI_GI 132431 further includes PCR position shift PCR_POS_SHIFT, packet size AP_PKT_SZ (188 bytes in case of a current TS packet), packet group size PKT_GRP_SZ (a size corresponding to 85 packets in case of current TS packets), application name APP_NAME, transport stream identifier TS_ID, network packet identifier NETWORK_PID, PMT packet identifier PMT_PID, service packet identifier SERVICE_PID, Format Identifier, Version (the value of a registration descriptor indicating the type of data in case of an external input; set with a data type unique to a tuner in case of an internal tuner), SOB representative packet identifier SOB_REP_PID (the PID of a representative stream of an SOB to be played back or component group number; the representative PID is used to generate ESOBI_GI recording start time and ESOB start/end PTS or ATS), PCR packet identifier PCR_PID, and the number ESOB_ES_Ns of ESOB elementary streams.

Note that the storage position of APP_NAME is not limited to ESOB_GI. APP_NAME may be stored in ESFI_GI (1321X in FIG. 4) and/or VMGI_MAT (management information in one field of RTR_VMGI in FIG. 4) according to the circumstances (for example, when APP_NAME is standardized to one type on the whole disc).

When APP_NAME data have different contents for respective ESOBs, some elements (after TS_ID in the illustration order from the top of FIG. 10) in the ESOBI configuration may change for respective ESOBs.

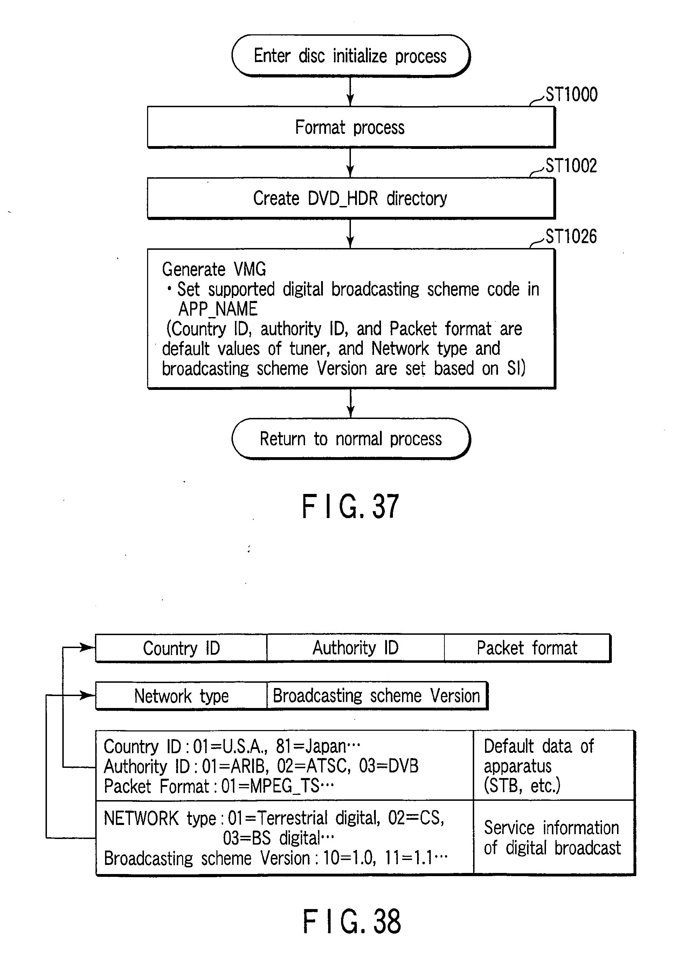

APP_NAME can be formed of a Country ID (a code used to identify a country: for example, a telephone country code 01 = U.S.A., 81 = Japan), Authority ID (a broadcasting scheme: 01 = ARIB, 02 = ATSC, 03 = DVB), Packet Format (a packet format of a stream: 01 = MPEG_TS,...), NETWORK type (network type 01 = terrestrial digital, 02 = CS, 03 = BS digital,...), and broadcasting scheme Version (10 = 1.0, 11 = 1.1,...). Some apparatuses (STB and the like) must have a Country ID, Authority ID, and Packet Format of these parameters as defaults, but other apparatuses can form a Country ID, Authority ID, and Packet Format based on received data. In this case, variations of ESOB object data may be as many as available broadcasting schemes. At this time, a plurality of pieces of ESFI may be assured in correspondence with schemes, and an object file name may be set in ESFI_GI of each ESFI to support a plurality of schemes. A practical example of the contents of APP_NAME which can include information (Authority ID) used to identify a plurality of schemes will be described later with reference to FIG. 38.

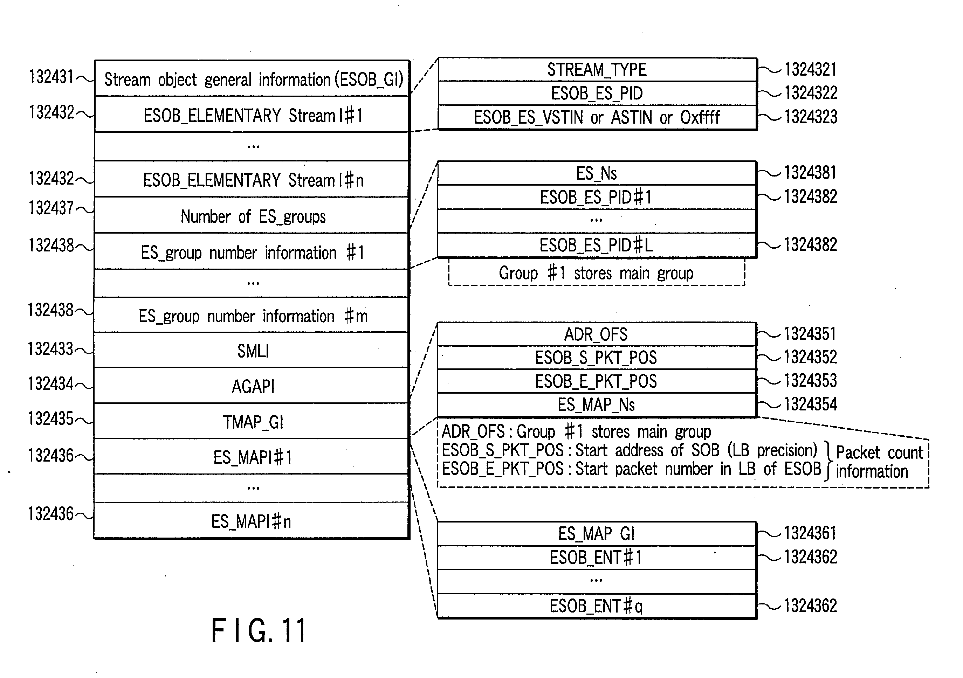

FIG. 11 is a view for explaining an example of the configuration of the contents (especially, ESOB elementary stream (ES), ES group, TMAP_GI, and ES_MAPI) of the ESOBI shown in FIG. 8.

Referring to FIG. 11, ESOB_ESI 132432 includes stream type (STREAM_TYPE) 1324321, PID (ESOB_ES_PID) 1324322 of that stream, and the number of pieces of stream information 1324323. As the number of pieces of stream information 1324323, a VSTI number (ESOB_ES_VSTIN) for Video, ASTI number (ESOB_ES_ASTIN) for Audio, and 0xffff for others are set. Note that a type written in the PMT can be adopted as stream type 1324321.

Each elementary stream group information (ES_GroupI) 132438 includes the number (ES_Ns) of elementary streams 1324381, and PID (ESOB_ES_PID) 1324382 of that ESOB_ES. Note that the first ES_GroupI#1 stores a main group.

TMAP_GI 132435 includes address offset ADR_OFS (LB units of Logical Block precision) 1324351 indicating the start address of the head of an SOB, ESOB_S_PKT_POS (start packet number in LB of ESOB) 1324352, ESOB_E_PKT_POS (end packet number in LB of ESOB) 1324353, and the number (ES_MAP_Ns) of ES_MAPs 1324354. ESOB_S_PKT_POS and ESOB_E_PKT_POS can be handled as packet count information of the ESOB of interest.

ES_MAPI 132436 includes elementary stream map information general information ES_MAP_GI 1324361, and ESOBU entry information (ESOB_ENT) 1324362.

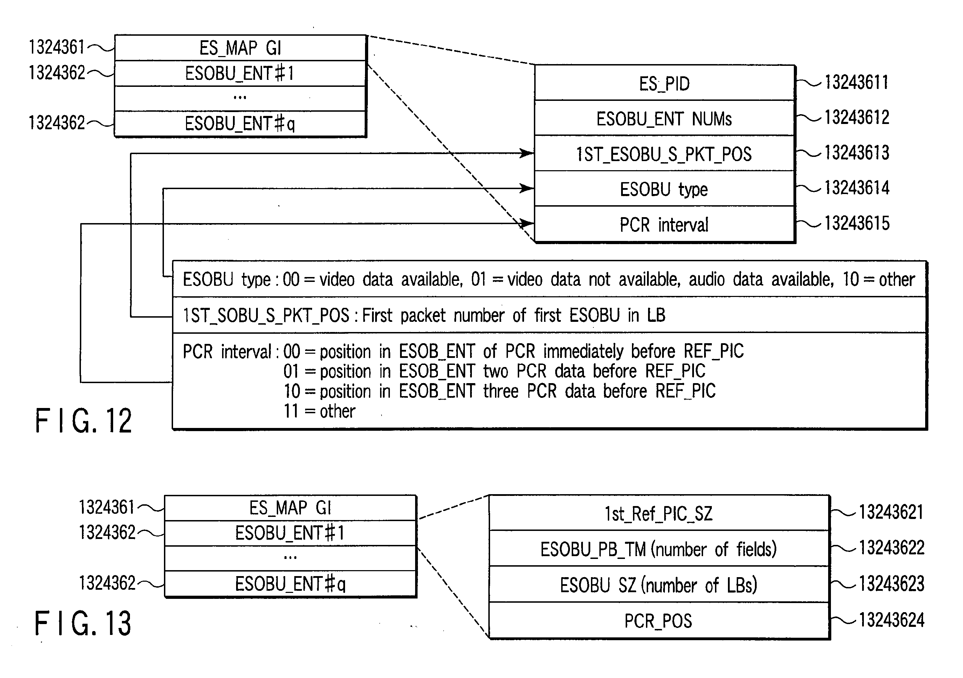

FIG. 12 is a view for explaining an example of the configuration of the contents of ES_MAP_GI shown in FIG. 11.

ES_MAP_GI 1324361 includes ES_PID (PID of that elementary stream) 13243611, the number of ESOBU entries 13243612, 1ST_ESOBU_S_PKT_POS (the TS packet number of the first TS packet of the first ESOBU from the head of a Packet Group) 13243613, ESOBU type 13243614, and PCR interval 13243615 indicated within ESOBU.

There are three types of ESOBU, i.e., a case wherein video data is available, a case wherein video data is not available and audio data is available, and a case of only other kinds of information. In the example of FIG. 12, these ESOBU types are respectively 00, 01, and 02.

As for the PCR interval, the PCR interval = "00" indicates the PCR position within ESOB_ENT immediately before (one PCR before) reference picture REF_PIC (1-picture); the PCR interval = "01" indicates the PCR position within ESOB_ENT two PCR data before REF_PIC; the PCR interval = "10" indicates the PCR position within ESOB_ENT three PCR data before REF_PIC; and the PCR interval = "11" indicates another instruction state.

FIG. 13 is a view for explaining an example of the configuration of the contents of ESOBU_ENT shown in FIG. 11.

There are three types of ESOBU entry information (ESOBU_ENT) 1324362 in correspondence with the ESOBU types (00, 01, 02) shown in FIG. 12.

When video data is available, ESOBU_ENT 1324362 includes 1ST_REF_PIC_SZ (LB unit) 13243621 as end address information of the first reference picture (I-picture or the like) in an entry from the head of ESOBU, ESOBU playback time (the number of fields) 13243622, ESOBU size (LB unit) 13243623, and PCR position (PCR_POS) 13243624. Note that PCR_POS represents the PCR position at the position indicated by the PCR interval using the address count from the head of ESOBU. If no PCR is available, PCR_POS = 0xffff.

If PCR data is available, the number of logical blocks (LB count) of this PCR position can be expressed by:

$$PCR\_POS \times 2^{PCR\_POS\_SHIFT}$$

or

$$PCR\_POS \times 2\exp(PCR\_POS\_SHIFT) \qquad (1)$$

Note that the PCR is located before the reference picture position by several PCR'a indicated with PCR intervals.

Since an "exponent" of 2 is used to express the PCR position together as in formula (1), a large address expression can be made by information "PCR_POS_SHIFT" with a relatively small number of bits.

When video data is not available, and audio information is available, ESOBU_ENT 1324362 includes the end address information of the first audio frame in the entry from the head of ESOBU (same as above), ESOBU playback time (the number of fields), ESOBU size (same as above), and PCR_POS.

When only other kinds of information are available, since entry information cannot be formed, all data of ESOBU_ENT 1324362 are padded with "FF"s.

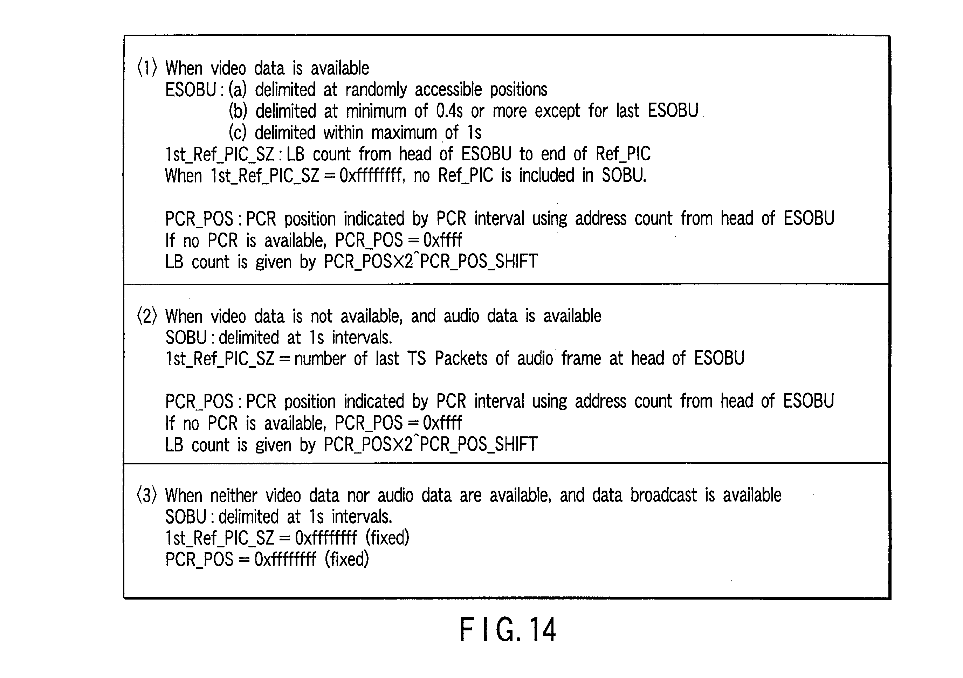

FIG. 14 is a view for explaining an example of the contents of ESOBU shown in FIG. 2 and the like depending on the availability of video and audio data corresponding to the ESOBU types shown in FIG. 12.

<1> When video data is available:

ESOBU is delimited (a) at randomly accessible positions (at the head of GOP or I-picture), (b) by a playback time of a minimum of 0.4 sec except for the last ESOBU (in the SOB of interest), or (c) within a maximum of 1 sec as a playback time.

1ST_REF_PIC_SZ indicates the number of logical blocks (LB count) from the head of the ESOBU of interest to the end of REF_PIC (I-picture). If no REF_PIC is included in the ESOBU of interest (or no REF_PIC is found), for example, 1ST_REF_PIC_SZ = 0xffffffff.

PCR_POS represents the PCR position indicated by' the PCR interval using the address count from the head of the ESOBU, and is expressed for respective logical blocks (LB count) using formula (1). If no PCR is available in the ESOBU of interest, for example, PCR_POS = 0xffff.

<2> When video data is not available, and audio data is available:

ESOBU is delimited at 1-sec intervals.

1ST_REF_PIC_SZ can be expressed by, e.g.,

the number of last packets in the first audio frame of the ESOBU of interest.

PCR_POS represents the PCR position indicated by the PCR interval using the address count from the head of the ESOBU, and is expressed for respective logical blocks (LB count) using formula (1). If no PCR is available in the ESOBU of interest, for example, PCR_POS = 0xffff.

<3> When neither video data nor audio data are available, but data broadcast information is available:

ESOBU is delimited at 1-sec intervals.
1ST_REF_PIC_SZ is fixed to, e.g., 0xffffffff.
PCR_POS is fixed to, e.g., 0xffffffff.

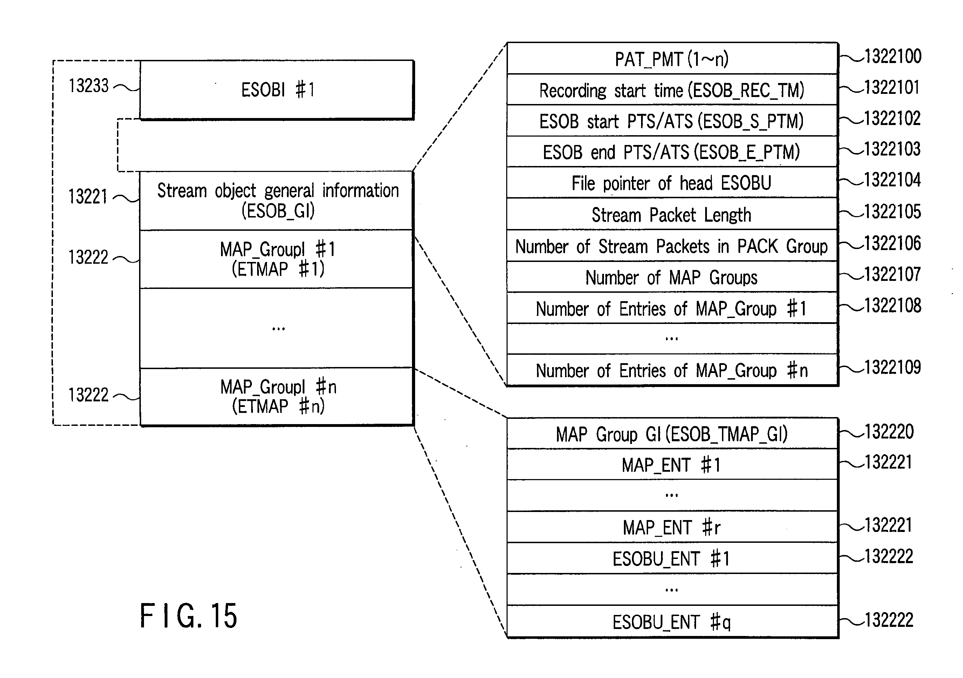

FIG. 15 is a view for explaining the configuration of each stream object information (e.g., ESOBI#1) 13233 in FIG. 5. This ESOBI#1 13233 includes stream object general information (ESOB_GI) 13221, and one or more pieces of map group information (MAP_GroupI#1 to MAP_GroupI#n) 13222.

ESOB_GI 13221 includes PAT/PMT (Program Association Table/Program Map Table) 1322100 for all of one or more streams, recording start time information 1322101, ESOB start PTS/ATS (Presentation Time Stamp/Arrival Time Stamp; presentation time stamp/ first TS packet arrival time) 1322102, ESOB end PTS/ATS 1322103, file pointer (relative address) 1322104 of the first ESOBU in that ESOB, received stream packet length (188 bytes for TS packets) 1322105, the number (85 for TS packets) of stream packets 1322106 in a packet group, the number of map groups 1322107, and the number of entries 1322108 of map group #1 to the number of entries 1322109 of map group #n for one or more map groups.

Also, each map group information (e.g., MAP_GroupI#n) 13222 includes map group general information (MAP_Group_GI) 132220, one or more map entries (MAP_ENT#1 to MAP_ENT#r) 132221, and one or more ESOBU entries (ESOBU_ENT#1 to ESOBU_ENT#q) 132222.

FIG. 16 is a view for explaining an example of the configuration of MAP_Group_GI 132220 and each map entry (e.g., MAP_ENT#r) 132221 in FIG. 15.

MAP_Group_GI 132220 includes the number of map entries (M_ENT_NUMs) 1322201, the number of ESOBU entries (ESOBU_ENT_NUMs) 1322202, time offset information (TM_OFS) 1322203, address offset information (ADD_OFS) 1322204, ESOBU type information 1322205, and PMT_ID/program ID information 1322206.

Note that ESOBU type information 1322205 includes:

type information = "00" ... video data available;
type information = "01" ... video data not available, audio data available;
type information = "10" ... other.

MAP_ENT#r 132221 includes ESOBU entry number (ESOBU_ENTN) 1322221, time difference (TM_DIFF) 1322222, and target ESOBU address (Target ESOBU_ADR) 1322223. This Target ESOBU_ADR 1322223 can be expressed by the number of TS packets or the number of logical blocks LB (the number of sectors) of a disc.

FIG. 17 is a view for explaining an example of the configuration of ESOBU_ENT#1 132222 shown in FIG. 15. ESOBU_ENT#1 132222 includes information 132231 indicating the LB count or the number of TS packets of 1st_Ref_PIC, ESOBU playback time (ESOBU_PB_TM: corresponding to the number of video fields) 132232, ESOBU size (ESOBU_SZ; which can be expressed by the number of TS packets or the LB count) 132233, and PCR_LB count number or 1st_Ref_PIC playback time (1st_Ref_PIC_PTM) 132234.

Note that there are three types of ESOBU, i.e., a case wherein video data is available, a case wherein no video data is available but audio data is available, and a case of only other kinds of information. These types are respectively expressed by <1>, <2>, and <3>. That is, there are three types of ESOBU entry information in accordance with the aforementioned types.

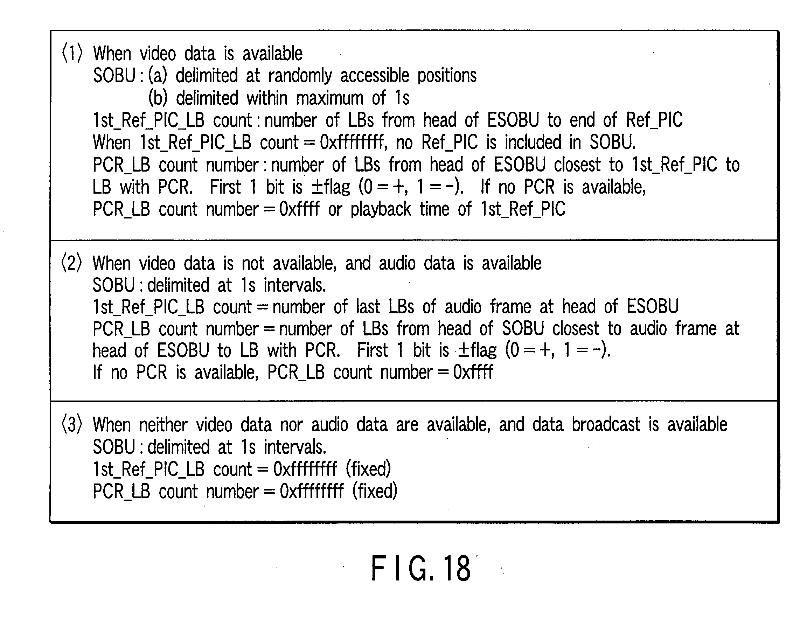

FIG. 18 is a view for explaining an example of the contents of ESOBU entry information 132222 shown in FIG. 17 depending on the availability of video and audio data.

<1> When video data is available, ESOBU entry information includes the end address information of the first reference picture (I-picture or the like) in an entry from the head of ESOBU, ESOBU playback time (the number of fields), ESOBU size, and pack number with the PCR, or reference picture playback time (the number of fields from the head of ESOBU). Note that the PCR is the closest one which is located before the position of the reference picture.

*More specifically, when video data is available:

ESOBU is delimited (a) at randomly accessible positions, (b) in units corresponding to an integer multiple of GOP, or (c) within a maximum of 1 sec as a playback time.

The LB count of 1st_Ref_PIC is that from the head of ESOBU to the end of the reference picture (Ref_PIC). When this LB count is "0xffffffff", it indicates that Ref_PIC is not present or found in that SOBU. In this case, this SOBU cannot be used as an access point upon special playback.

The PCR_LB count number indicates the LB count from the head of ESOBU closest to 1st_Ref_PIC to logical block LB that stores the PCR. The first bit of the PCR_LB count number is used as a ± flag (e.g., "0" indicates "+ direction"; "1" indicates "- direction"). If no PCR is available, the PCR_LB count number is set to be "0xffff", or the playback time of 1st_Ref_PIC (1st_Ref_PIC_PTM) can be adopted instead.

<2> When video data is not available and audio data is available, ESOBU entry information includes the end address information of the first audio frame in an entry from the head of ESOBU, ESOBU playback time (the number of fields), ESOBU size, and pack number with the PCR.

*More specifically, when video data is not available and audio data is available:

ESOBU is delimited at 1-sec intervals.

The LB count of 1st_Ref_PIC is the last LB count of the audio frame at the head of ESOBU.

The PCR_LB count number indicates the LB count from the head of SOBU closest to an audio frame at the head of ESOBU to logical block LB that stores the PCR. The first bit of the PCR_LB count number is used as a ± flag (e.g., "0" indicates "+ direction"; "1" indicates "- direction"). If no PCR is available, the PCR_LB count number is set to be "0xffff".

<3> When only other kinds of information are available, since entry information cannot be formed, all data are padded with "FF"s.

*More specifically, when neither video data nor audio data are available, and only other kinds of information (data broadcast information and the like) are available:

ESOBU is delimited at 1-sec intervals.
The LB count of 1st_Ref_PIC is fixed to "0xffffffff"
The PCR_LB count number is fixed to "0xffffffff".

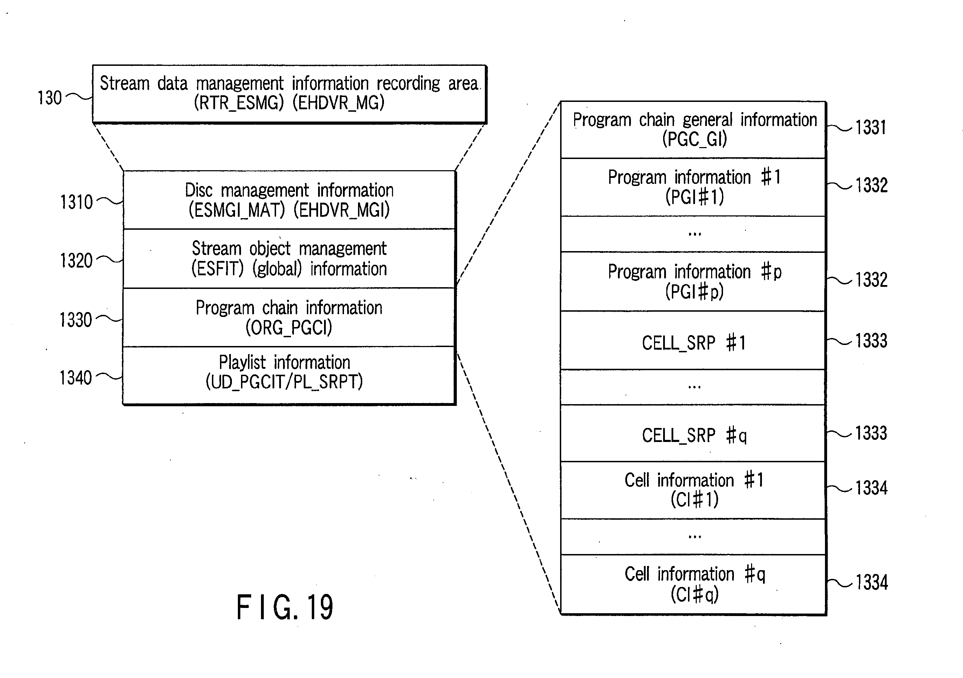

FIG. 19 is a view for explaining an example of the configuration of another management information (stream data management information RTR_ESMG) recorded on AV data management information recording area 130 shown in FIG. 1. That is, stream data management information recording area 130 as a part of AV data management information recording area 130 includes disc management information (ESMGI_MAT) 1310, stream object management information (ESFIT; global information) 1320, program chain information (ORG_PGCI) 1330, and playlist information (UD_PGCIT) 1340.

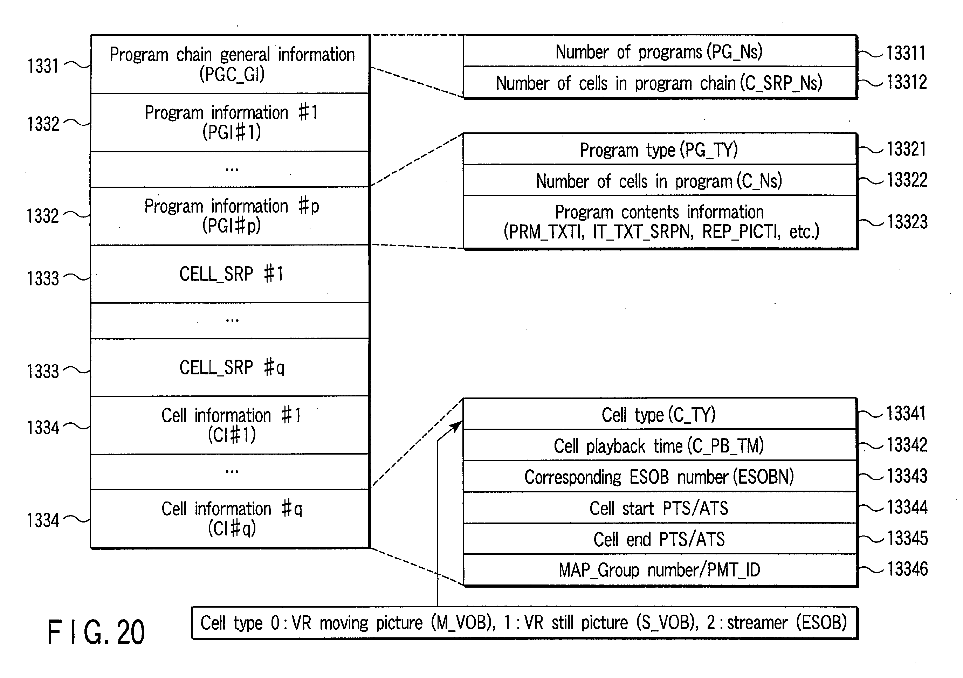

Program chain information (PGCI) 1330 includes program chain general information (PGC_GI) 1331, one or more pieces of program information (PGI#1 to PGI#p) 1332, one or more cell information search pointers 1333, and one or more pieces of cell information (CI#1 to CI#q) 1334. This PGCI data structure has substantially the same format as that of the video recording standard, except for its contents (cell information CI) (this difference will be explained below with reference to FIG. 20).

FIG. 20 is a view for explaining an example of the contents of respective elements of the program chain information shown in FIG. 19.

Program chain general information 1331 includes the number of programs (PG_Ns) 13311, and the number of cells (CI_SRP_Ns) 13312 in the program chain.

Each piece of program information 1332 includes program type (PG_TY) 13321, the number of cells (C_Ns) 13322 in the program, and program contents information (primary text information PRM_TXTI, item text search pointer number IT_TXT_SRPN, representative picture information REP_PICTI, and the like) 13323.

Each piece of cell information 1334 includes cell type (C_TY) 13341, cell playback time 13342, corresponding ESOB number 13343, cell start PTS/ATS (presentation time stamp/ESOBU arrival time) 13344, cell end PTS/ATS 13345, and map group number/ PMT_ID 13346. Note that an embodiment in which cell playback time 13342 in cell information is omitted is also available.

Note that cell type 13331 includes:

C_TY = "0" ... VR moving picture (M_VOB);
C_TY = "1" ... VR still picture (S_VOB);
C_TY = "2" ... streamer (ESOB).

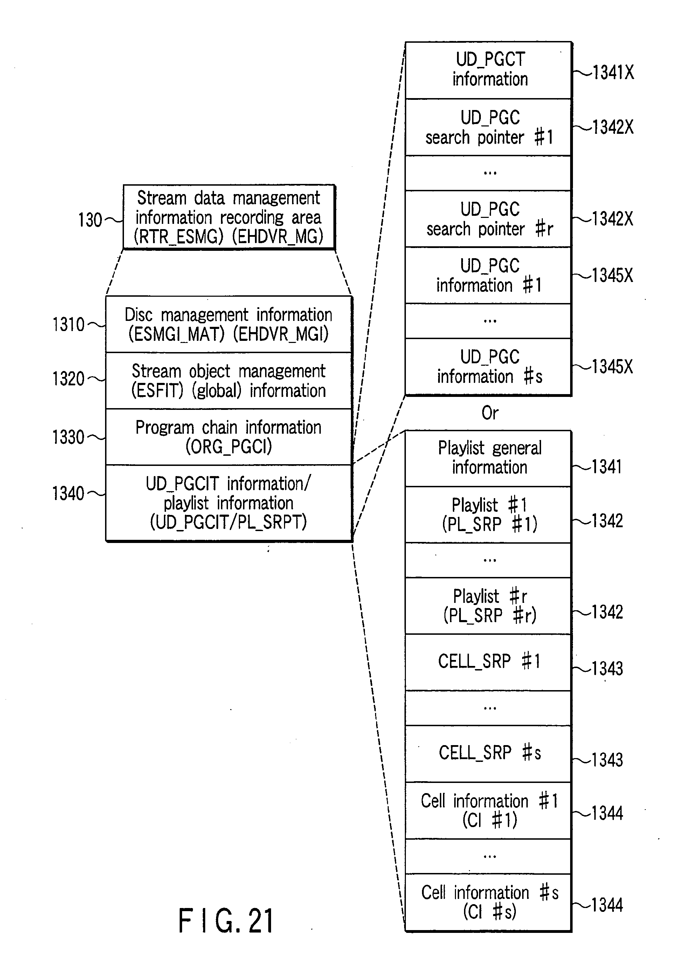

FIG. 21 is a view for explaining an example of the configuration of the contents of the playlist information (or user-defined PGC information table) shown in FIG. 19.

Playlist information (PL_SRPT) 1340 includes playlist general information (PL_SRPTI or UD_PGCITI) 1341, one or more playlists (their search pointers PL_SRP#1 to PL_SRP#r or UD_PGCI_SRP#1 to UD_PGCI_SRP#r) 1342, and one or more pieces of cell information (CI#1 to CI#s) 1343.

Or user-defined PGC information table (UD_PGCIT) 1340 includes UD_PGCIT information 1341X, one or more UD_PGC search pointers 1342X, and one or more pieces of UD_PGC information 1345X.

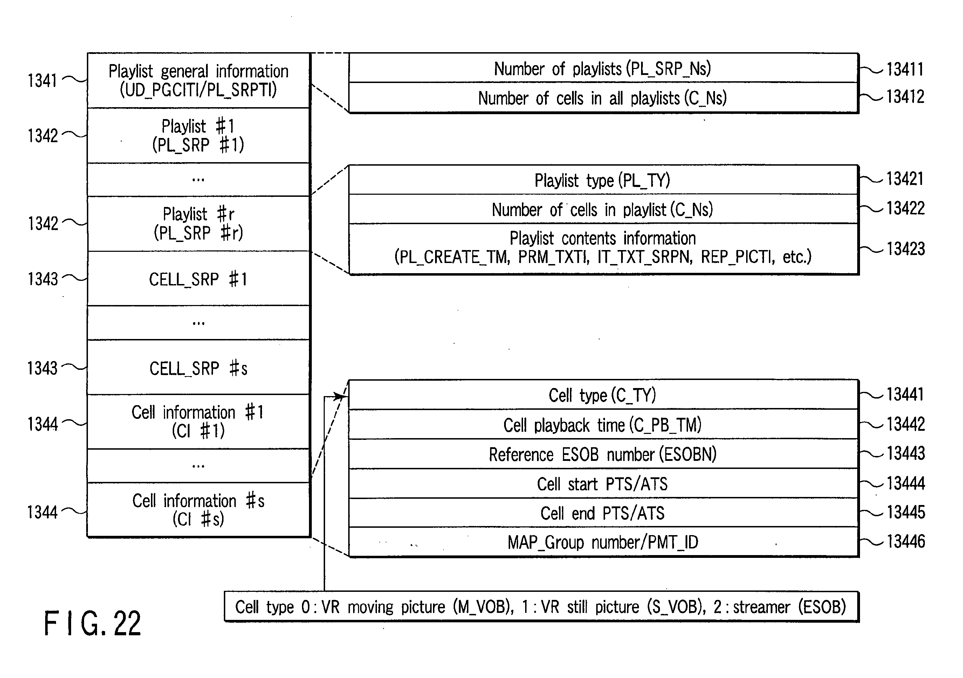

FIG. 22 is a view for explaining an example of the configuration of respective elements of the playlist information shown in FIG. 21.

Playlist general information 1341 includes the number of playlists (PL SRP Ns) 13411, and the number of cells (C_Ns) 13412 in all the playlists. Each playlist 1342 includes playlist type (PL_TY) 13421, the number of cells (C_Ns) 13422 in the playlist, and playlist contents information (playlist creation time PL_CREATE_TM, primary text information PRM_TXTI, item text search pointer number IT_TXT_SRPN, representative picture information REP_PICTI, and the like) 13423.

Each cell information 1344 includes cell type (C_TY) 13441, cell playback time 13442, reference ESOB number (ESOBN) 13443, cell start PTS/ATS (presentation time stamp/ESOBU arrival time) 13444, cell end PTS/ATS 13445, and map group number/PMT_ID 13446. Note that an embodiment in which cell playback time 13442 in cell information is omitted is also available.

Note that cell type 13441 includes:

C_TY = "0" ... VR moving picture (M_VOB);
C_TY = "1" ... VR still picture (S_VOB);
C_TY = "2" ... streamer (ESOB).

In the embodiment of the present invention, PGC information is used as playback information, and has the same format as that of video recording. However, in the cell information shown in FIGS. 20 and 22, the ESOB type is added to the cell type. Furthermore, the ESOB number is designated, and two types of the playback start time and end time, i.e., start PTS and ATS (or APAT) and end PTS and ATS (or APAT) are assumed. Moreover, the map group number or stream number is assumed.

In the embodiment of the present invention, the structure of the extend stream object set (ESOBS) is made up of one or more extend stream objects (ESOB), each of which corresponds to, e.g., one program. Each ESOB includes one or more ESOBUs (Extend Stream Object Units), each of which corresponds to object data for 1 sec as a playback time or one or two GOP data.

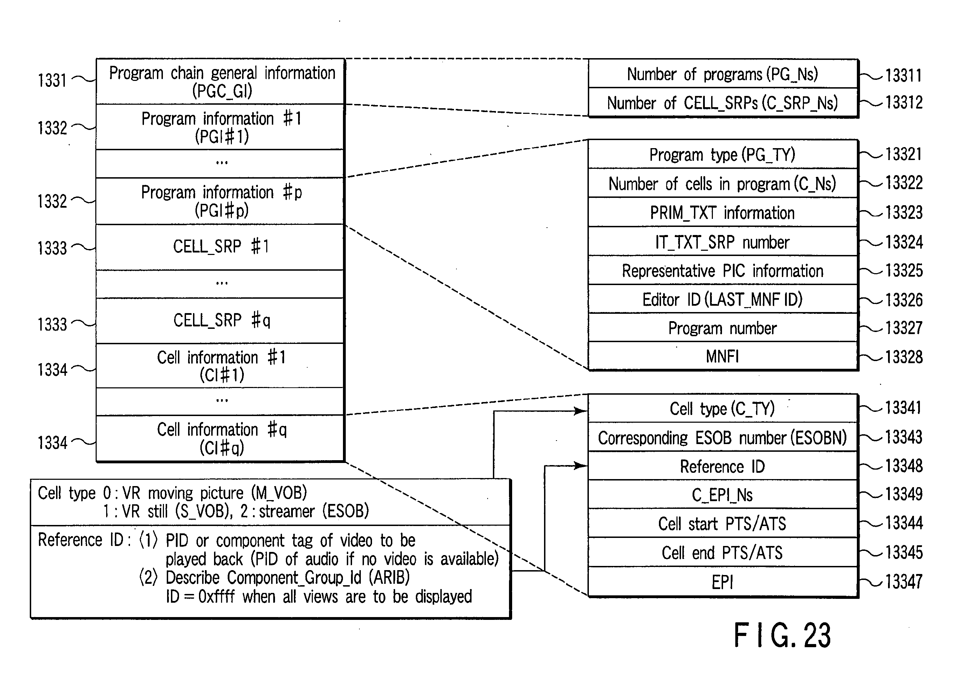

FIG. 23 is a view for explaining another example of the configuration of the contents of respective elements of the program chain information shown in FIG. 19.

PGC information serves as playback information, and ORG_PGC information is automatically generated by an apparatus upon recording and is set in the order of recording, as in the conventional VR format. On the other hand, UD_PGC information is generated according to a playback order, which is freely added by the user and is called a playlist (PLAY LIST). These two formats are common to PGC level, and the PGC format can have a configuration shown in, e.g., FIG. 23.

More specifically, PGC_GI 1331 includes the number of programs (PG_Ns)' 13311, and the number of cell search pointers (CI_SRP_Ns) 13312.

Each program information (PGI) 1332 includes program type (PG_TY) 13321, the number of cells (C_Ns) 13322 in the program, primary text information (PRM_TXTI) 13323, item text search pointer number (IT_TXT_SRPN) 13324, representative picture information (REP_PICTI) 13325, editor ID (LAST_MNF_ID) 13326, program number (PGN) 13327, and manufacturer's information (MNFI) 13328.

Each cell information (CI) 1334 includes cell type (C_TY) 13341, corresponding ESOB number 13343, reference ID 13348, the number of pieces of cell entry point information (C_EPI_Ns) 13349, cell start PTS/ATS 13344, cell end PTS/ATS 13345, and entry point information (EPI) 13347.

Note that C_TY 13341 designates the type of cell (0...VR movie object M_VOB, 1...VR still picture object S_VOB, 2...streamer object SOB) by its contents (0 to 2).

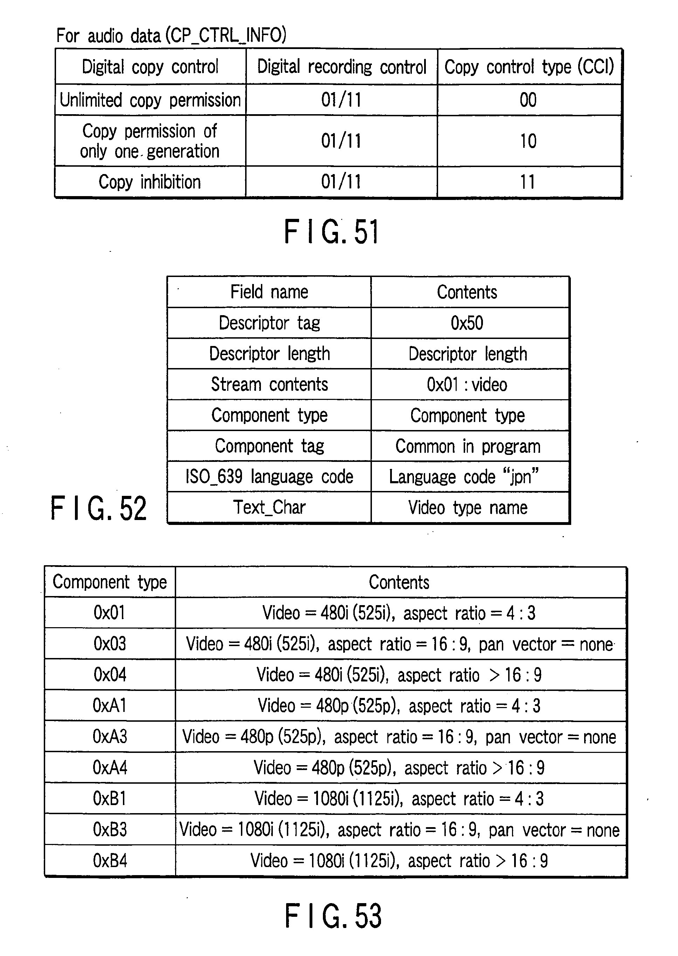

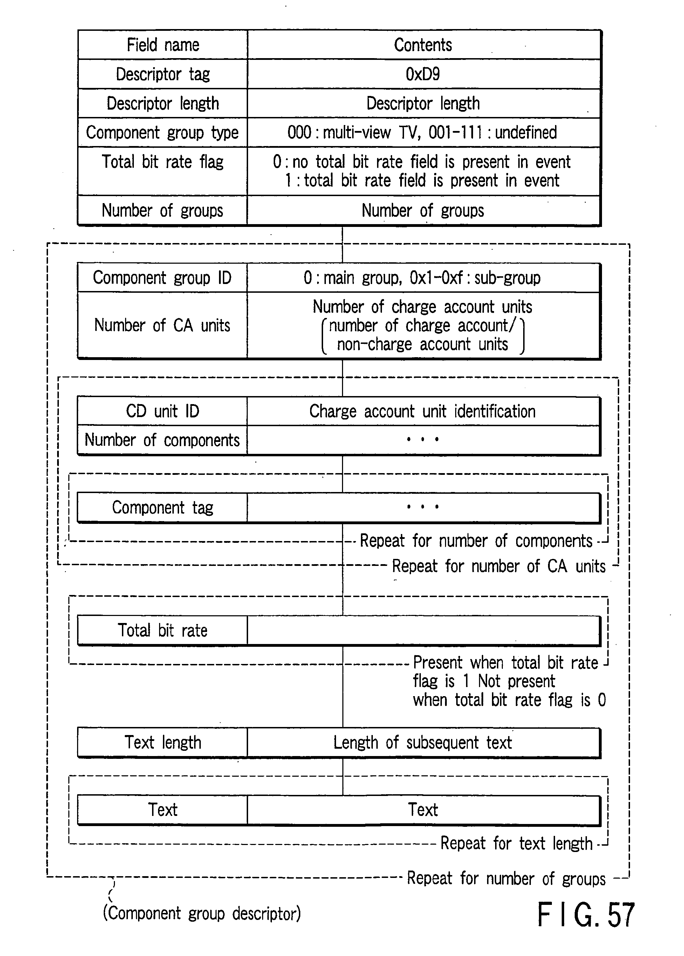

Reference ID 13348 indicates <1> the PID or component tag (see FIG. 52 to be described later) of video data to be played back when video data is available, or the PID of audio data when no video data is available but audio data is available. Also, reference ID 13348 can indicate <2> a component group ID (see FIG. 57 to be described later). Upon designating all views (in, e.g., multi-view broadcast), reference ID 13348 is set to be, e.g., 0xffff.

When ESOBs are allowed to have different schemes (e.g., ESOB files for respective different formats are present), the decoder setups must be changed for respective schemes due to the different schemes, and connection (between the output side and reception side of ESOB) may not often be attained. For this reason, coexistence of a plurality of ESOBs may be inhibited in the playlist. In this case, APP_NAME (described in FIG. 10 and the like) or a file name of that ESOB or the like may be appended to PGCI.

In cell information 1334 in FIG. 23, the ESOB type (C_TY = 2) is added to cell type 13341. Furthermore, ESOB number 13343 can be designated to designate playback start time 13344/end time 13345. Note that the playback start time/end time can be expressed by PTS and/or ATS.

Furthermore, for reference ID 13348, a method of setting the PID (or component tag value) of a representative stream of a stream to be played back, and a method of setting the ID of a component group in case of multi-view TV or the like are available. When reference ID 13348 = 0xffff, a method of displaying the contents of multi-views on sub windows, and a method of preferentially displaying views of a group which is set in advance (or a default main group) of multi-views, and switching display to other views later (during playback) are available.

As a new concept, manufacturer ID (LAST_MNF_ID) 13326 of the last apparatus used to execute an edit process is stored in program information (PGI). This information can indicate the manufacturer of an apparatus used to execute an edit process (of the recorded disc). With this information, the use state of information of MNFI 13328 used in respective manufacturers can be recognized. When the contents of a given area are rewritten using an apparatus of another manufacturer, each apparatus may recognize that information in that MNFI 13328 has poor reliability, and may suggest that new NMFI 13328 must be formed after the edit process using the apparatus of the other manufacturer.

A unique ID number (PGN 13327) is appended to program PG, and the remaining PG can be designated by a number which remains unchanged even when a middle PG is deleted.

FIG. 24 is a view for explaining an example of the configuration of the stream object data unit (ESOBU) shown in FIG. 1 or 2.

One ESOBU includes one or more packet groups 140, each of which includes, e.g., 8 packets (1 packet = 1 sector: 2048 bytes).

Each packet group 140 includes packet group header (152 bytes) 161, one or more (85 in this case) MPEG-TS packets (188 bytes) 162, and one or more (84 in this case) IAPAT (Incremental Packet Arrival Time; 3 bytes) data 163.

Packet group header 161 includes packet arrival time (ATS) 151X, information (DCI_CCI_SS) 152X indicating the validity of DCI and CCI to be described below, display control information (DCI) 153X, copy generation management information (or copy control information CCI) 154X, PCR position information (PCRI; Program Clock Reference Information) 155X, and manufacturer's information (MNI or MNFI) 156X. (Note that an embodiment of this packet group header 161 which further includes playback time information (PTS: Presentation Time Stamp) is also available.)

Each MPEG-TS packet 162 includes 4-byte header 170 and adaptation field and/or payload 180. Note that header 170 includes sync byte 171, transport error indicator 172, payload unit start indicator 173, transport priority 174, packet identifier (PID) 175, transport scramble control 176, adaptation field control 177, and continuity index 178.

A TS stream (FIG. 24) as a common basic format in systems that broadcast (distribute) compressed moving picture data such as digital TV broadcast data and broadcast data using a wired network such as the Internet or the like is divided into a packet management data field (170) and payload (180).

The payload includes data to be played back in a scrambled state. According to the digital broadcast standard ARIB, the PAT (Program Association Table), PMT (Program Map Table), and SI (Service Information) are not scrambled. Also, various kinds of management information can be generated using the PMT and SI (Service Description Table, Event Information Table, Bouquet Association Table).

Data to be played back includes MPEG video data, Dolby AC3® audio data, MPEG audio data, data broadcast data, and the like. As information required upon playback, a plurality of pieces of information (program information and the like) such as PAT, PMT, SI, and the like are used although they are not directly related to data to be played back.

The PAT includes the PID (Packet Identification) of the PMT for each program, and the PMT records the PIDs of video data and audio data.

In this way, a normal playback sequence of the STB (Set Top Box) is as follows. That is, when the user determines a program from EPG (Electronic Program Guide) information, the PAT is loaded at the beginning of the target program, and the PID of the PMT, which belongs to the desired program, is determined on the basis of that data. The target PMT is read out in accordance with that PIT, and the PIDs of video and audio packets to be played back, which are contained in the PMT, are determined. Video and audio attributes are read out based on the PMT and SI and are set in respective decoders. The video and audio data are extracted and played back in accordance with their PIDs. Note that the PAT, PMT, SI, and the like are transmitted at intervals of several 100 ms since they are used during playback.

Upon recording on a disc medium such as a DVD-RAM or the like using these data, it is advantageous to directly record broadcast data as digital data.

If a plurality of streams are to be recorded at the same time, the number of streams to be recorded may be stored in SOBI, PMT data corresponding to respective streams may be saved, special playback map information (map group information) may be stored for each stream, and the numbers of streams to be played back (channel numbers or PID data of PMT data) may be recorded in cell information.

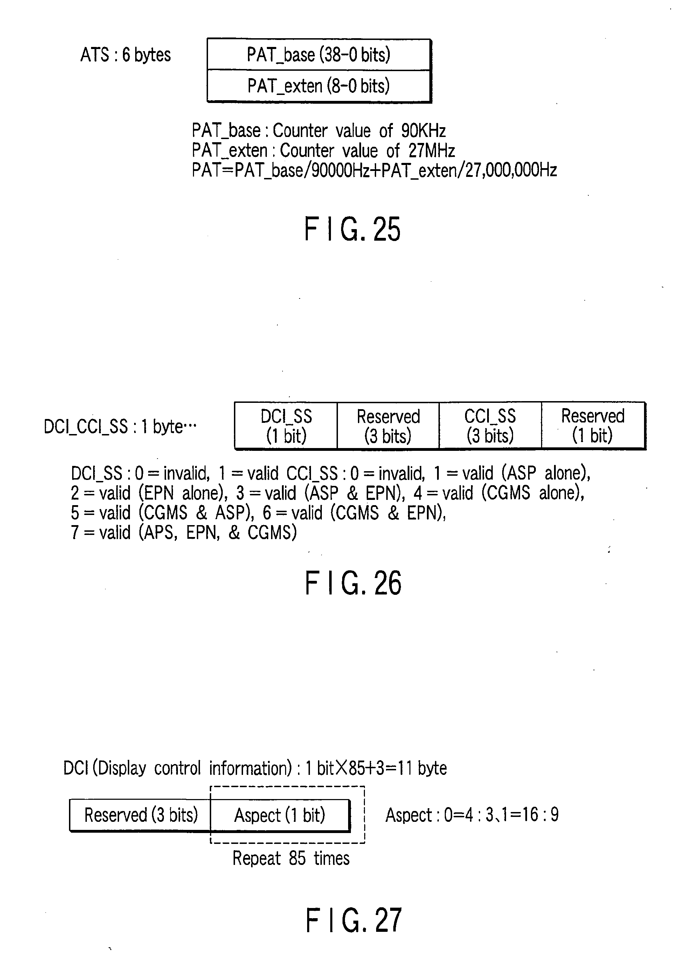

FIG. 25 is a view for explaining an example of the configuration of the packet arrival time (ATS) contained in the packet group header shown in FIG. 24. For example, 6 bytes are assigned to ATS 151X. Bits 38 to 0 of ATS 151X represent PAT-base (e.g., a counter value of 90 kHz) and bits 8 to 0 represents PAT-extend (e.g., a counter value of 27 MHz).

Practical arrival time PAT is expressed by PAT_base/90000 Hz + PAT_exten/27,000,000 Hz. In this manner, ATS 151X can be finely expressed for, e.g., respective video frames.

FIG. 26 is a view for explaining an example of the configuration of validity information (DCI_CCI_SS) 152X included in the packet group header shown in FIG. 24. In FIG. 26, 1-bit DCI_SS data indicates invalid if it is "0"; and valid if it is "1". Three-bit CCI_SS data indicates invalid if it is "0"; only APS is valid if it is "1"; only EPN is valid if it is "2"; APS and EPN are valid if it is "3"; only CGMS is valid if it is "4"; CGMS and APS are valid if it is "5"; CGMS and EPN are valid if it is "6", and all three APS, EPN, and CGMS are valid if it is "7".

FIG. 27 is a view for explaining an example of the configuration of display control information (DCI) 153X contained in the packet group header shown in FIG. 24. In this case, 11 bytes are assigned to DCI 153X. As the contents, reserve bits (3 bits) are assigned at the head of the information, and aspect information (1 bit) is repetitively assigned 85 times.

Note that the aspect information indicates an aspect ratio 4 : 3 if it is "0"; and 16 : 9 if it is "1".

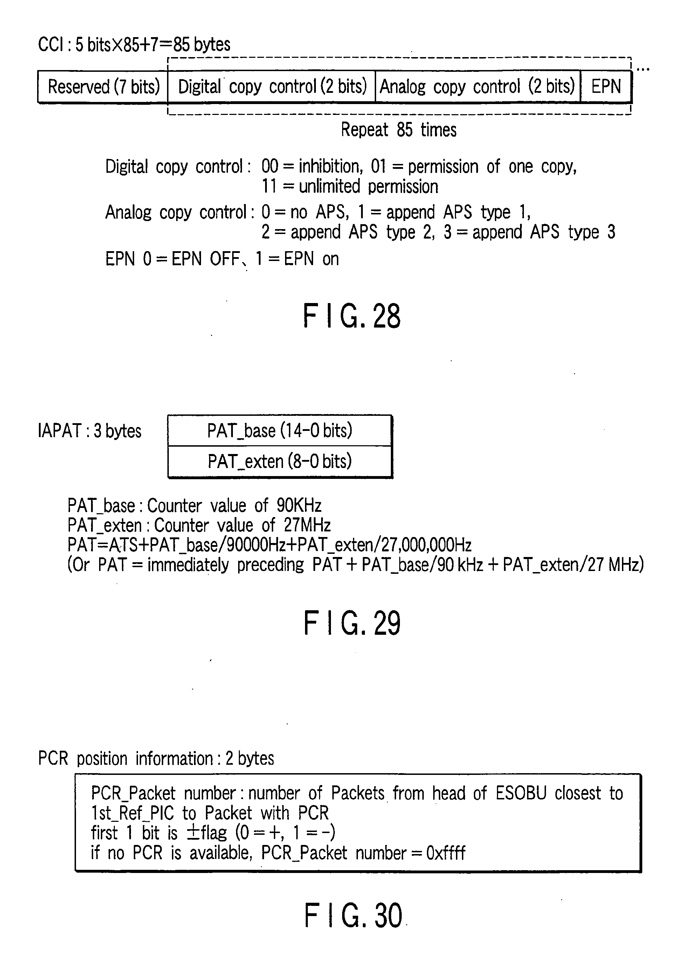

FIG. 28 is a view for explaining an example of the configuration of copy generation management information (or copy control information CCI) contained in the packet group header shown in FIG. 24. As the contents of CCI 154X, reserve bits (7 bits) are assigned at the head of the information, and a set of digital copy control information (2 bits), analog copy control information (2 bits), and EPN (1 bit) is repetitively assigned 85 times.

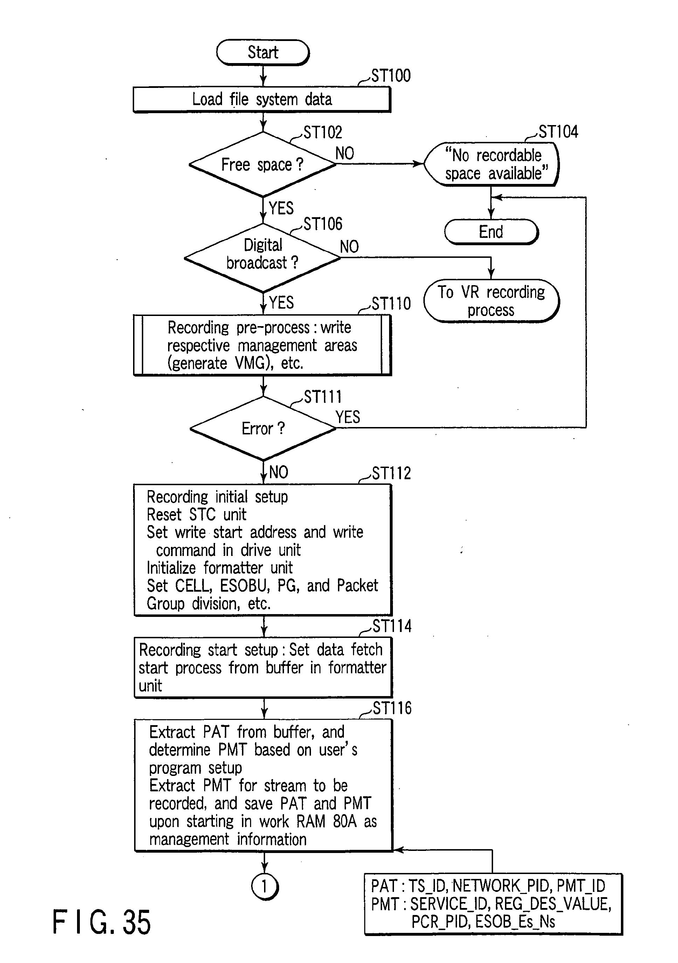

Note that the digital copy control information indicates "copy never" if it is "00"; "copy once" if it is "01"; and "copy free" if it is "11". Also, the analog copy control information indicates "copy free" (no analog protection system APS) if it is "0"; "copy never" (with APS type 1) if it is "1"; "copy never" (with APS type 2) if it is "2"; and "copy never" (with APS type 3) if it is "3". The copy control information value can be set based on a value (see FIGS. 35 to 37) recorded in service information SI in a stream (contents).

Also, 1-bit EPN data indicates EPN = OFF if it is "0"; and EPN = ON if it is "1".

FIG. 29 is a view for explaining an example of the configuration of the increment (IAPAT) of the packet arrival time contained in the packet group shown in FIG. 24 after the packet group header. In this case, for example, 3 bytes are assigned to IAPAT 163. Bits 14 to 0 of IAPAT 163 express PAT-base (e.g., a counter value of 90 kHz) and bits 8 to 0 represent PAT-extend (e.g., a counter value of 27 MHz). Since IAPAT 163 can be expressed by an increment (change) from ATS 151X in place of an absolute time, the data size of IAPAT can be smaller than that of ATS.

Practical arrival time PAT in IAPAT 163 is expressed by ATS + PAT_base/90000 Hz + PAT_exten/27,000,000 Hz. In this manner, IAPAT 163 can be finely expressed for, e.g., respective video frames. As another embodiment, a difference from the arrival time of the immediately preceding TS packet may be used (i.e., new PAT = immediately preceding pad + PAT_base/90000 Hz + PAT_exten/27,000,000 Hz).

Note that "PAT" in "PAT-base and PAT-exten" above means not "Program Association Table" but "Packet Arrival Time".

FIG. 30 is a view for explaining an example of the configuration of PCR position information (PCR_LB count number or the like) contained in the packet group header shown in FIG. 24. In this case, PCR (Program Clock Reference) location information 156 is used as PCR information (PCRI).

This PCR position information 156X is expressed by, e.g., 2 bytes. These 2 bytes can express a PCR packet number. This PCR packet number can be expressed by the LB count from the head of ESOBU closest to first reference picture (e.g., first I-picture) 1st_Ref_PIC to logical block LB that stores the PCR. The first bit of the PCR packet number is used as a ± flag (e.g., "0" indicates "+ direction"; "1" indicates "- direction"). If no PCR is available, the PCR_LB count number is set to be, e.g., "0xfff".

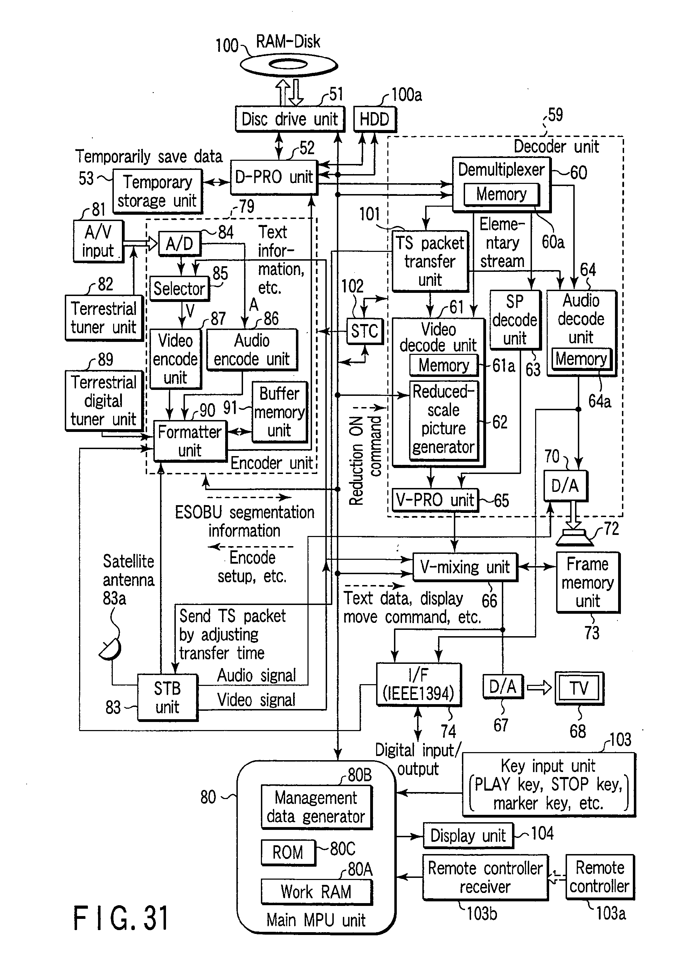

FIG. 31 is a block diagram for explaining an example of the apparatus which records and plays back AV information (digital TV broadcast program or the like) on an information recording medium (optical disc, hard disc, or the like) using the data structure according to the embodiment of the present invention.

As shown in FIG. 31, this apparatus (digital video recorder/streamer) comprises MPU unit 80, key input unit 103, remote controller receiver 103b for receiving user operation information from remote controller 103a, display unit 104, decoder unit 59, encoder unit 79, system time counter (STC) unit 102, data processor (D-PRO) unit 52, temporary storage unit 53, disc drive unit 51 for recording/playing back information on/from recordable optical disc 100 (e.g., a DVD-RAM or the like), hard disc drive (HDD) 100a, video mixing (V-mixing) unit 66, frame memory unit 73, analog TV D/A converter 67, analog TV tuner unit 82, terrestrial digital tuner unit 89, and STB (Set Top Box) unit 83 connected to satellite antenna 83a. Furthermore, this apparatus comprises digital I/F 74 (e.g., IEEE1394) to cope with digital inputs/outputs as a streamer.

Note that STC unit 102 counts clocks on a 27-MHz basis in correspondence with PAT_base shown in FIG. 25 or 29.

STB unit 83 decodes received digital broadcast data to generate an AV signal (digital). STB unit 83 sends the AV signal to TV 68 via encoder unit 79, decoder unit 59, and D/A converter 67 in the streamer, thus displaying the contents of the received digital broadcast. Alternatively, STB unit 83 directly sends the decoded AV signal (digital) to V-mixing unit 66, and can send an analog AV signal from it to TV 68 via D/A converter 67.

The apparatus shown in FIG. 31 forms a recorder comprising both the video and stream recording functions. Hence, the apparatus comprises components (IEEE1394 I/F and the like) which are not required in video recording, and those (AV input A/D converter 84, audio encode unit 86, video encode unit 87, and the like) which are not required in stream recording.

Encoder unit 79 includes A/D converter 84, video encode unit 87, input selector 85 to video encode unit 87, audio encode unit 86, a sub-picture encode unit (as needed although not shown), format unit 90, and buffer memory unit 91.

Decode unit 59 comprises demultiplexer 60 which incorporates memory 60a, video decode unit 61 which incorporates memory 61a and reduced-scale picture (thumbnail or the like) generator 62, sub-picture (SP) decode unit 63, audio decode unit 64 which incorporates memory 64a, TS packet transfer unit 101, video processor (V-PRO) unit 65, and audio D/A converter 70. An analog output (monaural, stereo, or AAC 5.1CH surround) from this D/A converter 70 is input to an AV amplifier or the like (not shown) to drive a required number of loudspeakers 72.

In order to display contents, whose recording is in progress, on TV 68, stream data to be recorded is sent to decoder unit 59 simultaneously with D-PRO unit 52, and can be played back. In this case, MPU unit 80 makes setups upon playback in decoder unit 59, which then automatically executes a playback process.

D-PRO unit 52 forms ECC groups by combining, e.g., every 16 packs, appends ECC data to each group, and sends them to disc drive unit 51. When disc drive unit 51 is not ready to record on disc 100, D-PRO unit 52 transfers the ECC groups to temporary storage unit 53 and waits until disc drive unit 51 is ready to record. When disc drive unit 51 is ready, D-PRO unit 52 starts recording. As temporary storage unit 53, a large-capacity memory is assumed since it must hold recording data for several minutes or longer by high-speed access. Temporary storage unit 53 may be assured by using a given area of HDD 100a.

Note that MPU unit 80 can make read/write access to D-PRO unit 52 via a dedicated microcomputer bus, so as to read/write the file management area and the like.

The apparatus shown in FIG. 31 assumes optical disc 100 such as DVD-RAM/-RW/-R/Blue media (recordable media using blue laser) and the like as primary recording media, and hard disc drive (HDD) 100a (and/or a large-capacity memory card (not shown) or the like) as its auxiliary storage device.

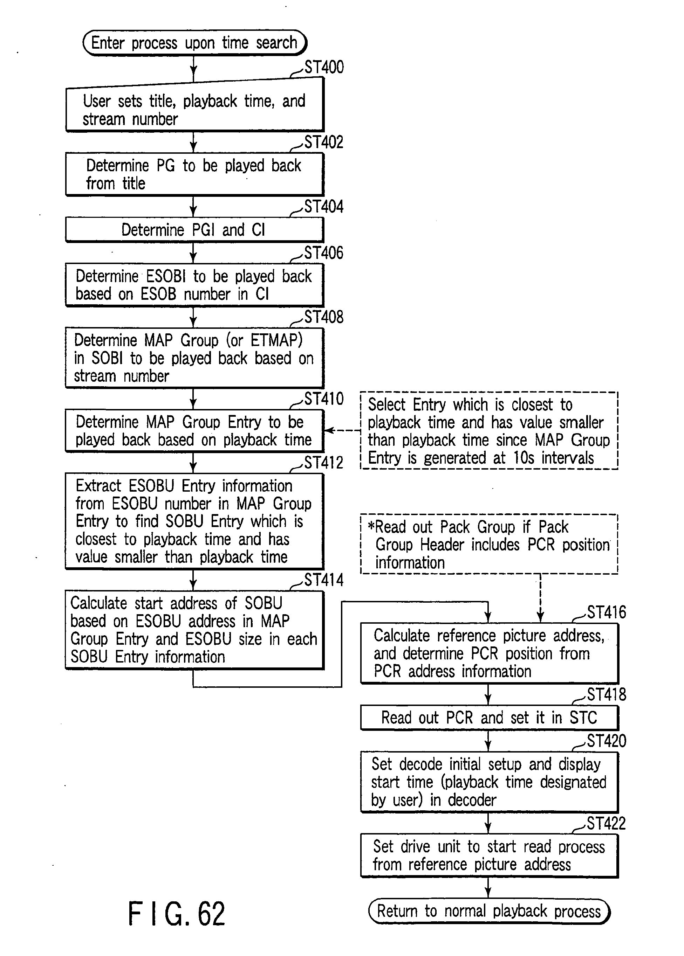

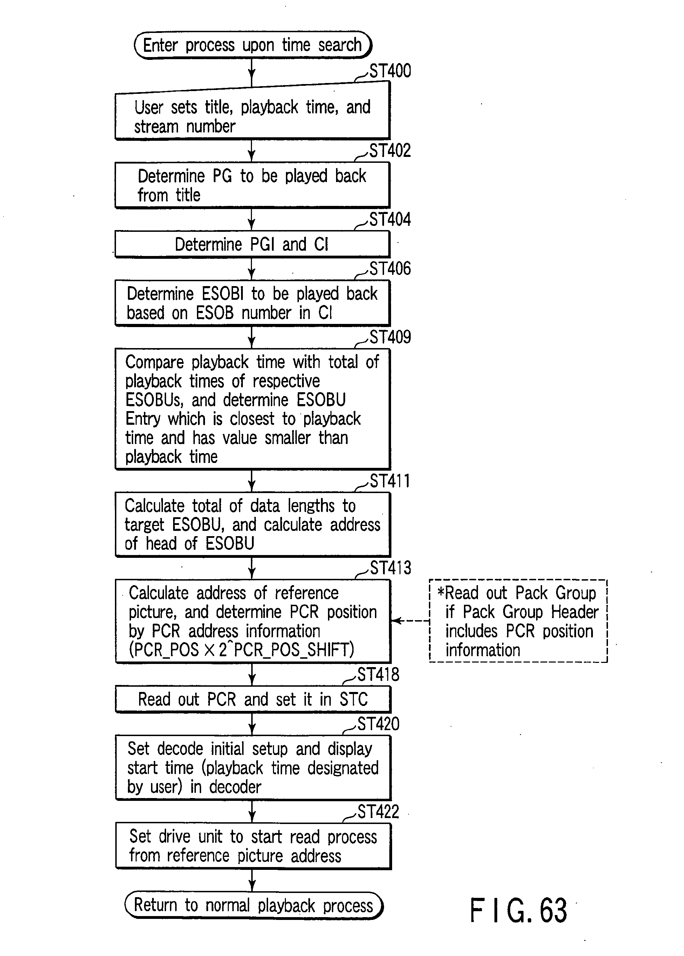

These plurality of types of media can be used as follows. That is, stream recording is done on HDD 100a using the data structure (format) shown in FIGS. 1 to 30. Of stream recording contents which are recorded on HDD 100a, programs that the user wants to preserve directly undergo stream recording (direct copy or digital dubbing) on disc 100 (if copying is not inhibited by copy control information CCI). In this manner, only desired programs having quality equivalent to original digital broadcast data can be recorded together on disc 100. Furthermore, since the stream recording contents copied onto disc 100 exploit the data structure of the present invention, they allow easy special playback processes (to be described later with reference to FIG. 62 or 63) such as time search and the like, although these contents are recorded by stream recording.

A practical example of a digital recorder having the aforementioned features (a streamer/video recorder using a combination of DVD-RAM/-RW/-R/Blue media and HDD) is the apparatus shown in FIG. 31. The digital recorder shown in FIG. 31 is basically configured with a tuner unit (82, 83, 89), disc unit (100, 100a), encoder unit 79, decoder unit 59, and a controller (80).

Satellite digital TV broadcast data is delivered from a broadcast station via a communication satellite. The delivered digital data is received and played back by STB unit 83. This STB 83 expands and plays back scrambled data on the basis of a key code distributed from the broadcast station. At this time, scramble from the broadcast station is descrambled. Data is scrambled to prevent users who are not subscribers of the broadcast station from illicitly receiving broadcast programs.

In STB unit 83, the broadcast digital data is received by a tuner system (not shown). When the received data is directly played back, it is descrambled by a digital expansion unit and is decoded by an MPEG decoder unit. Then, the decoded received data is converted into a TV signal by a video encoder unit, and that TV signal is externally output via D/A converter 67. In this manner, the digital broadcast program received by STB unit 83 can be displayed on analog TV 68.

Terrestrial digital broadcast data is received and processed in substantially the same manner as satellite broadcast data except that it does not go through any communication satellite (and is not scrambled if it is a free broadcast program). That is, terrestrial digital broadcast data is received by terrestrial digital tuner unit 89, and the decoded TV signal is externally output via D/A converter 67 when it is directly played back. In this way, a digital broadcast program received by terrestrial digital tuner unit 89 can be displayed on analog TV 68.

Terrestrial analog broadcast data is received by terrestrial tuner unit 82, and the received analog TV signal is externally output when it is directly played back. In this way, an analog broadcast program received by terrestrial tuner unit 82 can be displayed on analog TV 68.

An analog video signal input from external AV input 81 can be directly output to TV 68. Also, after the analog video signal is temporarily A/D-converted into a digital signal by A/D converter 84, and that digital signal is then re-converted into an analog video signal by D/A converter 67, that analog video signal may be output to the external TV 68 side. In this way, even when an analog VCR playback signal that includes many jitter components is input from external AV input 81, an analog video signal free from any jitter components (that has undergone digital time-base correction) can be output to the TV 68 side.

A digital video signal input from digital I/F (IEEE1394 interface) 74 is output to the external TV 68 side via D/A converter 67. In this way, a digital video signal input to digital I/F 74 can be displayed on TV 68.

A bitstream (MPEG-TS) input from satellite digital broadcast, terrestrial digital broadcast, or digital I/F 74 can undergo stream recording in stream object group recording area 131 (FIG. 1(d)) of disc 100 (and/or HDD 100a) as stream object 132 in FIG. 1(e).

An analog video signal from terrestrial analog broadcast or AV input 81 can undergo video recording on VR object group recording area 122 (FIG. 1(d)) of disc 100 (and/or HDD 100a).

Note that the apparatus may be configured to temporarily A/D-convert an analog video signal from terrestrial analog broadcast or AV input 81 into a digital signal, and to make stream recording of the digital signal in place of video recording. Conversely, the apparatus may be configured to make video recording of a bitstream (MPEG-TS) input from satellite digital broadcast, terrestrial digital broadcast, or digital I/F 74 (after it undergoes required format conversion) in place of stream recording.

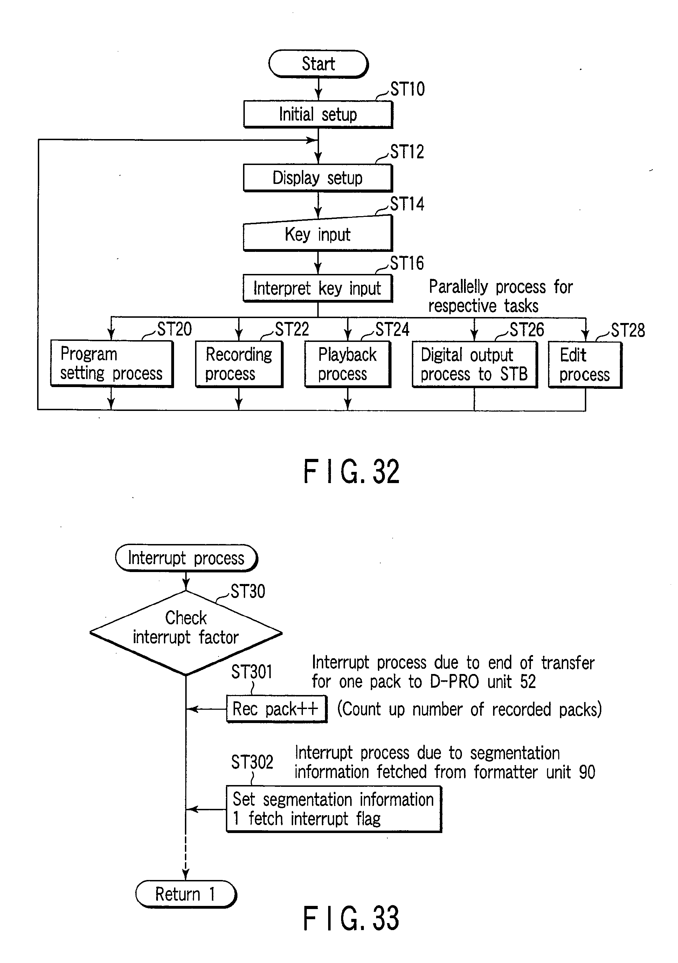

Recording/playback control of stream recording or video recording is done by firmware (control programs and the like corresponding to operations shown in FIGS. 32 to 63 to be described later) written in ROM 80C of main MPU unit 80. MPU unit 80 has management data generation unit 80B for stream recording and video recording, generates various kinds of management information using work RAM 80A as a work area, and records the generated management information on AV data management information recording area 130 in FIG. 1(d) as needed. MPU unit 80 plays back management information recorded on AV data management information recording area 130, and executes various kinds of control (FIGS. 32 to 63) on the basis of the played back management information. Note that manufacturer ID information and the like of the apparatus shown in FIG. 31 can be written on ROM 80C of MPU unit 80.

The features of medium 100 (100a) used in the apparatus of FIG. 31 will be briefly summarized below. That is, this medium has management area 130 and data area 131. Data is separately recorded on the data area as a plurality of object data (ESOB), and each piece of object data is made up of a group of data units (ESOBU). One data unit (ESOBU) includes packet groups each of which is formed by converting a MPEG-TS compatible digital broadcast signal into TS packets and packing a plurality of packets (see FIGS. 1 and 24). On the other hand, management area 130 has PGC information (PGCI) as information used to manage the playback sequence. This PGC information contains cell information (CI). Furthermore, management area 130 includes information used to manage object data (ESOB).

The apparatus shown in FIG. 31 can make stream recording on medium 100 (100a) with the above data structure in addition to video recording. In this case, in order to extract program map table PMT and service information SI from a TS packet stream, MPU unit 80 has a service information extraction unit (not shown; firmware that forms management data generation unit 80B). Also, MPU unit 80 has an attribute information generation unit (not shown; firmware that forms management data generation unit 80B) that generates attribute information (PCR_LB count number and the like) on the basis of information extracted by the service information extraction unit.

In the apparatus shown in FIG. 31, the flow of signals upon recording are, for example, as follows. That is, TS packet data received by the STB unit (or terrestrial digital tuner) are packed into packet groups by the formatter unit and the packet groups are saved on a work area (buffer memory unit 91). When the saved packet groups reach a predetermined size (for one or an integer multiple of CDA size), they are recorded on the disc. As the operations to be executed at that time, upon reception of TS packets, a group is formed every 85 packets, and a packet group header is generated.

On the other hand, an analog signal input from the terrestrial tuner or line input is converted into a digital signal by the A/D converter. That digital signal is input to respective encoder units. That is, a video signal is input to the video encode unit, an audio signal is input to the audio encode unit, and text data of, e.g., teletext broadcasting is input to an SP encode unit (not shown). The video signal is compressed by MPEG, the audio signal is compressed by AC3 or MPEG audio, and the text data is compressed by runlength coding.

Compressed data are segmented into blocks (2084 bytes each) and are input from each encoder unit to the formatter unit. The formatter unit converts packets into blocks, multiplexes these blocks, and sends them to the D-PRO unit. The D-PRO unit forms ECC blocks for every 16 (or 32) blocks, appends error correction data to them, and records the ECC blocks on the disc via the disc drive unit.

When the disc drive unit is busy due to seek, track jump, and the like, data are stored in an HDD buffer unit until the disc drive unit is ready. Furthermore, the formatter unit generates segmentation information during recording, and periodically sends it to the MPU unit (GOP head interrupt or the like). The segmentation information includes the LB count of VOBU (ESOBU), the end address of I-picture data from the head of VOBU (ESOBU), the playback time of VOBU (ESOBU), and the like.

In the flow of signals upon playback, data are read out from the disc by the disc drive unit, undergo error correction by the D-PRO unit, and are then input to the decode unit. The MPU unit determines the type of input data (i.e., VR or ESR data) (based on Cell TYPE), and sets that type in the decoder unit before playback. In the case of ESR data, the MPU unit determines PMT_ID to be played back based on cell information CI to be played back, determines the PIDs of items (video, audio, and the like) to be played back based on that PMT, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 I/F) in the form of TS packets. The respective decode units execute decoding, and decoded data are converted into an analog signal by the D/A converter, thus displaying data on the TV.

In the case of VR data, the demultiplexer sends data to the respective decode unit according to the fixed IDs. The respective decode units execute decoding, and decoded data are converted into an analog signal by the D/A converter, thus displaying data on the TV.

FIG. 32 is a flow chart (overall operation process flow) for explaining an example of the overall operation of the apparatus shown in FIG. 31. For example, when the power switch of the apparatus in FIG. 31 is turned on, MPU unit 80 makes initial setups (upon factory shipment or after user's setups (step ST10). MPU unit 80 also makes display setups (step ST12) and waits for a user's operation. If the user has made a key input from key input unit 103 or remote controller 103a (step ST14), MPU unit 80 interprets the contents of that key input (step ST16). The following five data processes are executed as needed in accordance with this input key interpretation result.

That is, if the key input is, for example, a key operation made to set timer program recording, a program setting process starts (step ST20). If the key input is a key operation made to start recording, a recording process starts (step ST22). If the key input is a key operation made to start playback, a playback process starts (step ST24). If the key input is a key input made to output digital data to the STB, a digital output process starts (step ST26). If the key input is a key operation of an edit process, the edit process starts (step ST28).

The processes in steps ST20 to ST28 are parallelly executed as needed for respective tasks. For example, the process for outputting digital data to the STB (ST26) is parallelly executed during the playback process (ST24). Or a new program setting process (ST20) can be parallelly executed during the recording process (ST22) which is not timer program recording. Or by utilizing the feature of disc recording that allows high-speed access, the playback process (ST24) and digital output process (ST26) can be parallelly executed during the recording process (ST22). Also, the disc edit process (step ST28) can be executed during recording on the HDD.

FIG. 33 is a flow chart (interrupt process flow) for explaining an example of an interrupt process in the operation of the apparatus shown in FIG. 31. In the interrupt process in the control operation of MPU unit 80, an interrupt factor is checked (step ST30). If the interrupt factor indicates that an interrupt is generated due to "completion of transfer for one pack (or one packet) to D-PRO unit 52", the number LBN of recording logical blocks is incremented by 1 (step ST301). If the interrupt factor indicates that an interrupt is generated due to "fetching of segmentation information from formatter unit 90", a fetch interrupt flag (not shown) of segmentation information 1 is set (step ST302).

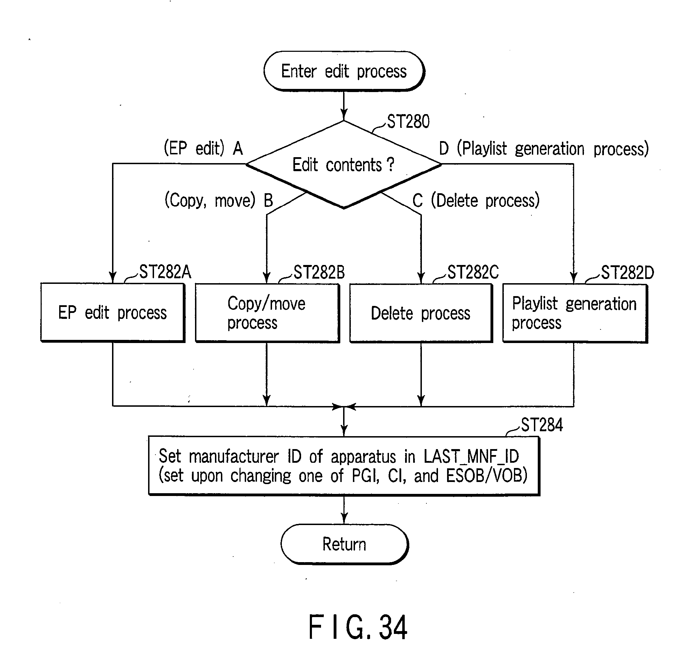

FIG. 34 is a flow chart (edit operation process flow) for explaining an example of the contents of the edit process (ST28) shown in FIG. 32. When the control enters the edit process, the flow branches to one of four processes (one of A to D) (step ST280) in accordance with the edit contents. Upon completion of one of an entry point edit process (step ST282A), copy/move process (step ST282B), delete process (step ST282C), and playlist generation process (step ST282D), the manufacturer ID of the apparatus that has made the operation is set in editor ID (LAST_MNF_ID) 13326 in FIG. 23 (step ST284). Every time one of PGI, CI, and ESOB (or VOB) has been changed, this editor ID is set (or updated) to the ID information of the apparatus used at that time.

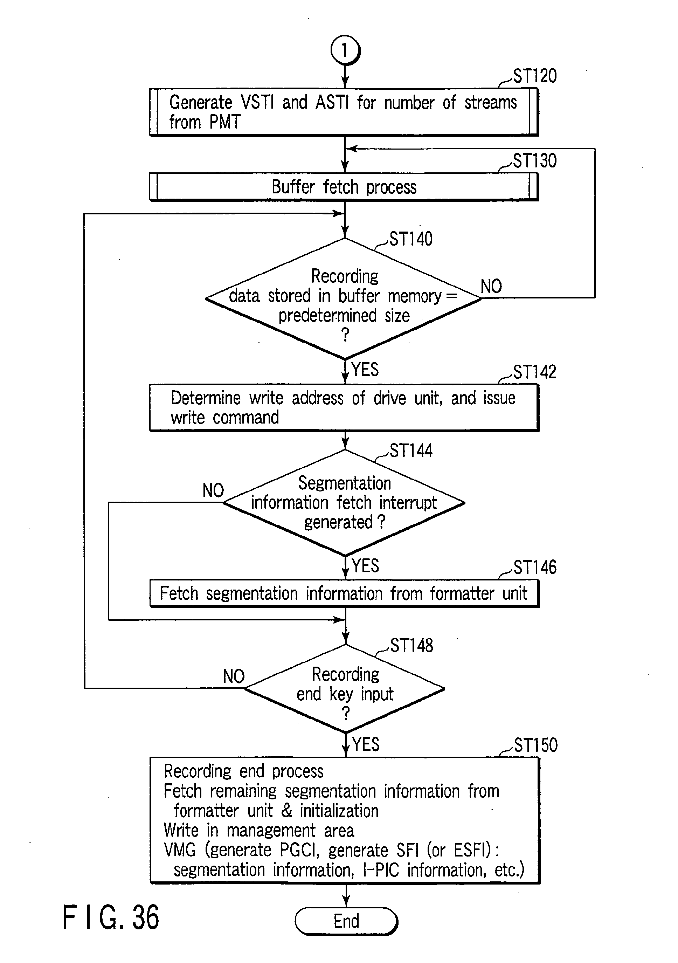

FIGS. 35 and 36 are flow charts (recording flow) for explaining an example of the recording operation of the apparatus shown in FIG. 31.

<01> Upon reception of a recording command from the key input unit, MPU unit 80 loads management data from disc drive unit 51 (step ST100) and determines a write area. At this time, MPU unit 80 checks the file system to determine whether or not recording can be proceeded (if a recordable space remains on disc 100 or HDD 100a). If recording cannot be proceeded (NO in step ST102), a message that advises accordingly is displayed for the user (step ST104), thus aborting the recording process.

If recording can be proceeded (YES in step ST102), MPU unit 80 checks if recording to be made is stream recording of a digital broadcast signal or video recording of an analog broadcast signal (or video recording of an analog signal obtained by D/A-converting a digital broadcast signal). If recording to be made is not stream recording of a digital broadcast signal (NO in step ST106), a recording process based on the video recording standard starts. If recording to be made is stream recording of a digital broadcast signal (YES in step ST106), a recording start position is determined based on the management data loaded in step ST100.

<02> The contents of the management area are set to write data in the determined area, and the write start address of video data is set in disc drive unit 51, thus preparing for data recording (step ST110).

If an error has occurred upon generation of management information (VMG) (YES in step ST111), the process ends. If generation of management information (VMG) is complete without any errors (NO in step ST111), the flow advances to the next recording initial setup processes (step ST112).

<03> As part of recording initial setup processes, the time of STC unit 102 is reset (step ST112). Note that STC unit 102 is a system timer, and recording/playback is done (for respective frames) with reference to the count value of this timer.

<04> The PAT (included in an MPEG-TS stream from STB unit 83) of a program to be recorded is loaded to determine the PID required to fetch the PMT of the target program. Then, the target PMT is loaded to determine the PIDs of data (video, audio) to be decoded (to be recorded). At this time, the PAT and PMT at the beginning of recording are saved in work RAM 80A of MPU unit 80, and are written in the management information (step ST116). VMG file data is written in the file system, and required information (FIG. 3) is written in VMGI.

Note that the PAT can contain information such as TS_ID, NETWORK_PID, PMT_ID, and the like, and the PMT can contain information such as SERVICE_ID, REG_DES_VALUE (value of Registration_Descriptor), PCR_PID, ESOB_ES_Ns, and the like.

<05> As part of the recording initial setup processes, recording setups of respective units are made (step ST112). At this time, a segmentation setup of data (division setup of cell, ESOBU, program, packet group, and the like) and a reception setup of TS packets are made in formatter unit 90. Also, the PID of data to be recorded is set to record only a target video stream. Furthermore, buffer memory unit 91 is set to start holding of TS packets.

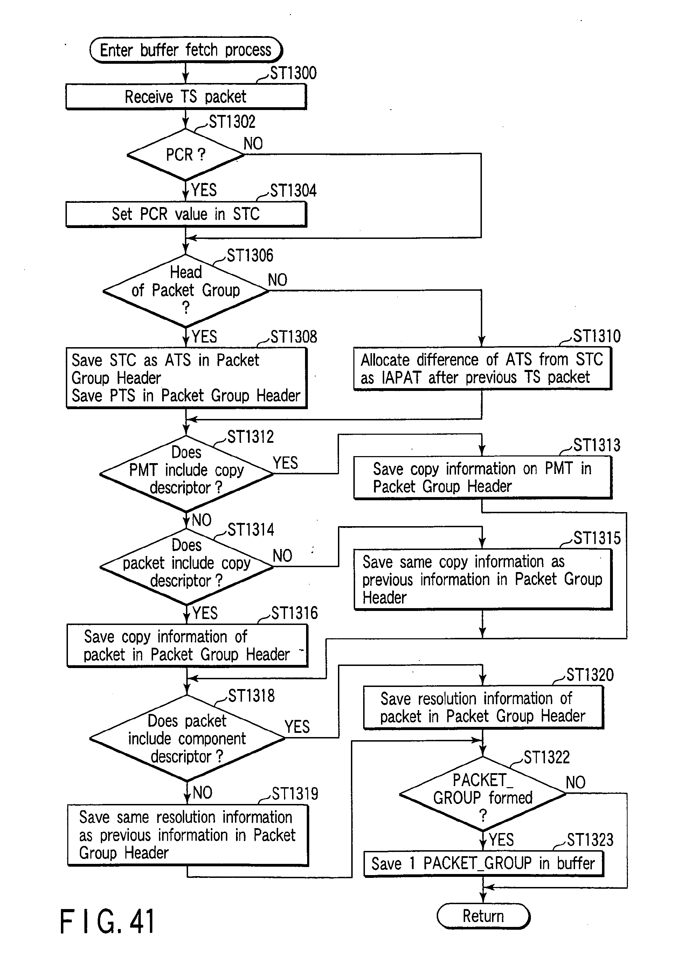

As part of recording start setup processes, a buffer data fetch start process from buffer memory unit 91 is set in formatter unit 90 (step ST114). Then, formatter unit 90 starts a buffer fetch process (to be described later with reference to FIG. 41).

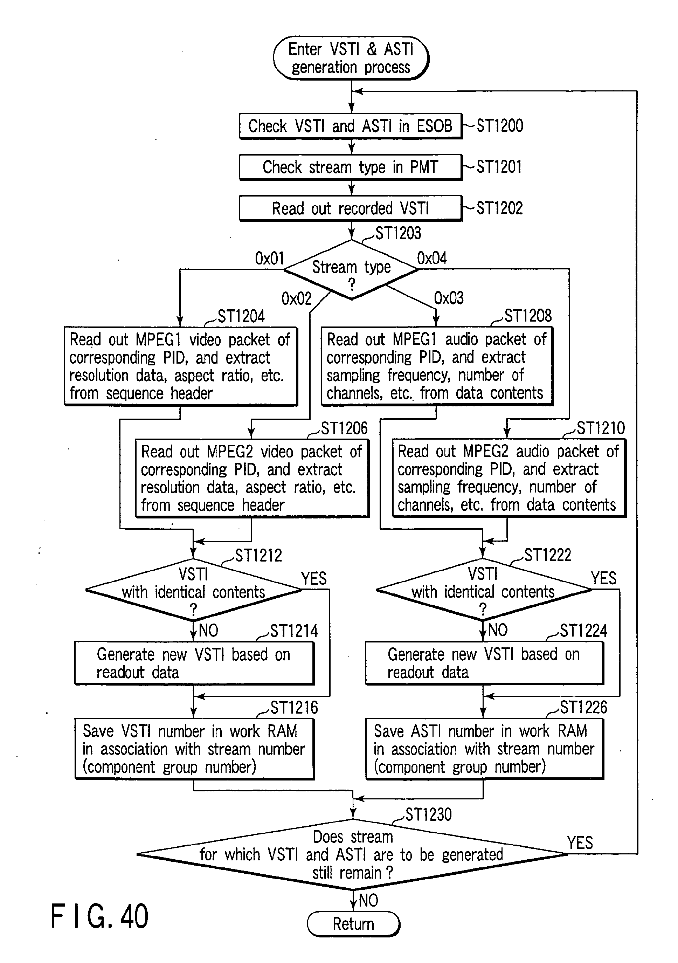

<06> Video STI and audio STI (VSTI and ASTI in FIG. 9) are generated based on the PMT (step ST120 in FIG. 36; details of this step will be described later using FIG. 40). Next, a fetch process in buffer memory unit 91 starts (step ST130).

<07> If data stored in buffer memory unit 91 reaches a predetermined size (for one continuous data area CDA) (YES in step ST140), a predetermined ECC process (which generates an ECC block for 8 sectors/16 kbytes or for 32 sectors/64 kbytes) is done via D-PRO unit 52, thus recording the data on the disc (step ST142).

<08> During recording, segmentation information is saved in work RAM 80A of MPU unit 80 (step ST146) periodically (before buffer RAM 91 of formatter unit 90 becomes full of data; YES in step ST144). The segmentation information to be saved is that of ESOBU data, i.e., the ESOBU start address, ESOBU pack length, I-picture end address, the ESOBU arrival time (ATS), or the like may be saved.

<09> The remaining space of disc 100 (or 100a) during recording is checked. If the remaining space becomes equal to or smaller than a predetermined value (e.g., 150 Mbytes), a small remaining space process may be executed (not shown). As the small remaining space process, a process for erasing, if erasable unerased data (temporarily erased data thrown into a trash box file) remain on the disc, these data to increase the remaining space is known. Alternatively, as the small remaining space process, a process for increasing a recordable duration by lowering the recording rate (or by switching MPEG2 recording to MPEG1 recording) if the physical remaining space remains the same is also known. Also, when dummy packs used in after recording are recorded on disc 100, a process for aborting recording of these dummy packs may be executed as part of the small remaining space process. Alternatively, a process for continuing relay recording on an unrecorded area of HDD 100a when the remaining space of disc 100 becomes small may be executed as part of the small remaining space process.

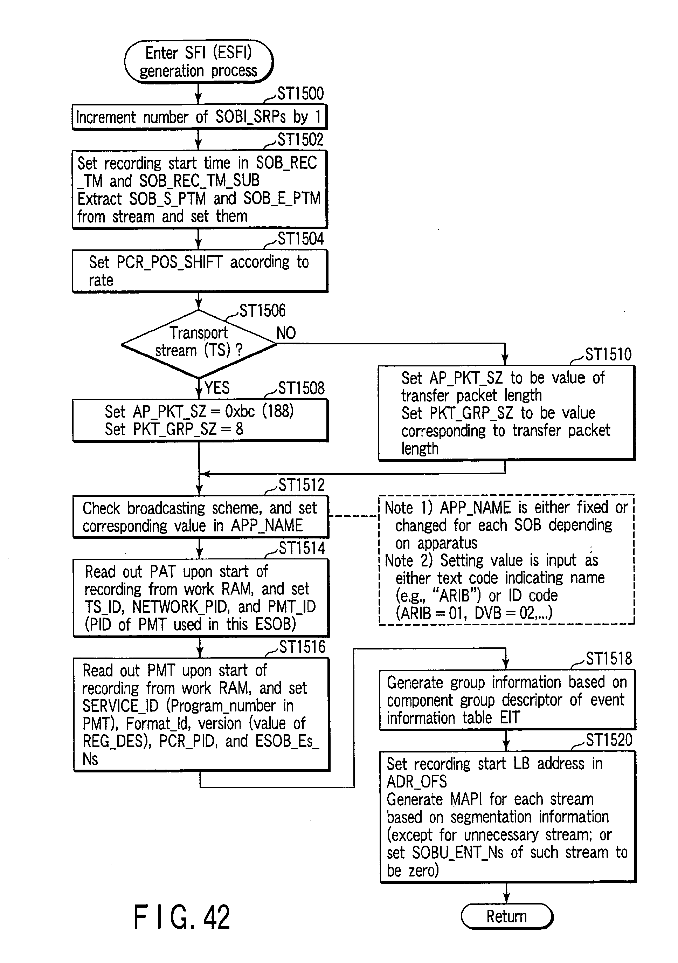

<10> It is checked if recording is to end (if the user has pressed a recording end key or if no recordable space remains). If recording is to end (YES in step ST148), remaining segmentation information is fetched from formatter unit 90, and is added to work RAM 80A. These data are recorded in management data (VMGI), and remaining information is recorded in the file system (step ST150). In step ST150, a stream file information (SFI or ESFI) generation process (to be described later with reference to FIG. 42) is also executed.

<11> If recording is not to end (NO in step ST148), the flow returns to step ST140 to continue the data fetch process (step ST130) and write process (step ST142).

FIG. 37 is a flow chart (initialize process flow) for explaining a process for initializing a disc-shaped information storage medium shown in FIG. 1. When the control enters this initialize process, a medium (RAM disc or the like) is formatted (step ST1000). Upon completion of formatting, in order to manage HD-compatible SR objects as a file, a DVD_HDR directory 'is generated in the file system (not shown) (step ST1002). After that, management information (RTR_VMG) is generated (step ST1026). This management information has an area for recording APP_NAME 13243108 in FIG. 10, in which a digital broadcasting scheme code (see FIG. 38) that the apparatus used (e.g., the STB in FIG. 31) supports is set. By setting this APP_NAME for each disc, that disc can be exclusively used for the set broadcasting scheme (e.g., ARIB). That is, when a given disc is initialized for ARIB, that disc records only SOBs of the ARIB digital broadcasting scheme (in other words, that disc can be prevented from recording SOBs of different schemes together).

FIG. 38 is a view for explaining an example of the contents of APP_NAME shown in FIG. 10, which is used in the VMG generation process (ST1026) in FIG. 37. APP_NAME can include, for example, a Country ID (a code used to identify a country: for example, a telephone country code 01 = U.S.A., 81 = Japan), Authority ID (a broadcasting scheme: 01 = ARIB, 02 = ATSC, 03 = DVB), Packet Format (a packet format of a stream: 01 = MPEG_TS,...), NETWORK type (network type 01 = terrestrial digital, 02 = CS, 03 = BS digital,...), and broadcasting scheme Version (10 = 1.0, 11 = 1.1,...). Some apparatuses (STB and the like) must have a Country ID, Authority ID, and Packet Format of these parameters as defaults, but other apparatuses can form a Country ID, Authority ID, and Packet Format based on received data.

When APP_NAME data have different contents for respective ESOBs, some elements (after TS_ID) in the ESOBI configuration may change for respective ESOBs.

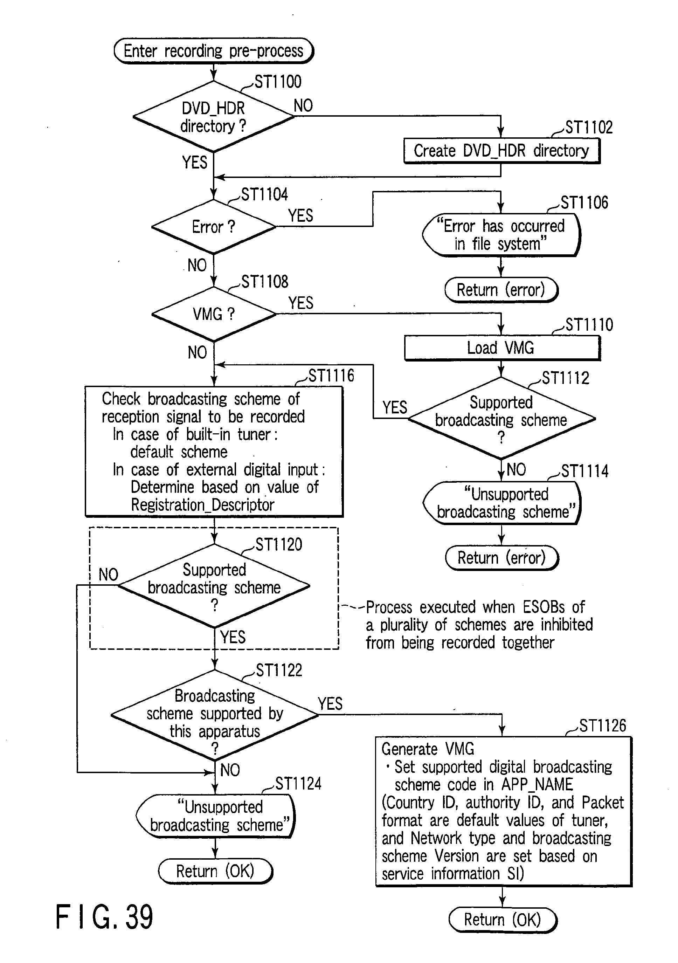

FIG. 39 is a flow chart (recording pre-process flow) for explaining a process before the start of recording on a disc-shaped information storage medium shown in FIG. 1.

(A) A DVD_HDR directory (a directory used to store new ESR data) is searched (step ST1100). If no DVD_HDR directory is found, that directory is created (step ST1102); otherwise, the flow advances to the next step.

(B) It is checked if data has already been recorded in the directory, and if an error has occurred during checking (YES_in step ST1104), a message that advises accordingly is displayed (step ST1106), thus terminating the process as an error. If no error occurs (NO in step ST1104), the presence/absence of management information (VMG) is checked (step ST1108). If data has already been recorded and VMG is found (YES in step ST1108), that VMG is loaded onto work RAM 80A (step ST1110). It is checked based on the broadcasting scheme (APP_NAME in FIG. 10 and the like) recorded in the VMG if the apparatus of this embodiment (the apparatus shown in FIG. 31) supports that broadcasting scheme (step ST1112). If the apparatus does not support that scheme (NO in step ST1112), a message that advises accordingly is displayed (step ST1114), thus terminating the process as an error.

(C) If no data is recorded (NO in step ST1108), VMGI is generated in work RAM 80A.

(D) The broadcasting scheme of data to be recorded is checked (step ST1116). In this checking process, if a signal to be recorded is input from the built-in tuner, a default scheme in the apparatus is set. On the other hand, if a signal to be recorded is input from an external digital input, the value of Registration_Descriptor sent from the digital input is checked to determine the scheme of data to be recorded (step ST1116).

(E) The determined broadcasting scheme is compared with a broadcasting scheme in the disc. If the two schemes are different (NO in step ST1120), a message that advises accordingly is displayed (step ST1124), thus terminating the process as an error. (If a plurality of broadcasting schemes of ESOBs are present in the disc, they cannot often be supported due to different management information such as SI and the like, and coexistence of a plurality of schemes may be inhibited. In such case, the inhibition process in step ST1120 is executed.)

(F) If the determined broadcasting scheme is the same as the broadcasting scheme in the disc (YES in step ST1120), it is checked if the broadcasting scheme of data to be recorded is a scheme supported by this apparatus (the apparatus of FIG. 31). If the scheme of data to be recorded is not supported (NO in step ST1122), a message that advises accordingly is displayed (step ST1124), thus terminating the process as an error.

(G) If the scheme of data to be recorded is supported (YES in step ST1122), the broadcasting scheme is set in APP_NAME in VMG formed in work RAM 80A (step ST1126), and the flow advances to the next process. In this case, if coexistence of a plurality of recording schemes in a disc are permitted, APP_NAME is required for each ESOBI_GI; if coexistence of a plurality of schemes is inhibited, APP_NAME may be set in ESFI_GI and/or VMG_MAT (see a description of FIG. 10).

FIG. 40 is a flow chart (STI setting process flow) for explaining an example of the contents of the stream information (VSTI and ASTI) generation process (ST120) shown in FIG. 36.

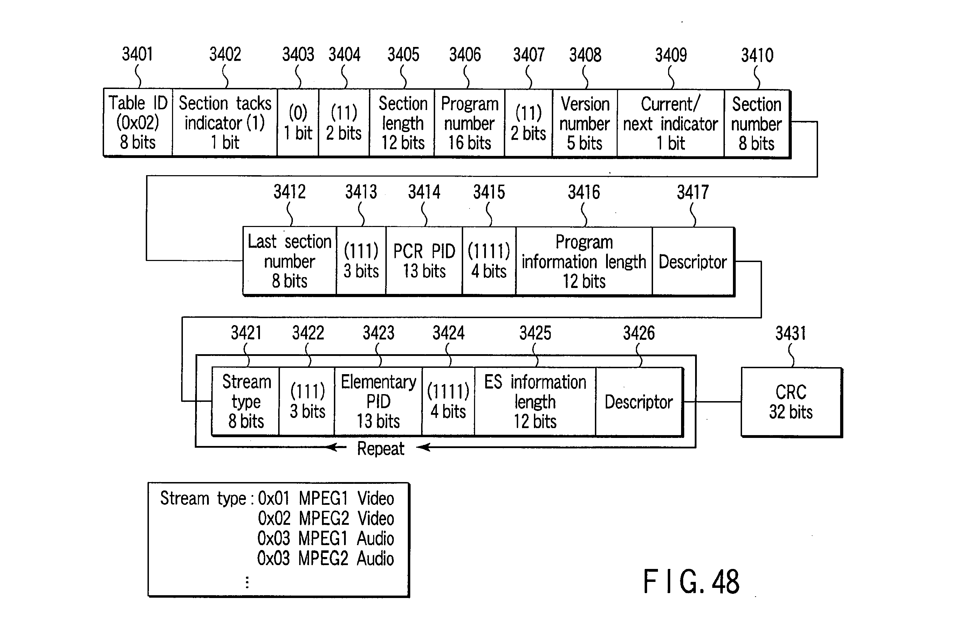

VSTI and ASTI in ESOBI are checked (step ST1200), and a stream type in the PMT is checked (step ST1201). Next, VSTI recorded on disc 100 is read out (step ST1202). In stream recording that records an MPEG-TS stream, a stream to be recorded contains the PMT, which describes a stream type (to be described later with reference to FIG. 48).

Then, the flow branches based on the stream type checked in the above step to one of processes corresponding to four different stream types (step ST1203). That is, if the stream type is "0x01", MPEG1 video packets of the corresponding PID are read out, and data such as a resolution, aspect ratio, and the like are extracted from their sequence header (step ST1204). If the stream type is "0x02", MPEG2 video packets of the corresponding PID are read out, and data such as a resolution, aspect ratio, and the like are extracted from their sequence header (step ST1206). If the stream type is "0x03", MPEG1 audio packets of the corresponding PID are read out, and data such as a sampling frequency, the number of quantization bits, the number of channels, and the like are extracted from their sequence header (step ST1208). If the stream type is "0x04", MPEG2 audio packets of the corresponding PID are read out, and data such as a sampling frequency, the number of quantization bits, the number of channels, and the like are extracted from their sequence header (step ST1210).

If the stream type is "0x01" or "0x02", after the data such as the resolution, aspect ratio, and the like of that video data are extracted, it is checked if VSTI checked in step ST1200 contains VSTI with the same contents (step ST1212). If the same contents are not found (NO in step ST1212), new VSTI is generated based on the data read out in the above step (step ST1214). If the same contents are found (YES in step ST1212), VSTI remains unchanged. The number of VSTI obtained in this way is saved in work RAM 80A in association with (to be linked with) the stream number (component group number) (step ST1216).

On the other hand, if the stream type is "0x03" or "0x04", after the data such as the sampling frequency, the number of channels, and the like of that audio data are extracted, it is checked if ASTI checked in step ST1200 contains ASTI with the same contents (step ST1222). If the same contents are not found (NO in step ST1222), new ASTI is generated based on the data read out in the above step (step ST1224). If the same contents are found (YES in step ST1222), ASTI remains unchanged. The number of ASTI obtained in this way is saved in work RAM 80A in association with (to be linked with) the stream number (component group number) (step ST1226).

The aforementioned process is repeated if streams for which VSTI and/or ASTI are/is to be generated still remain (YES in step ST1230). If VSTI and/or ASTI are/is to be generated for all streams (NO in step ST1230), the process in FIG. 40 ends, and the control returns to the process in FIG. 36.

The process in FIG. 40 will be briefly restated below. That is,

(a) VSTI and ASTI recorded on the disc are loaded onto work RAM 80A.

(b) The PMT (FIG. 48) is checked to detect the number of streams set in the disc.

(c) The stream type is checked based on the PMT to determine if the stream of interest is a video or audio stream. If the stream of interest is other than the video and audio streams, the next stream check process starts.

(d) The stream type is classified into those of MPEG1 video, MPEG2 video, MPEG1 audio, MPEG2 audio,..., inner data are checked in correspondence with each of these types and respective pieces of attribute information are read out.

(e) Each attribute information is compared with VSTI and ASTI, and if the same attribute information is found, its number is set in the corresponding ESOBI_ESI. Then, the next stream check process starts.

(f) New VSTI and/or ASTI are/is set based on the attribute information, and its number is set in the corresponding ESOBI_ESI. Then, the next stream check process starts.

(g) The process is repeated in correspondence with the number of streams which are set on the disc.

FIG. 41 is a flow chart (buffer fetch process flow) for explaining an example of the contents of the buffer fetch process (ST130) shown in FIG. 36.

<01> A TS packet is received (step ST1300).
<02> If the fetched TS packet includes a PCR (YES in step ST1302), STC unit 102 is corrected (step ST1304) .
<03> If the packet of interest corresponds to the head of a packet group (YES in step ST1306), its arrival time is fetched from the STC and is saved as ATS data (step ST1308). If the packet of interest does not correspond to the head of a packet group (NO in step ST1306), the difference between the value of the ATS of the head packet and its arrival time (or the difference from the arrival time of the immediately preceding TS packet) is allocated as IAPAT data before that TS packet (after the previous TS packet) (step ST1310).
<04> It is checked if the PMT that has been fetched initially and belongs to the current stream includes copy information. If the PMT includes copy information (YES in step ST1312), copy control information CCI is formed based on that information and is saved in the packet group header (step ST1313) so as to write information in all packet group headers.
<05> If the PMT does not include any copy information (NO in step ST1312), and if the received TS packet does not include any copy descriptor (NO in step ST1314), copy information is formed based on the same information as that of the previous packet (step ST1315). If the received TS packet includes a copy descriptor (YES in step ST1314), copy control information CCI is formed based on that information and is saved in the packet group header (step ST1316).
<06> It is checked if the TS packet includes a component descriptor. If the TS packet does not include any component descriptor (NO in step ST1318), the same information as that of the previous packet is saved in the packet group header (step ST1319). If the TS packet includes a component descriptor (YES in step ST1318), resolution information is formed based on the included information, and is saved in the packet group header (step ST1320).
<07> It is determined whether or not a packet group is formed (more specifically, whether or not 85 TS packets are grouped). If a packet group is not formed yet (NO in step ST1322), the control returns to the head of buffer fetch process ST 130; otherwise (YES in step ST1322), group data is temporarily saved in buffer RAM 91 (step ST1323).

If the head of a picture is included in a group, the PTS is saved with reference to the contents of the TS packet. If the TS packet contains no video data but audio data alone, CCI is formed in accordance with audio copy information. Furthermore, the availability of each information is detected and is saved in work RAM 80A. Upon completion of recording, the information saved in work RAM 80A is recorded on management information recording area 130 as management information (ST150 in FIG. 36).

Upon playback, demultiplexer 60 interprets packet data read out from disc 100 (or HDD 100a) and sends a packet that includes TS packets to TS packet transfer unit 101. After that, the readout packet data are sent to respective decoders (61, 63, 64) and undergo corresponding playback processes (video playback, sub-picture playback, audio playback).

Upon transferring TS packets to STB unit 83 (or to an external digital TV or the like via IEEE1394 I/F 74), TS packet transfer unit 101 transfers data of only TS packets at the same time intervals as they arrived.

The process in FIG. 41 will be briefly restated below. That is,

<01> In the flow of signals upon recording, TS packet data received by the STB unit (or terrestrial digital tuner) are packed into packet groups by the formatter unit and the packet groups are saved on a work area (buffer memory unit 91). When the saved packet groups reach a predetermined size (for one or an integer multiple of CDA size), they are recorded on the disc. As the operations to be executed at that time, upon reception of TS packets, a group is formed every 85 packets, and a packet group header is generated.

<02> If a fetched TS packet includes a PCR, the STC is corrected.

<03> If the packet of interest corresponds to the head of a packet group, its arrival time is fetched from the STC and is saved as an ATS. If the packet of interest does not correspond to the head of a packet group, the difference between the value of the ATS of the head packet and the arrival time (or the difference from the ATS of the immediately preceding TS packet) is allocated as IAPAT before that TS packet.

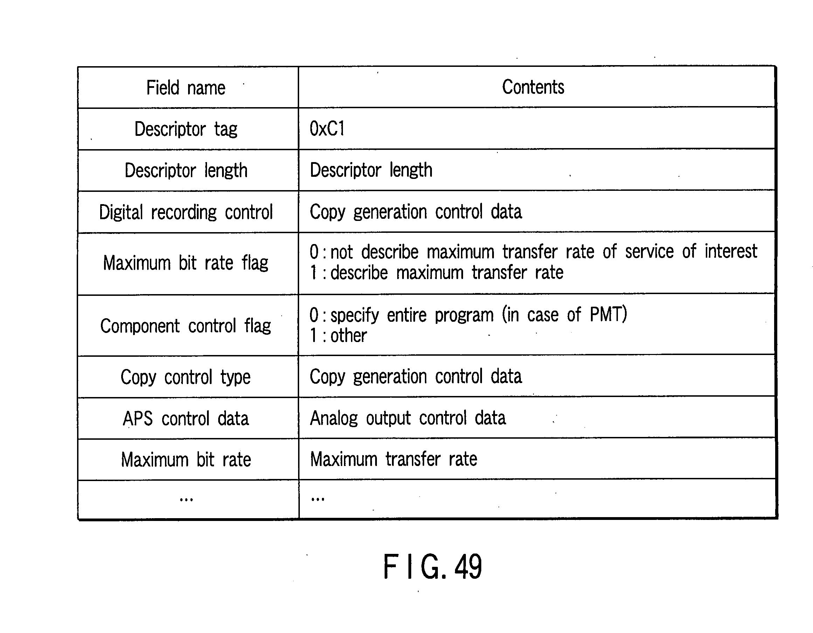

<04> It is checked if the PMT that has been fetched initially and belongs to the current stream includes copy information. If the PMT includes copy information, copy information (FIGS. 26 and 28) are formed based on that information (FIGS. 49 to 51) so as to write that information in all the packet group headers, and the flow then advances to <06>.

<05> If the received TS packet does not include any copy information, the same information as that of the previous packet is saved; if the received TS packet includes copy information, copy information is formed based on that information.

<06> It is checked if resolution information is available. If no resolution information is available, the same information as that of the previous packet is saved; if the resolution information is available, resolution information is formed based on that information (FIGS. 52 and 53).

<07> It is checked if a packet group is formed (i.e., if 85 TS packets are grouped). If a packet group is not formed yet, the flow returns to <01>; otherwise, group data is temporarily saved in the buffer RAM (buffer memory unit 91).

If the head of a picture is included in a group, the PTS is saved with reference to the contents of the TS packet. If the TS packet contains no video data but audio data alone, CCI is formed in accordance with audio copy information.

Upon playback, the demultiplexer <11> interprets packet data read out from the disc and <12> sends a packet that includes TS packets to the TS packet transfer unit. <13> After that, the readout packet data are sent to respective decoders and are played back.

<14> Upon transferring TS packets to the STB (or to an external apparatus such as a digital TV or the like), the TS packet transfer unit transfers data of only TS packets at the same time intervals as they arrived. <15> The STB unit decodes data to generate an AV signal, and displays that AV signal via the video encoder unit in the streamer.

FIG. 42 is a flow chart (stream file information generation process flow) for explaining an example of the contents of the stream file information (SFI or ESFI) generation process in the recording end process (ST150) shown in FIG. 36.

(a) In order to increase the number of pieces of SOBI by one, its search pointer SOBI_SRP is added, and a recording area of the added management information (SOBI, SOBI_SRP) on the disc is assured (step ST1500).

(b) The recording time is set in SOB_REC_TM and SOB_REC_TM_SUB (step ST1502). The internal clock (STC 102 in FIG. 31) of the apparatus is set/corrected based on a TDT (Time Data Table), and an accurate time is always obtained.

(c) A start PTM and end PTM are set (step ST1502).

(d) PCR_POS_SHIFT is set in accordance with the required recording rate (step ST1504).

(e) If the stream type is a transport stream (TS stream: ARIB or DVB as a broadcasting scheme) (YES in step ST1506), "188" is set in APP_PKT_SZ, and "8" is set in PKT_GRP_SZ (step ST1508). Otherwise (NO in step ST1506), APP_PKT_SZ and PKT_GRP_SZ are set to values corresponding to the broadcasting scheme (step ST1510). More specifically, APP_PKT_SZ is set to be the value of a transfer packet length, and PKT_GRP_SZ is set to a value corresponding to the transfer packet length in step ST1510.

(f) The broadcasting scheme is set in APP_NAME (step ST1512). This APP_NAME may be either fixed or changed for respective SOBs depending on the apparatus (FIG. 31). The setting value input to this APP_NAME may be either character codes such as "ARIB" or the like indicating a specific broadcasting scheme or an ID code (ARIB = 01, DVB = 02, and the like).

(g) TS_ID, NETWORK_PID, and PMT_ID (the PID of the PMT used in this ESOB) are set based on the PAT (step ST1514).

(h) SERVICE_ID (Program_Number in the PMT) and PCR_PID are set based on the PMT (step ST1516). Furthermore, as for FORMAT_ID and VERSION, default values in the apparatus are set in case of the built-in tuner. On the other hand, as for FORMAT_ID and VERSION, the values of Registration_Descriptor (REG_DES for short) sent from the digital input are set in case of an external digital input (step ST1516).

(i) Furthermore, the number of recorded ESs is set.

(Although the PMT is set with information: number of all ESs to be broadcasted, all ESs are not always recorded upon recording, and the number of recorded ESs is set (step ST1516).)

(j) Since a component group descriptor in event information table EIT stores information indicating ESs to be played back as a set, these pieces of information of ESs that form the set are grouped (step ST1518). Furthermore, component tag information of that group is converted into a PID using a stream descriptor in the PMT, and that information is saved as group information. (This EIT information is likely to change depending on the broadcasting scheme.)

(k) A recording start logical block address (LB address) is set in ADR_OFS, and MAPI is generated for each stream based on each segmentation information (step ST1520). For an unnecessary stream, no MAPI is generated or SOBU_ENT_Ns is set to be "0".

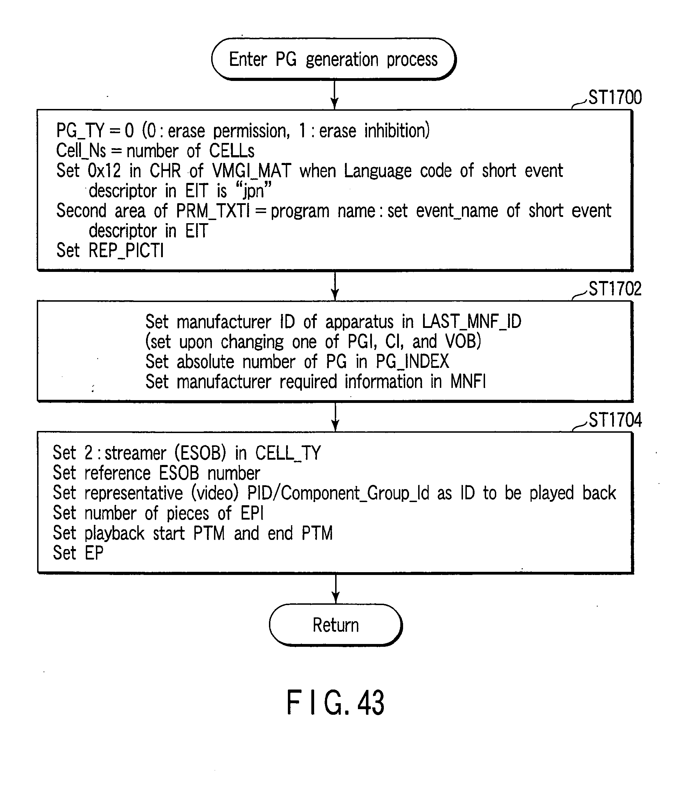

FIG. 43 is a flow chart (program generation process flow) for explaining an example of a program generation process including a process (ST1704) that sets an ID to be referred to upon playback when the cell type in cell information (CI) shown in FIG. 20 or 23 indicates stream recording (C_TY or CELL_TY = "2").

An erase permission flag (= "0") is set in PG_TY contained in program information PGI in FIG. 20, and the number of cells is set in C_Ns contained in this PGI (step ST1700).

If the broadcasting scheme is ARIB, and if language_code in a short event descriptor in EIT is "jpn", "0x12" is set in CHR of VMG_MAT, EVENT_NAME (program name) is set in the second area of PRM_TXTI, and representative picture information is set in REP_PICTI (step ST1700).

The manufacturer ID of this apparatus is set in LAST_MNF_ID. If PGI, CI, and SOB (and/or VOB) has been changed, this setting value is set with the manufacturer ID of an apparatus that has made the change (step ST1702).

This LAST_MNF_ID setting process is made to clarify the manufacturer of an apparatus which made the last edit or recording process on each disc. With this setting, measures can be easily taken when a given disc recorded using an apparatus of an arbitrary manufacturer is edited using an apparatus of another manufacturer, and some problem (for example, some or all pieces of information cannot be played back) occurs.

In this step (ST1702), the absolute number of each PG is set in PG_INDEX to allow application software or the like to make reference to each PG. Furthermore, manufacturer unique information is set in MNFI.

Next, information (C_TY = 2) indicating a streamer (recording object = ESOB) is set in the cell type (step ST1704). In this step (ST1704), an ESOB number to be referred to is also set, a representative PID or Component_Group_Id of video is set as an ID to be played back, and the number of pieces of EPI, playback start PTM, playback end PTM, and entry point EP are respectively set.

The processes upon recording (FIGS. 33, 35, 36, and 39 to 43) will be briefly restated below. That is,

<a01> A program to be recorded using an EPG (Electronic Program Guide) is determined in the program setting process. Reception of that program starts, and the determined program is recorded.

<a02> Upon reception of a recording command from the key input unit, the MPU unit loads management data from the disc drive unit and determines a write area (step ST100 in FIG. 35). At this time, the MPU unit checks the file system to determine whether or not recording can be proceeded. If recording can be proceeded, the MPU unit determines a recording start position; otherwise, a message that advises accordingly is displayed for the user, thus aborting the process.

<a03> The contents of the management area are set to write data in the determined area, and the write start address of video data is set in the disc drive unit, thus preparing for data recording (step ST110 in FIG. 35).

<a04> The time of the STC unit is reset (step ST112 in FIG. 35). Note that the STC unit is a system timer, and recording/playback is done with reference to the count value of this timer.

<a05> The PAT of a program to be recorded is loaded (step ST116 in FIG. 35) to determine the PID required to fetch the PMT of the target program. Then, the target PMT is loaded to determine the PIDs of data (video, audio) to be decoded (to be recorded). At this time, the PAT and PMT are saved in work RAM 80A of the MPU unit, and are written in the management information. VMG file data is written in the file system, and required information is written in VMGI.

<a06> Recording setups of respective units are made (step ST114 in FIG. 35). At this time, a segmentation setup of data and reception setup of TS packets are made in the formatter unit. Also, the PID of data to be recorded is set to record only a target video stream. Furthermore, the buffer is set to start holding of TS packets. The formatter unit starts a buffer fetch process operation shown in FIG. 41.

<a07> VSTI and ASTI are generated based on the PMT (step ST120 in FIG. 36; the process in FIG. 40).

<a08> If data stored in the buffer reach a predetermined size (for one CDA) (YES in step ST140 in FIG. 36), an ECC process is executed via the D-PRO unit, thus recording data on the disc (step ST142 in FIG. 36).

<a09> During recording, segmentation information is saved in work RAM 80A of the MPU unit (step ST146 in FIG. 36) periodically (before the buffer RAM of the formatter unit becomes full of data). The segmentation information to be saved is that of ESOBU data, i.e., the ESOBU start address, ESOBU pack length, I-picture end address, the ESOBU arrival time (ATS), or the like may be saved.

<a10> The remaining space is checked. If the remaining space becomes equal to or smaller than a predetermined value, a small remaining space process that has been explained previously in the corresponding paragraph of the description of FIG. 36 is executed.

<a11> It is checked if recording is to end (if the user has pressed a recording end key or if no recordable space remains). If recording is to end (YES in step ST148 in FIG. 36), remaining segmentation information is fetched from the formatter unit, and is added to work RAM 80A. These data are recorded in management data (VMGI), and remaining information is recorded in the file system (step ST150 in FIG. 36).

<a12> If recording is not to end (NO in step ST148 in FIG. 36), the flow returns to <a08> to continue the data fetch (and playback) process.

In order to display contents, whose recording is in progress, on the TV, data is sent to the decoder unit simultaneously with the D-PRO unit, and is displayed (played back). In this case, the MPU unit makes setups upon playback in the decoder unit, which then automatically executes a playback process.

The D-PRO unit forms ECC groups by combining, e.g., every 16 LBs, appends ECC data to each group, and sends them to the disc drive unit. When the disc drive unit is not ready to record on the disc, the D-PRO unit transfers the ECC groups to the temporary storage unit and waits until the disc drive unit is ready to record data. When the disc drive unit is ready, the D-PRO unit starts recording. As the temporary storage unit, a large-capacity memory is assumed since it must hold recording data for several minutes or longer by high-speed access. Also, the MPU unit can make high-speed read/write access to the D-PRO unit via a dedicated microcomputer bus, so as to read/write the file'management area and the like.

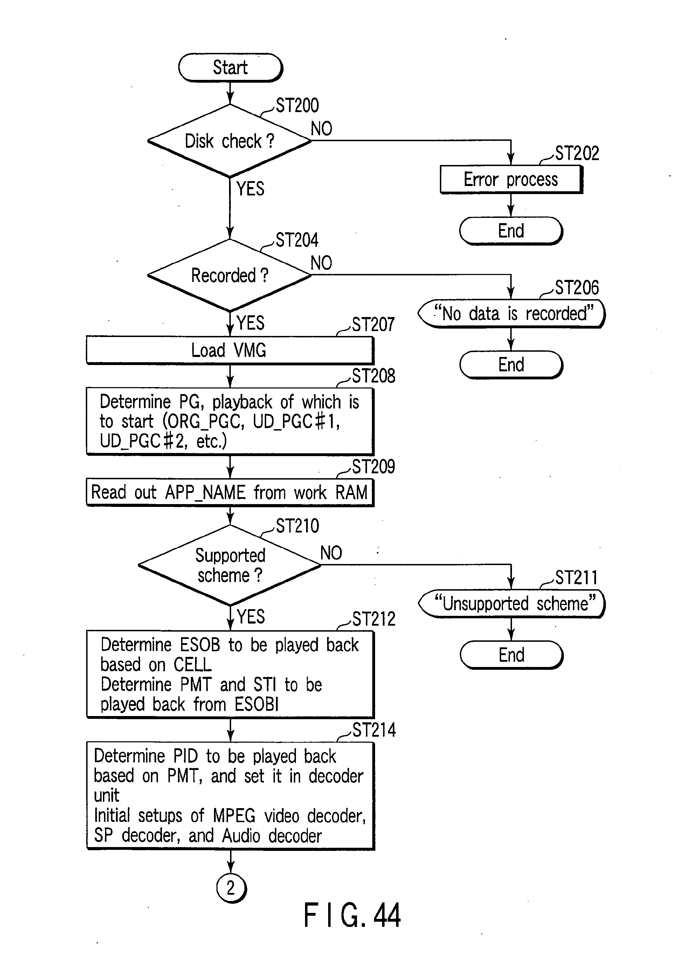

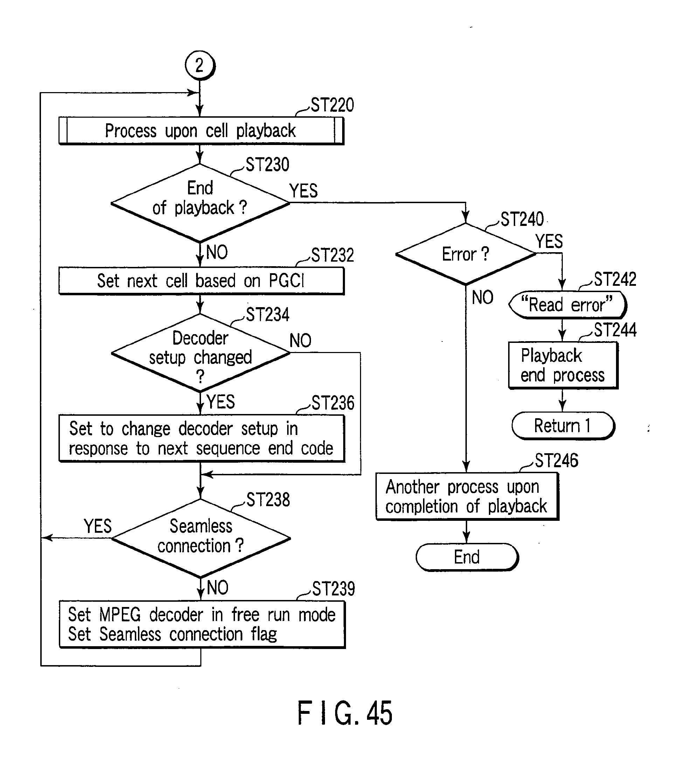

FIGS. 44 and 45 are flow charts (overall playback operation flow with reference to APP_NAME) for explaining an example of the playback operation of the apparatus shown in FIG. 31.

<b01> A disc check process is made (step ST200) to check if the disc is a rewritable disc (R, RW, RAM). If the disc is not a rewritable disc (NO in step ST200), a message that advises accordingly is returned (step ST202), thus ending the process.

<b02> If the disc is a rewritable disc (YES in step ST200), the file system of the disc is read out to check if data has already been recorded (step ST204). If no data is recorded (NO in step ST204), a message "no data is recorded" is displayed (step ST206), thus ending the process.

<b03> If data has already been recorded (YES in step ST204), management information (VMG file) 130 is loaded (step ST207) to determine programs and cells to be played back (by prompting the user to select them), and also to determine the playback start file pointer (logical address) (step ST208). If a playback process in the recorded order is selected, playback is made according to ORG_PGCI. If a playback process for respective programs is to be made (in the sequence of user's choice), playback is made according to UD_PGCI (or playlist) with a number corresponding to the program to be played back.

<b04> APP_NAME is read out as specific information set with a value corresponding to the broadcasting scheme used in recording from the management information (e.g., SOBI in FIG. 10) stored in work RAM 80a (step ST209). If the value set in this APP_NAME does not indicate a scheme that can be supported by the playback apparatus (FIG. 31) (NO in step ST210), a warning indicating this is displayed as, e.g., on-screen display data on a monitor (step ST211), thus ending the process.

On the other hand, if the value set in this APP_NAME indicates a scheme that can be supported by the playback apparatus (FIG. 31) (YES in step ST210), a process upon starting playback is executed (step ST212).

<b05> Initial setups of respective decoders are made (step ST214).

<b06> A cell playback process is executed (step ST220). It is checked if playback is to end (step ST230). If playback is to end (YES in step ST230), an error check process is executed (step ST240). If any error is found (YES in step ST240), a message that advises accordingly is displayed (step ST242), and a playback end process is executed (step ST244). If no error is found (NO in step ST240), a playback end process is executed (step ST246), thus ending this operation.

<b07> If playback is not to end (NO in step ST230), the next cell is determined based on PGCI (step ST232) and it is checked if setups of decoders (61, 64, and the like) are changed (step ST234). If the setups are changed (YES in step ST234), change attributes are set in the decoders so as to change decoder setups in response to the next sequence end code (step ST236). After that, it is checked if connection from playback of the previous cell to that of the next cell is seamless. If connection is not seamless (NO in step ST238), MPEG decoders (61 and the like) are set in a free run mode and a seamless connection flag is set (step ST239). The flow then returns to step ST220. If connection is seamless (YES in step ST238), the flow returns to step ST220.

<b08> During the cell playback process (step ST220), it is checked if playback is to end (step ST230). If playback is not to end, the process in step ST220 is continued.

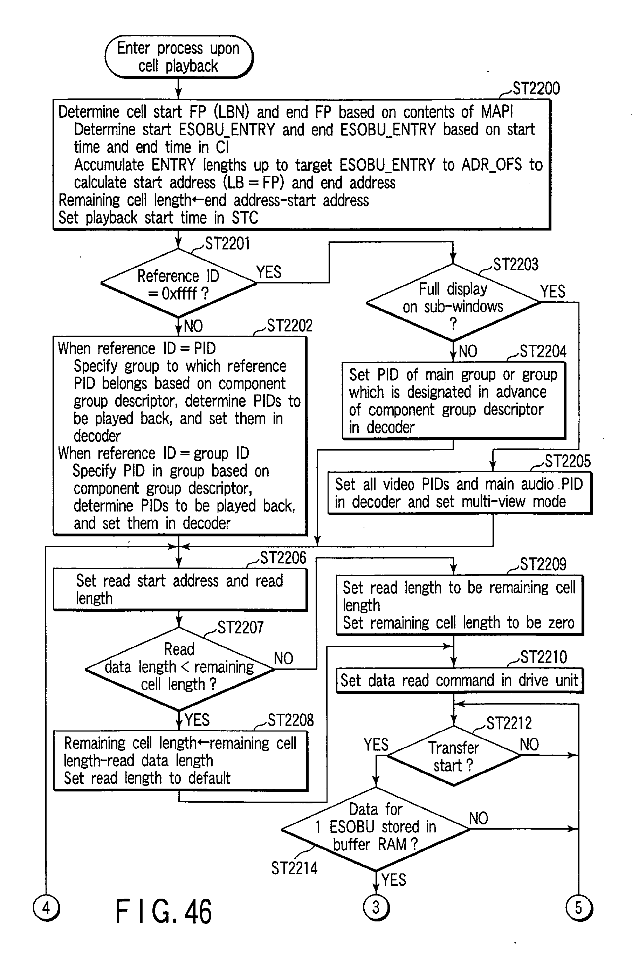

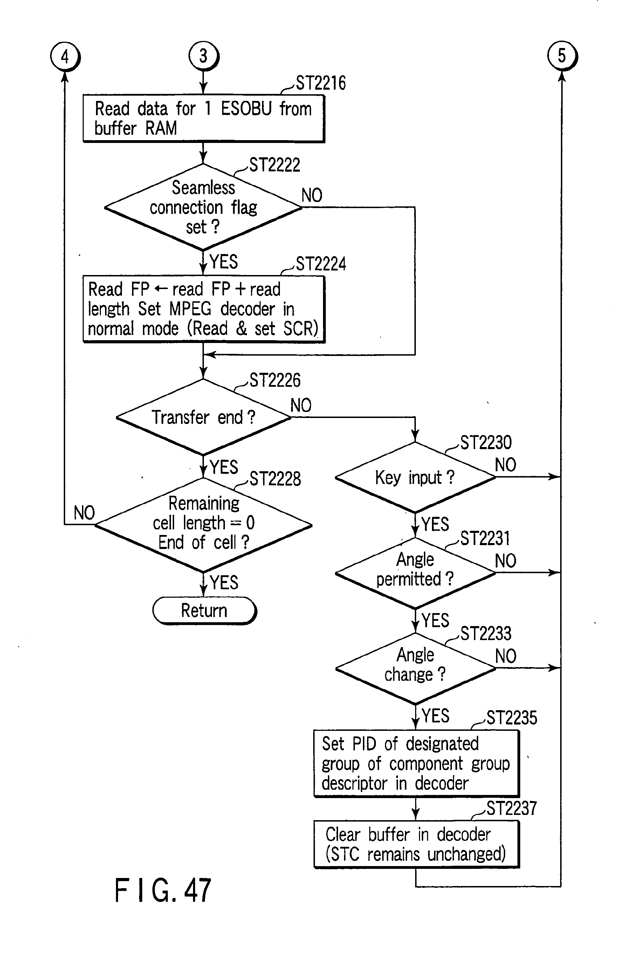

FIGS. 46 and 47 are flow charts (process flow upon cell playback using ADR_OFS of logical block units, and packet units together) for explaining an example of the process upon cell playback in the apparatus shown in FIG. 31.

<c01> Start file pointer FP (expressed by logical block number LBN) and end address FP of a cell are determined on the basis of MAPI. Furthermore, start ESOBU_ENTRY and end ESOBU_ENTRY are determined based on the start and end times in cell information, and the data lengths of entries until target ESOBU_ENTRY are accumulated in ADR_OFS, thus obtaining a start address (LB = FP) and end address (step ST2200). The remaining cell length is calculated by subtracting the start address from the end address, and the playback start time is set in the STC.

<c02> If a reference ID = 0xffff (YES in step ST2201), there are two different multi-angle display methods, i.e., a sub-window multi-view mode, and a display mode for displaying a group which is set in advance. In case of the former mode (YES in step ST2203), the PIDs of all video data and that of main audio data are set in decoders, which are set in the sub-window multi-view mode (step ST2205). On the other hand, in case of the latter mode (NO in step ST2203), the PID of a group which is set in advance is set in decoders (step ST2204). If no advance setup is available, a default value or main group value is set (step ST2204).

<c03> If the reference ID # 0xffff (NO in step ST2201), and if the reference ID = PID (the former half of step ST2202), a group to which an ES to be referred to belongs is specified based on the component group descriptor to determine the PIDs to be played back, and they are set in decoders (step ST2202).

On the other hand, if the reference ID = group ID (the latter half of step ST2202), the PID in a group is specified to determine the PIDs to be played back, and they are set in decoders (step ST2202).

<c04> In the decoder unit, a setup is made to execute a decode process.

<c05> A read process during playback is executed to determine the read address and read size based on the start file pointer (step ST2206).

<c06> The read size to be read out is compared with the remaining cell length. If the remaining cell length is larger than the read size (YES in step ST2207), a value obtained by subtracting the read size to be read out from the remaining cell length is set as the remaining cell length (step ST2208). If the remaining cell length is smaller than the read size (NO in step ST2207), the read size is set to be the remaining cell length, and the remaining cell length is set to be zero (step ST2209).

<c07> The read length is set to be a read unit length, and the read address, read length, and read command are set in the disc drive unit (step ST2210).

<c08> After the transfer starts (YES in step ST2212, the control waits until readout data for one ESOBU are stored (step ST2214). If data for one ESOBU are stored (YES in step ST2214), the flow advances to step ST2216.

<c09> In decoder unit 59, readout packet group data is received by demultiplexer 60 (step ST2216) and is demultiplexed into packets. In accordance with the stream ID and sub-stream ID, video packet data (MPEG video data) are transferred to video decode unit 61, audio packet data are transferred to audio decode unit 64, and sub-picture packet data are transferred to SP decode unit 63. TS transfer unit 101 converts readout packet group data into an elemental stream, and sends it to respective decoders (61, 64) via an internal bus, thus executing decode processes.

<c10> If the seamless connection flag is set (YES in step ST2222) during the transfer process, read file pointer + read length is set in the read file pointer, MPEG decoder 61 is set in a normal mode (to read and set SCR), and the seamless connection flag is reset (step ST2224). In this case, the sum of the read FP and the previously set read length is substituted in the read FP.

<c11> During playback, the contents of the STC are displayed as a playback time. If the STB unit can display a playback time based on the PTS in video data, that time can be used.

<c12> It is checked if transfer is complete. If transfer is not complete yet (NO in step ST2226), the flow advances to step ST2230.

<c13> It is checked if transfer is complete. If transfer is complete (YES in step ST2226), the remaining cell length is checked (step ST2228). If the remaining cell length is not "00" (NO in step ST2228), the flow returns to step ST2206; if it is "00" (YES in step ST2228), this process ends.

<c14> If transfer is not complete yet (NO in step ST2226), it is checked if a key input is detected (step ST2230). If an angle playback mode such as a multi-angle mode or the like is permitted (YES in step ST2231), and an angle is to be changed (YES in step ST2233), the PID of the designated group in the component group descriptor is set in the decoder (step ST2235). After that, the buffer in the decoder is cleared while the count value of the STC remains unchanged (step ST2237), and the flow returns to step ST2212.

FIG. 48 is a view for explaining an example of the data structure of the program map table (PMT) which can be used by the apparatus of FIG. 31. In this PMT, 8-bit stream type 3421 allows to identify various streams. For example, if the stream type is "0x01", it indicates an MPEG1 video stream; if the stream type is "0x02", it indicates an MPEG2 video stream (in case of Hi-Vision); if the stream type is "0x03", it indicates an MPEG1 audio stream; and if the stream type is "0x04", it indicates an MPEG2 audio stream (in case of AAC multi-channel audio).

FIG. 49 is a view showing an example of the contents of a digital copy control descriptor that can be used in the PMT in FIG. 48 and the like (service description table SDT, event information table EIT, and the like).

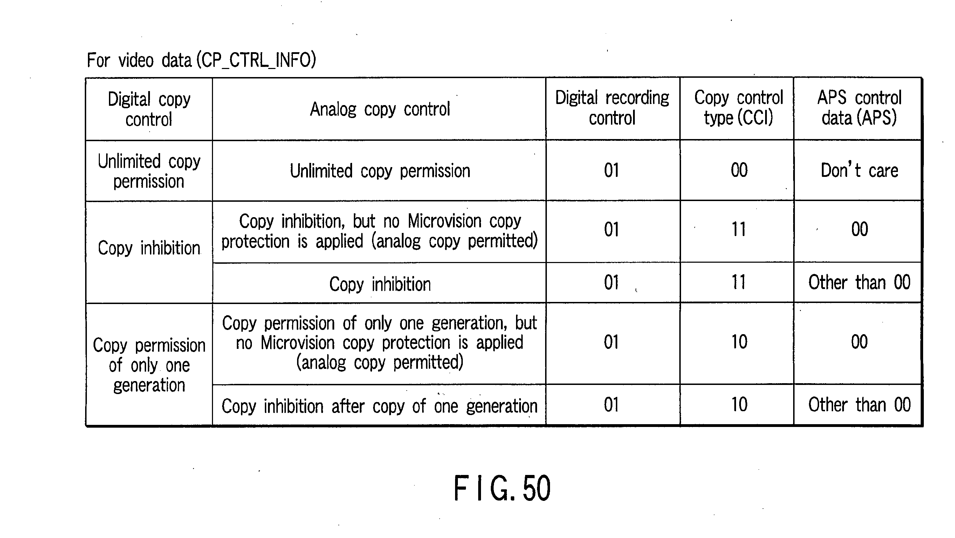

In this descriptor, a "descriptor tag" field is set to be, e.g., "0xC1", and a "descriptor length" field indicates the descriptor length. A "digital recording control" field describes "copy generation control data". A "maximum bit rate flag" field describes "whether or not the maximum transfer rate of the service of interest is to be described". If the maximum transfer rate is not described, the flag is set to be, e.g., "0"; otherwise, the flag is set to be, e.g., "1". When "0" is described in a "component control flag" field, for example, the overall program is specified (in case of PMT). If "1" is described in this field, another state is described. A "copy control type" field describes "copy generation control data" (see FIGS. 50 and 51). An "APS control data" field describes "analog output control data" (see FIG. 50). A "maximum bit rate" field describes a "maximum transfer rate" (when the maximum bit rate flag is "1").

FIG. 50 is a view for explaining an application example of digital copy control to video data. Copy control of video data is roughly categorized into three types, i.e., "unlimited copy permission (copy free)", "copy inhibition (copy never or copy no more)", and "copy permission of only one generation (copy once)".

In case of "unlimited copy permission", analog copy control is set to be "unlimited copy permission", digital recording control is set to be, e.g., "01", control type is set to be, e.g., "00", and APS control data is set to be, e.g., "Don't care (ignore)".

In case of "copy inhibition", (1) analog copy control is set to be "copy inhibition (digital copy is inhibited, but analog copy is not inhibited since no copy protection pulses of the Macrovision® system are inserted)", digital recording control is set to be, e.g., "01", control type is set to be, e.g., "11", and APS control data is set to be, e.g., "00".

In case of "copy inhibition", (2) analog copy control is set to be "copy inhibition (both analog copy and digital copy are inhibited)", digital recording control is set to be, e.g., "01", control type is set to be, e.g., "11", and APS control data is set to be, e.g., "other than 00".

In case of "copy permission of only one generation", (3) analog copy control is set to be "copy permission of only one generation (analog copy is permitted since no copy protection pulses are inserted)", digital recording control is set to be, e.g., "01", control type is set to be, e.g., "10", and APS control data is set to be, e.g., "00".

In case of "copy permission of only one generation", (4) analog copy control is set to be "copy permission of only one generation (both analog copy and digital copy of the next and subsequent generation are inhibited)", digital recording control is set to be, e.g., "01", control type is set to be, e.g., "10", and APS control data is set to be, e.g., "00".

FIG. 51 is a view for explaining an application example of digital copy control to audio data. Copy control of audio data is also roughly categorized into three types, i.e., "unlimited copy permission (copy free)", "copy inhibition (copy never or copy no more)", and "copy permission of only one generation (copy once)".

In case of "unlimited copy permission"; digital recording control is set to be, e.g., "01/11", and control type is set to be, e.g., "00".

In case of "copy permission of only one generation", digital recording control is set to be, e.g., "01/11", and control type is set to be, e.g., "10".

In case of "copy inhibition", digital recording control is set to be, e.g., "01/11", and control type is set to be, e.g., "11".

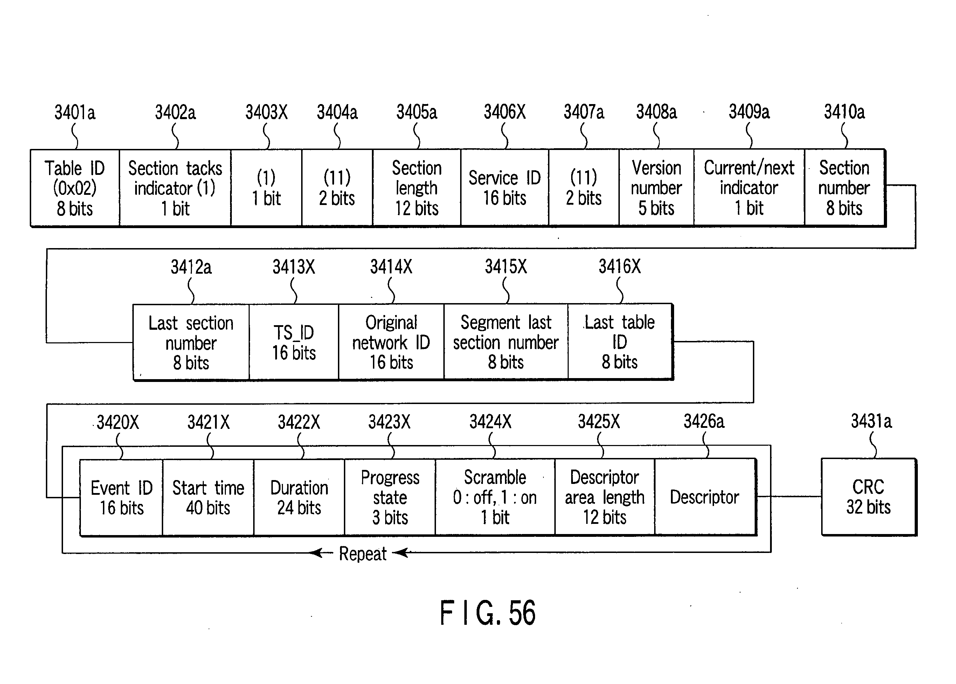

FIG. 52 is a view showing an example of the contents of a component descriptor that can be used by the PMT shown in FIG. 48 and the like (event information table EIT in FIG. 56 and the like).

In this descriptor, a "descriptor tag" field is set to be, e.g., "0x50", and a "descriptor length" field indicates the descriptor length. A "stream contents" field describes, e.g., "0x01" indicating video. A "component type" field describes, e.g., a "type of component". A "component tag" field describes, e.g., a "common tag in a program". An "ISO_639 language code" field describes, e.g., "jpn" indicating a Japanese language code. A "Text_Char" field can describe character strings such as "video", "audio", and the like.

FIG. 53 is a view for explaining an example of the contents of component types shown in FIG. 52. When the component type is "0x01", it indicates, e.g., that "video = 480 interlaced (or 525 interlaced) and aspect ratio = 4 : 3". When the component type is "0x03", it indicates, e.g., that "video = 480 interlaced (or 525 interlaced), aspect ratio = 16 : 9, and pan vector = none". When the component type is "0x04", it indicates, e.g., that "video = 480 interlaced (or 525 interlaced) and aspect ratio > 16 : 9 (e.g., wide screen with cinema scope size)".

When the component type is "0xA1", it indicates, e.g., that "video = 480 progressive (or 525 progressive) and aspect ratio = 4 : 3". When the component type is "0xA3", it indicates, e.g., that "video = 480 progressive (or 525 progressive), aspect ratio = 16 : 9, and pan vector = none". When the component type is "0xA4", it indicates, e.g., that "video = 480 progressive (or 525 progressive) and aspect ratio > 16 : 9 (e.g., wide screen with cinema scope size)".

When the component type is "0xB1", it indicates, e.g., that "video = 1080 interlaced (or 1125 interlaced) and aspect ratio = 4 : 3". When the component type is "0xB3", it indicates, e.g., that "video = 1080 interlaced (or 1125 interlaced), aspect ratio = 16 : 9, and pan vector = none". When the component type is "0xB4", it indicates, e.g., that "video = 1080 interlaced (or 1125 interlaced) and aspect ratio > 16 : 9 (e.g., wide screen with cinema scope size)".

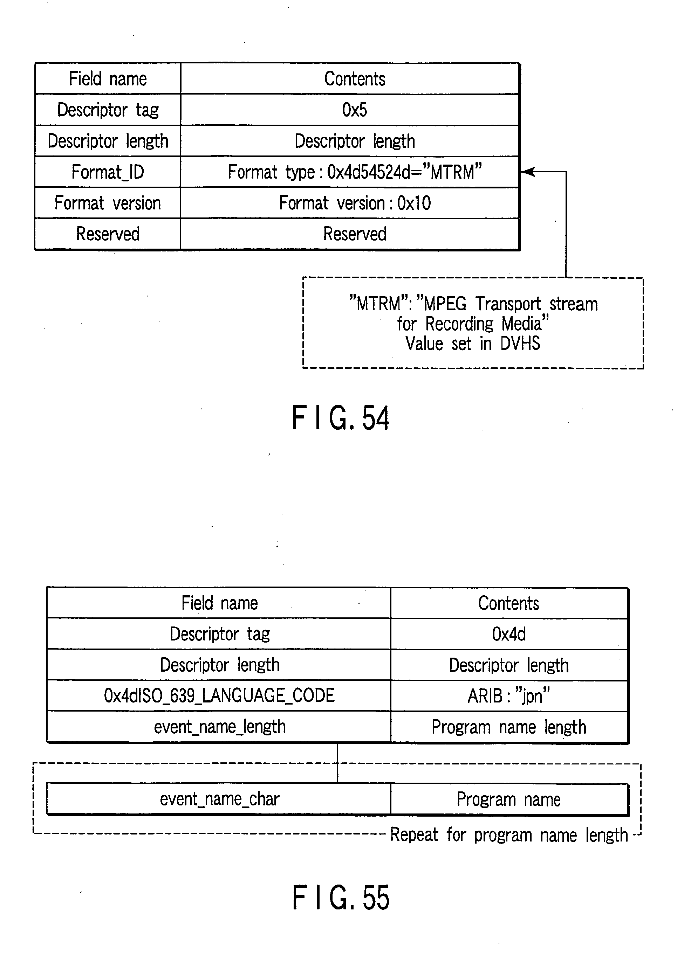

FIG. 54 is a view for explaining an example of the contents of the registration descriptor.

In this descriptor, a "descriptor tag" field is set to be, e.g., "0x5", and a "descriptor length" field indicates the descriptor length. A "stream contents" field describes, e.g., "0x01" indicating video. A "format ID" field describes the type of format, e.g., "0x4d54524d" indicating MTRM. Note that "MTRM" is an abbreviation for MPEG transport stream for Recording Medium, and "0x4d54524d" is a value set for digital video (DVHS). A "format version" field describes, e.g., "0x10" as the format version.

FIG. 55 is a view for explaining an example of the contents of a short event descriptor.

In this descriptor, a "descriptor tag" field is set to be, e.g., "0x4d", and a "descriptor length" field indicates the descriptor length. A "0x4dISO_639_LANGUAGE_CODE" field describes, e.g., a broadcasting scheme "ARIB: jpn" adopted in Japan. Also, an "event_name length" field describes, e.g., a "program name length".

The "event_name length" field repetitively stores "event_name char" indicating a program name in correspondence with the program name length.

FIG. 56 is a view for explaining an example of the data structure of the event information table (EIT) that can be used by the apparatus shown in FIG. 31. This EIT has descriptor recording field 3426a, which can store a descriptor such as "component group descriptor" and the like.

FIG. 57 is a view for explaining an example of the contents of the component group descriptor.

In this descriptor, a "descriptor tag" field is set to be, e.g., "0xD9", and a "descriptor length" field indicates the descriptor length. A "component group type" field describes, e.g., "000" indicating a multi-view TV or "001" to "111" which are undefined for other purposes. A "total bit rate flag" field describes, e.g., "0" indicating that an event does not include any total bit rate field, or "1" indicating that an event includes a total bit rate field. Furthermore, a "group count" field describes the number of groups of component group descriptors.

Each of the component group descriptors as many as the number of groups includes a "component group ID" field, and "CA unit count" field. In the "component group ID" field, ID = 0 indicates a main group; and ID = 0x1 to 0xf, sub-groups.

The "CA unit count" field includes a "CA unit ID" field used to identify a charge account unit, and a "component count" field indicating the number of components. Also, the "component count" field includes "component tag" fields which are repeated in correspondence with the number of components. The "component group ID" field and "CA unit count" field including the "component tag" field" are repeated'in correspondence with the number of CA units.

Furthermore, the "component tag" field is assured only when a "total bit rate flag" is 1 (it is not assured when that flag is 0). If this field is assured, a "text length" field indicates the length of subsequent text. A "text" field below that field repetitively stores text data in correspondence with the text length indicated by the "text length" field.

The group of the "component group ID" field to the "text length" field is repeated in correspondence with the "group count" described in the "group count" field.

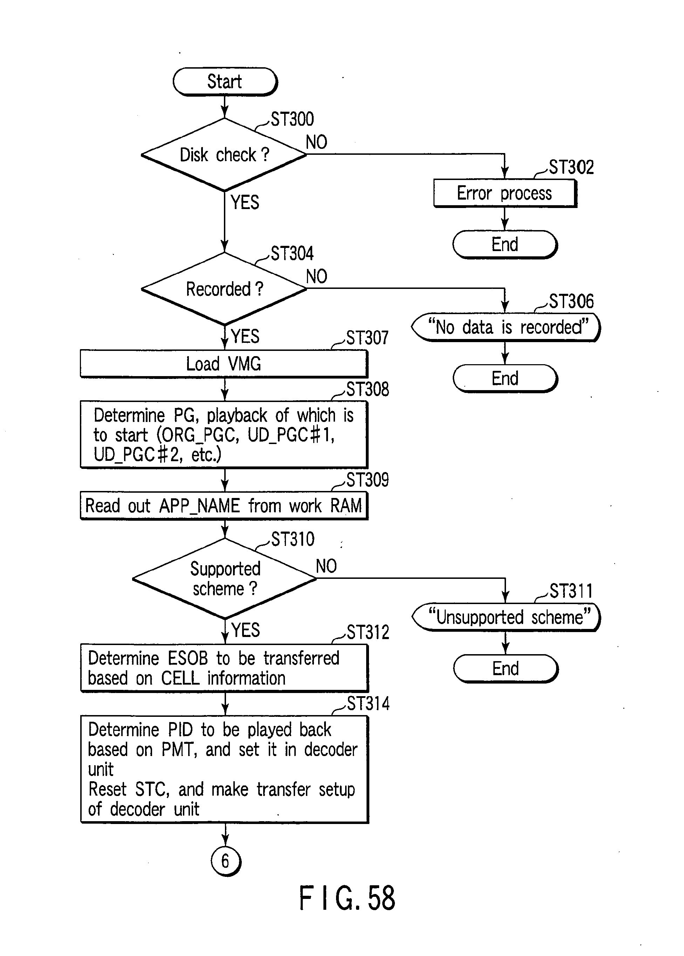

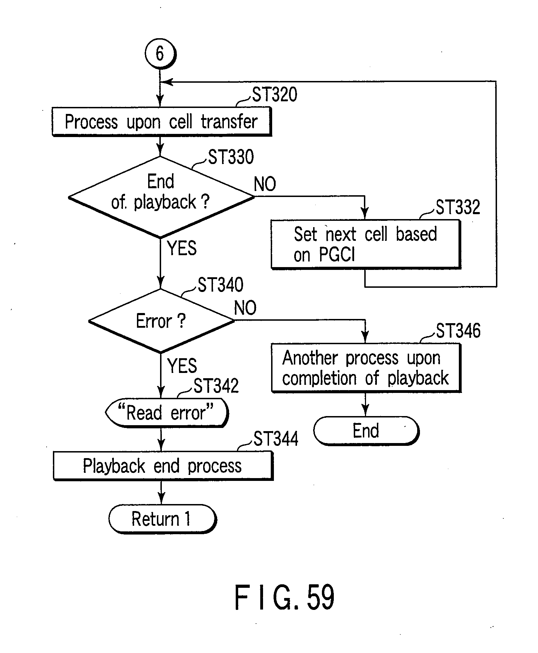

FIGS. 58 and 59 are flow charts (overall transfer operation flow with reference to APP_NAME) for explaining an example of the overall data transfer operation in the apparatus shown in FIG. 31.

Steps ST300 to ST312 in FIG. 58 are the same processes as those in steps ST200 to ST212 shown in FIG. 44 above. In step ST314 in FIG. 58, the PID to be played back is determined based on the PMT, and is set in decoder unit 59. Also, STC 102 is reset, and a transfer setup is made in decoder unit 59. After that, a process upon cell transfer starts (step ST320). Steps ST320 to ST346 in FIG. 59 are the same processes as those in steps ST220 to ST246 in FIG. 45 above. In FIG. 59, however, processes corresponding to steps ST234 to ST239 in FIG. 45 are not executed.

As can be seen from comparison between FIGS. 44 and 45 and FIGS. 58 and 59, a process for externally transferring data is substantially the same as a normal playback process, except for the following difference in contents. That is, in the process shown in FIGS. 58 and 59, TS packet transfer unit 101 calculates the transfer times based on the ATS in a packet group and outputs TS packets at times corresponding to the calculated transfer times. Also, the PCR is read out based on PCR position information to adjust the time of STC 102 (STC reset in step ST314), thus synchronizing internal clocks (STC) and external clocks (PCR). In this manner, the user can designate a playback point on a time basis in the cell playback process of data recorded by stream recording.

The data process upon playback (FIGS. 58 and 59) will be briefly restated below. That is,

> <d01> A disc check process is made (step ST300) to check if the disc is a rewritable disc (R, RW, RAM). If the disc is not a rewritable disc (NO in step ST300), a message that advises accordingly is returned (step ST302), thus ending the process.
> <d02> The file system of the disc is read out to check if data has already been recorded. If no data is recorded, a message "no data is recorded" is displayed, thus ending the process.

<d03> The VMG file is loaded (step ST307) to determine programs and cells to be played back (by prompting the user to select them), and also to determine the playback start file pointer (logical address) (step ST308). If a playback process in the recorded order is selected, playback is made according to ORG_PGCI. If a playback process for respective programs is to be made, playback is made according to UD_PGCI with a number corresponding to the program to be played back.

<d04> The value of APP_NAME is read out (step ST309), and it is checked if it indicates a supported broadcasting scheme (step ST310). If the value does not indicate a scheme that can be supported (NO in step ST310), a message that advises accordingly is displayed (step ST311), thus ending the process (or starting the next cell process).

<d05> A process upon starting playback is executed (step ST312).

<d06> Initial setups of respective decoders are made (step ST314).

<d07> A cell playback process (to be described later) is executed, and it is checked if playback is to end (step ST330). If playback is to end (YES in step ST330), an error check process is executed (step ST340). If any error is found (YES in step ST340), a message that advises accordingly is displayed (step ST342); otherwise (NO in step ST340), a playback end process is executed (step ST346), thus ending this operation.

<d08> If playback is not to end (NO in step ST330), the next cell is determined based on PGCI (step ST332). In this case, it is checked if setups of decoders are changed. If the setups are changed, change attributes are set in the decoders so as to change decoder setups in response to the next sequence end code.

<d09> It is checked if playback is to end. If playback is not to end, the control returns to step ST320.

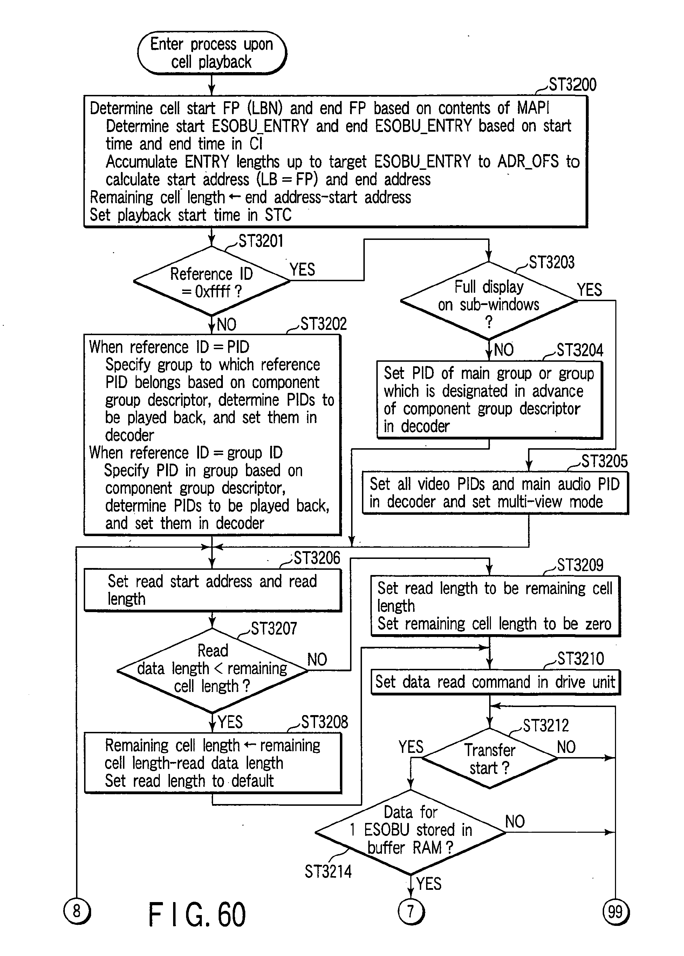

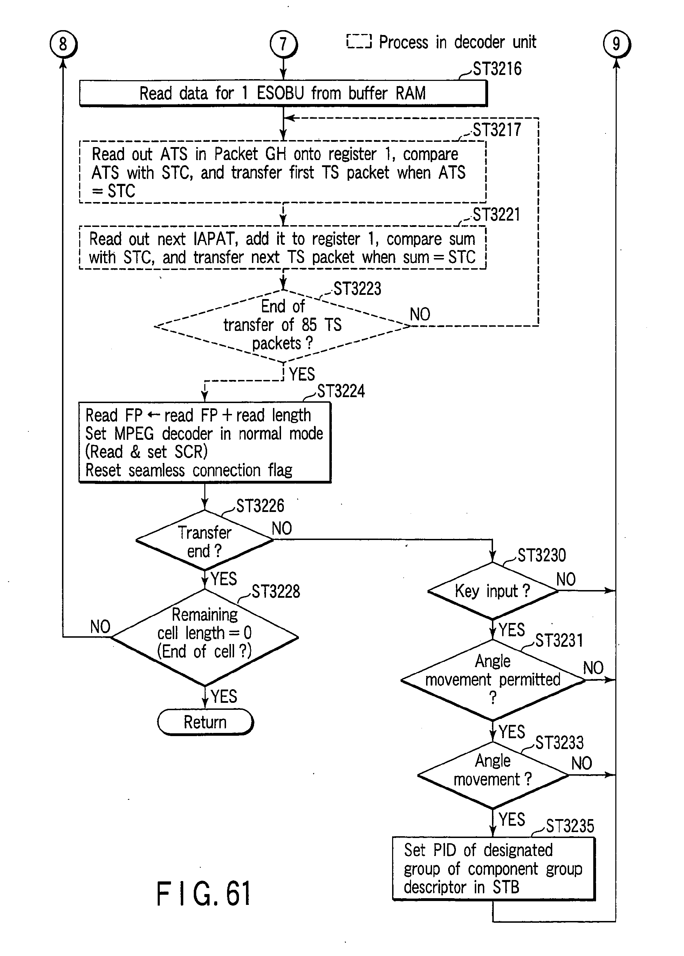

FIGS. 60 and 61 are flow charts (process flow upon cell transfer using ADR_OFS of logical block units, and packet units together) for explaining a practical example of the process upon cell transfer (ST320) shown in FIG. 59.

Steps ST3200 to ST3214 in FIG. 60 are the same processes as those in steps ST2200 to ST2214 in FIG. 46 above. Also, the processes in FIG. 61 are substantially the same as those in FIG. 47 above, except for steps ST3217 to ST3221 and ST3231 to ST3235.

Steps ST3216 to ST3221 in FIG. 61 are processed by decoder unit 59 in FIG. 31. The PCR position is detected based on PCR information in packet group header 161 and the like, and that PCR is read out onto register 2 (not shown). The PCR in register 2 is compared with the count value of STC 102. If they are different, the count value (corresponding to the playback time) of STC 102 is corrected. Next, ATS 151X in packet group header 161 is read out onto register 1 (not shown). The ATS in register 1 is compared with the count value of STC 102. If they match, the first TS packet is transferred (step ST3217). After that, the next IAPAT is read out and is added to the contents of register 1 (not shown). The sum is compared with the count value of STC 102, and when the two values match, the next TS packet is transferred (step ST3221).

To summarize the above description, the calculation associated with TS packet output can be made by the following method. That is, the first TS packet in a packet group is output when the ATS in the header matches the STC value. As for the second and subsequent TS packets, the sum of the ATS and IAPAT immediately before the TS packet of interest is compared with the value of STC 102, and the packet of interest is output when they match.

The above processes (steps ST3217 to ST3221) are repeated 85 times (NO in step ST3223) in case of packet group 140 shown in FIG. 24. Upon completion of transfer of 85 TS packets (YES in step ST3223), the next process in step ST3224 (the same process as in step ST2224 in FIG. 47) is executed. The subsequent processes are substantially the same as those in FIG. 47 (except that steps S3231 to ST3233 in FIG. 61 are processes associated with angle movement).

The process (FIGS. 58 to 61) upon cell transfer (upon externally transferring data) will be briefly restated below. That is, when data is to be externally transferred, substantially the same process as a normal playback process is executed, and the TS transfer unit calculates the transfer times on the basis of the ATS in a packet group and outputs TS packets at times corresponding to the calculated transfer times in the cell playback process.

The calculation method of the transfer time is as follows. That is, the first TS packet in a packet group is output when the ATS in a header matches the STC value. As for the second and subsequent TS packets, the TS packet of interest is output when the sum of the immediately preceding ATS and IAPAT immediately before the TS packet of interest is compared with the STC value and these values match.

FIG. 62 is a flow chart (process flow upon time search; part 1) for explaining an example of a time search process with respect to the already recorded stream information of a digital TV broadcast program or the like in the apparatus shown in FIG. 31.

<e01> The user selects and determines a target title, playback start time, stream number (1 in case of one stream) (step ST400).

<e02> Program chain PGC, programs PG, and cells to be played back are determined based on the information of user's choice, and corresponding program chain information PGCI, program information PGI, and cell information CI are read out from management information (PGCI) (steps ST402 to ST404).

<e03> ESOBI to be played back is determined based on a corresponding ESOB number in readout cell information CI (step ST406). Also, a map group number (e.g., MAP_Group#n) in the ESOBI (e.g., ESOBI#1) to be played back is determined based on the stream number in the readout management information (ESFIT) (step ST408).

<e04> After a map group is determined in correspondence with the above map group number, a map group entry which is closest to the playback time and has a value smaller than the playback time is determined, and information of a map entry is read out (step ST410). Note that map group entries can be assured at 10-sec intervals (as in video recording).

<e05> A corresponding ESOBU entry (e.g., ESOBU_ENT#1) is read out based on the ESOBU number (ESOBU_ENT_NUMs) in the map entry information. The ESOBU playback time (ESOBU_PB_TM; the number of frames) is added to the playback time in the map group entry information to determine an ESOBU entry which is closest to the target playback time and has a value smaller than the target playback time (step ST412).

At this time, respective ESOBU sizes (ESOBU_SZ) to a target ESOBU are summed up on the basis of ESOBU address information in the map entry information and ESOBU data designated by the map entry information, thus calculating an ESOBU address (step ST414).

<e06> An address from which playback is to start is calculated on the basis of the address of a reference picture (I-picture) in the target ESOBU entry information and the target ESOBU address (step ST416). At this time, if a packet group header (FIG. 24) includes PCR information, the packet group header is read out.

<e07> A PCR address is calculated based on the PCR information, and the PCR is loaded and set in STC 102 (step ST418).

<e08> Decoder unit 59 undergoes a decode initial setup process (step ST420) to set a display start time to be a target playback time.

<e09> An instruction is issued to disc drive unit 51 to read out recorded data from the address calculated in step ST414, thus starting a data read process.

<e10> After playback starts, the control then enters a normal playback process (a cell layback process and the like).

The process in FIG. 62 is an example of special playback on a playback time basis in stream recording, which can be implemented since the data structure of the present invention has PCR position information.

FIG. 63 is a flow chart (process flow upon time search; part 2) for explaining another example of a time search process with respect to the already recorded stream information of a digital TV broadcast program or the like in the apparatus shown in FIG. 31. This process is substantially the same as that in the corresponding steps in FIG. 62, except for steps ST409 to ST413.

<f01> The user selects and determines a target title, playback start time, stream number (1 in case of one stream) (step ST400).

<f02> PGC, PG, and CELL to be played back are determined based on the information (title and the like) of user's choice (steps ST402 to ST404), and VMG information VMGI containing corresponding program chain information PGCI, program information PGI, cell information CI, and the like are read out.

<f03> ESOBI to be played back, a group to be played back, and the playback start time are determined based on cell information CI (step ST406).

<f04> Information of an ESOB Entry, which is closest to the playback time and has a value smaller than the playback time, is read out in accordance with the information (step ST409).

In this case, the ESOBU playback time (the number of frames) is added to time offset TM_OFS to obtain an ESOBU Entry, which is closest to the target playback time and has a value smaller than the target playback time.

<f05> The ESOBU sizes to the target ESOBU Entry are summed up based on the ESOB address offset ADR_OFS to calculate an ESOBU address (step ST411).

<f06> Next, an address from which playback is to start is calculated on the basis of the address of a reference picture in the target ESOBU Entry information and the target ESOBU address.

<f07> A PCR address is calculated based on the PCR information (it is given by PCR_POS $\times$ 2^PCR_POS_SHIFT) (step ST413), and the PCR is loaded and set in the STC (step ST418). In this case, if PCR information is included in a PACKET Group Header, the PACKET Group Header is read out.

<f08> The decoder undergoes a decode initial setup process (step ST420) to set a display start time to be a target playback time.

<f09> An instruction is issued to the disc drive unit to read out recorded data from the address calculated in <f06>, thus starting a data read process (step ST422).

After playback starts, the control then enters a normal playback process.

According to various embodiments described above, flexible control operations suited to digital broadcast can be implemented.

<Points According to Embodiments>

<01> The PCR_POS shift amount is changed depending on PCR_POS_SHIFT to prepare for a case wherein the PCR position is far ("PCR_POS $\times$ 2^PCR_POS_SHIFT or PCR_POS $\times$ 2exp (PCR_POS_SHIFT)" described in <2> of FIG. 14). This PCR_POS_SHIFT is variable in correspondence with the recording rate (ST1504 in FIG. 42).

When this exponential indication method is applied to PCR position indication, a numerical value 2exp(PCR_POS_SHIFT) can be increased even when the number of bits of PCR_POS_SHIFT is small, thus expressing a large shift amount.

<02> In case of MPEG-TS (transport stream), AP_PKT_SZ is set to be 0xbc (188 bytes), and PKT_GRP_SZ is set to be 8 (for eight packets; corresponding to 16 kbytes if one packet = 2 kbytes) (ST1508 in FIG. 42; see the data structure in FIG. 24).

In this way, segmentation of the stream structure to be decoded is facilitated.

<03> Management information (VMG) has minimum required information (FIG. 38 and the like) of the PAT and PMT (ST1026 in FIG. 37). More specifically, TS_ID, NETWORK_ID, and PMT_ID (the ID of the PMT used in the ESOB of interest) of the PAT are saved in VMG, SERVICE_ID (Program_number in the PMT) and the PID of each elementary stream (ES) in the PMT are saved in VMG, and detailed stream information (STI) for each of only video and audio of the ES is generated and set in VMG.

In this way, since VMG contains minimum required information, playback can start even when the PAT and/or PMT are/is not present at the playback start location.

<04> The PID that forms each group is set based on the event information table (EIT in FIG. 56) and a main group is set in management information (stream file information SFI or ESFI) (ST1518 in FIG. 42). In this case, it is preferable to designate a group number (Component_Group_Id in ST1704 in FIG. 43 or the like) in playback order information (program PG).

Since this SFI is available, for example, when the recorded contents include multi-view information, a multi-view compatible playback process can be made even when the EIT is present at the playback start location of the multi-view contents.

<05> Stream information STI is independently generated for video and audio to prepare VSTI and ASTI (ST1214, ST1224 in FIG. 40). Since digital broadcast includes many video and audio types, the number of pieces of STI may increase.

When one STI is used to cover all video and audio types, a considerably large number of pieces of STI are required (the number of combinations of video and audio types becomes huge). However, when video STI and audio STI are independently generated, each of VSTI and ASTI need only cover corresponding types. Consequently, a lower number of pieces of STI can cover various video and audio combinations.

<06> LAST_MNF_ID (editor ID in FIG. 23) is set in management information (ST284 in FIG. 34).

For example, when a disc that has undergone recording using a recorder of T company undergoes an edit process (or additional recording process) using a recorder of M company, the manufacturer and model which are used in the edit process (or additional recording process) can be detected from LAST_MNF_ID recorded in management information.

<07> Cell information (CI) saves representative PID/group ID (ST1704 in FIG. 43).

Upon determining the PID of a stream to be played back on the basis of the saved representative PID/group ID value and service information (SI), a multi-view compatible playback process can be realized.

<08> Address expression of the PCR position is divided into ADR_OFS (FIG. 11) of the logic block precision (LB unit) and packet precision (packet unit). A target address is expressed by the product of PCR_POS and the value 2^PCR_POS_SHIFT (FIG. 14).

In this manner, efficient address management can be made (even when a large number of bits are not assigned to address management).

<09> Information (FIG. 38) of various digital broadcasting schemes is set in APP_NAME (FIG. 10) in management information (SOBI) (ST1026 in FIG. 37).

In this way, only broadcast (compatible stream) of the scheme set in APP_NAME can be recorded (FIG. 39). Hence, streams of various schemes can be prevented from being recorded together on a single disc (ST1120 in FIG. 39).

Also, only the recorded contents (compatible stream) of the scheme set in APP_NAME can be played back (YES in ST210 in FIG. 44).

<Other Expressions of Invention According to Embodiments>

(A) A recordable information recording medium which comprises a management area and a data area, and in which data is separately recorded on the data area as one or more objects, one object includes one or more data units, each data unit is recorded by packetizing video and audio data to be played back within 0.4 sec to 1 sec to a plurality of packets, the management area includes PGC information used to manage a playback order, and the PGC information includes management information used to manage a program, management information used to manage CELL, and also management information used to manage objects, is characterized in that the CELL management information (CI/ reference ID in FIG. 23) includes a PID (representative PID in ST1704 in FIG. 43) of a representative one of streams to be played back.

(B) A recordable information recording medium which comprises a management area and a data area, and in which data is separately recorded on the data area as one or more objects, one object includes one or more data units, each data unit is recorded by packetizing video and audio data to be played back within 0.4 sec to 1 sec to a plurality of packets, the management area includes PGC information used to manage a playback order, and the PGC information includes management information used to manage a program, management information used to manage CELL, and also management information used to manage objects, is characterized in that the CELL management information (CI/ reference ID in FIG. 23) includes an ID (Component_Group_Id in ST1704 in FIG. 43) of a group of streams to be played back.

(C) An information recording medium in (A) or (B) is characterized in that the object management information further includes group information (FIG. 57) used to determine a playback combination.

(D) A recordable information recording medium which comprises a management area and a data area, and in which data is separately recorded on the data area as one or more objects, one object includes one or more data units, each data unit is recorded by packetizing video and audio data to be played back within 0.4 sec to 1 sec to a plurality of packets, the management area includes PGC information used to manage a playback order, and the PGC information includes management information used to manage a program, management information used to manage CELL, and also management information used to manage objects, is characterized in that information of an exponent part (PCR_POS_SHIFT) of 2 of information indicating a PCR address from the head of the data unit is included in general information (ESOB_GI in FIG. 10), and each data unit information (ESOBU_ENT in FIG. 13) includes PCR position value (PCR_POS) information.

(E) A recordable information recording medium which comprises a management area and a data area, and in which data is separately recorded on the data area as one or more objects, one object includes one or more data units, each data unit is recorded by packetizing video and audio data to be played back within 0.4 sec to 1 sec to a plurality of packets, the management area includes PGC information used to manage a playback order, and the PGC information includes management information used to manage a program, management information used to manage CELL, and also management information used to manage objects, is characterized in that information of an exponent part (PCR_POS_SHIFT) of 2 of information indicating a PCR address from the head of the data unit is included in general information (ESOB_GI in FIG. 10), and a unit header (Packet_Group_Header in FIG. 24) of each data unit (ESOBU in FIG. 24) includes value (PCR position information) information.

(F) A recordable information recording medium which comprises a management area and a data area, and in which data is separately recorded on the data area as one or more objects, one object includes one or more data units, each data unit is recorded by packetizing video and audio data to be played back within 0.4 sec to 1 sec to a plurality of packets, the management area includes PGC information used to manage a playback order, and the PGC information includes management information used to manage a program, management information used to manage CELL, and also management information used to manage objects, is characterized in that the object management information (ESOBI in FIG. 10) includes data lengths (AP_PKT_SZ in FIG. 10) of packets included in the data unit (ESOBU in FIGS. 1, 2, and 24) and information of the number of packets (ESOB_S_PKT_POS/ESOB_E_PKT_POS in FIG. 11).

(G) A recordable information recording medium which comprises a management area and a data area, and in which data is separately recorded on the data area as one or more objects, one object includes one or more data units, each data unit is recorded by packetizing video and audio data to be played back within 0.4 sec to 1 sec to a plurality of packets, the management area includes PGC information used to manage a playback order, and the PGC information includes management information used to manage a program, management information used to manage CELL, and also management information used to manage objects, is characterized in that the object management information (ESOBI in FIG. 10) includes information (APP_NAME in FIG. 10) corresponding to a broadcasting scheme (Authority ID in FIG. 38).

(H) An apparatus using the medium of (G) is characterized by comprising a scheme detection unit (main MPU in FIG. 31; ST1116 in FIG. 39) which checks a scheme of externally input data, a determination unit (main MPU in FIG. 31; ST1120 to ST1122 in FIG. 39) which determines if the scheme is supported, and in that when the scheme is not supported (NO in ST1120 or NO in ST1122 in FIG. 39), a message that advises accordingly is displayed (ST1124 in FIG. 39) upon ending a process. (I) An apparatus using the medium of (G) is characterized by comprising a scheme detection unit (main MPU in FIG. 31; ST209 in FIG. 44 or ST309 in FIG. 58) which checks a scheme of data in the medium, a playback compatibility determination unit (main MPU in FIG. 31; ST210 in FIG. 44 or ST310 in FIG. 58) which determines if the scheme is compatible to a playback process, and in that when the scheme is incompatible (NO in ST210 in FIG. 44 or NO in ST310 in FIG. 58), a message that advises accordingly is displayed (ST211 in FIG. 44 or ST311 in FIG. 58) upon ending a process. (J) An apparatus using a disc as the medium of (G) is characterized by comprising a disc scheme detection unit (main MPU in FIG. 31; ST1120 in FIG. 39) which checks a scheme of data in the disc, a recording data scheme detection unit (main MPU in FIG. 31; ST1116 in FIG. 39) which checks a scheme of data to be recorded, and a determination unit (main MPU in FIG. 31; ST1120 in FIG. 39) which checks if the two schemes are different, and in that when the two schemes are different (NO in ST1120 in FIG. 39), a message that advises accordingly is displayed (ST1124 in FIG. 39) upon ending a process.

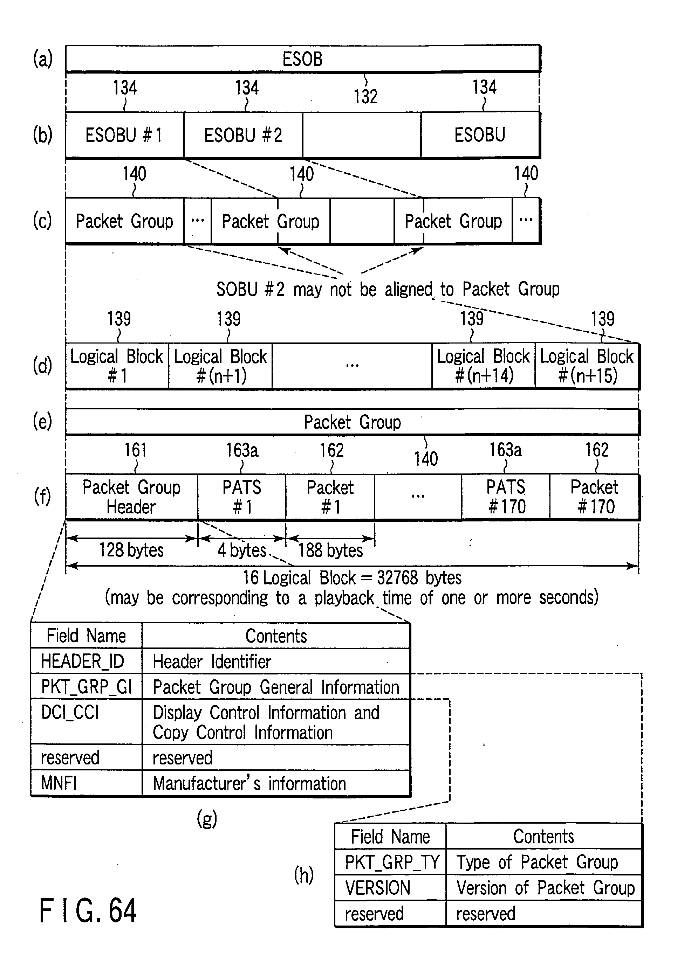

FIG. 64 is a view for explaining another example of the configuration of a data unit (ESOBU) for the stream object (ESOB). The data structure of FIG. 64 may be used in place of that of FIG. 24. In the data structure of FIG. 64, extended stream object ESOB 132 is formed of a plurality of extended stream object unit ESOBU 134 (see FIG. 64(a)(b)). Each ESOBU 134 includes one or more packet groups 140 (see FIG. 64(b) (c)). Here, the boundary between adjacent ESOBUs (e. g., the boundary between ESOBU#1 and ESOBU#2, and/or that between ESOBU#2 and ESOBU#3) may not be corresponding to the boundary between adjacent packet groups 140. In other words, in the example of FIG. 64, ESOBU#2 are not aligned to any of packet groups 140 (see FIG. 64(b) (c)).

Each packet group 140 corresponds to a plurality of logical blocks 139. In the example of FIG. 64(c) (d)(e), one packet group 140 corresponds to 16 logical blocks. The size of one packet group 140 may be corresponding to a playback time of one or more seconds. Packet group 140 is formed of packet group header 161 and a subsequent pairs of time stamp items (PATS) 163a and packets (MPEG-TS) 162. In the example of FIG. 64, one packet group 140 includes one packet group header 161 and 170 pairs of PATSs 163a and packets 162 (see FIG. 64(e)(f)).

Packet group header 161 is configured to include header identifier HEADER_ID, packet group general information PKT_GRP_GI, display control information and copy control information DCI_CCI, and manufacturer's information MNFI (FIG. 64(g)). Packet group general information PKT_GRP_GI is configured to include packet group type information PKT_GRP_TY, and packet group version information VERSION (FIG. 64 (h)).

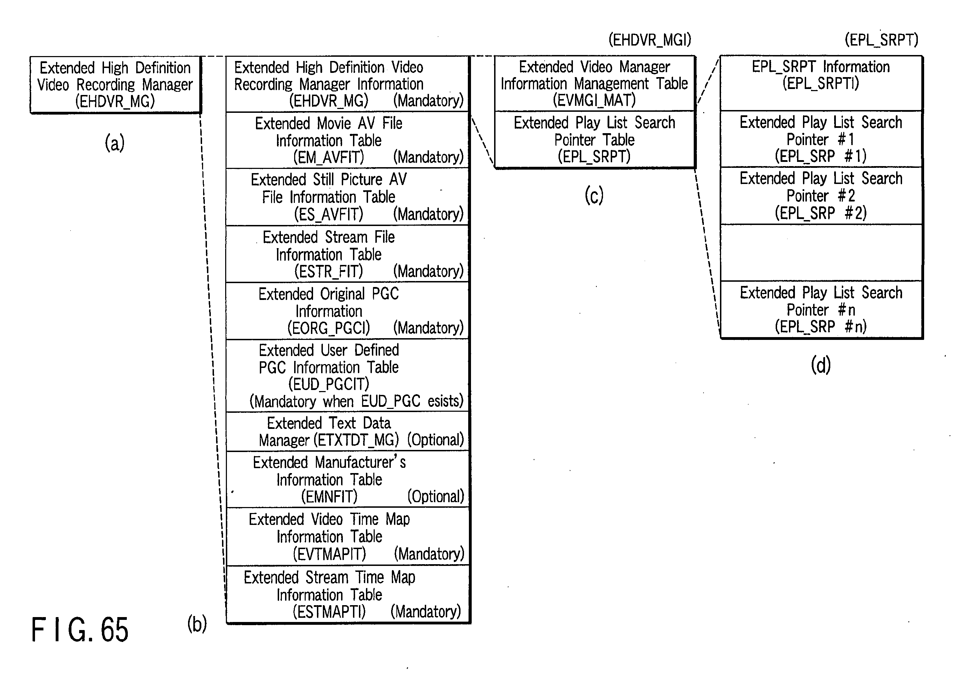

FIG. 65 is a view for explaining another example of the configuration of management information (EHDVR_MG) recorded on AV data management information recording area 130 shown in FIG. 1. The data structure of FIG. 65 may be used in place of (or may be used with) that of FIG. 3 to FIG. 23. In the data structure of FIG. 65, extended high definition video recording manager EHDVR_MG is configured to include extended high definition video recording manager information EHDVR_MGI, extended movie AV file information table EM_AVFIT, extended still picture AV file information table ES_AVFIT, extended stream file information table ESTR_FIT, extended original program chain information EORG_PGCI, extended user defined program chain information table EUD_PGCIT (which is necessary when at least one extended user defined PGC exists), extended text data manager ETXTDT_MG, extended manufacturer's information table EMNFIT, extended video time amp information table EVTMAPIT, and extended stream time map information table ESTMAPIT (FIG. 65 (a)(b)).

Extended high definition video recording manager information EHDVR_MGI is configured to include extended video manager information management table EVMGI_MAT, and extended play list search pointer table EPL_SRPT (FIG. 65(b)(c)). Extended play list search pointer table EPL_SRPT is configured to include extended play list search pointer table information EPL_SRPTI, and one or more extended play list search pointers #1 to #n (FIG. 65(c) (d)).

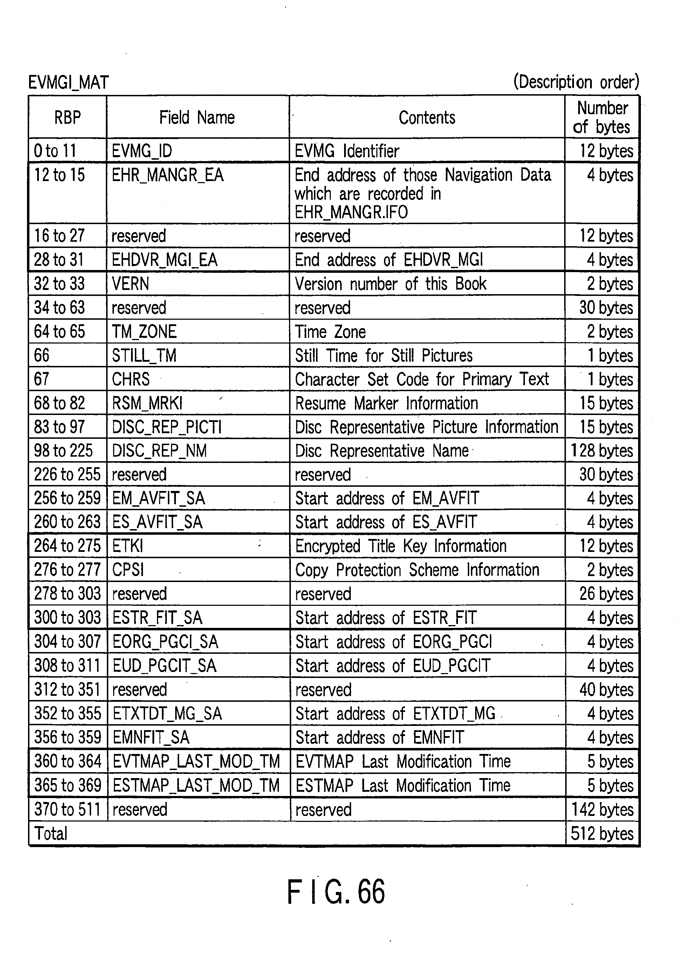

FIG. 66 exemplifies contents of the extended video manager information management table (VMGI_MAT) shown in FIG. 65. Extended video manager information management table VMGI_MAT is configured to include extended video manager identifier VMG_ID, end address EHR_MANGR_EA of those navigation data recorded in control information file EHR_MANGR.IFO, and end address EHDVR_MGI_EA of EHDVR_MGI. VMGI_MAT is configured to further include version number VERN of the Book, time zone TM_ZONE, still time STILL_TM for still pictures, character set code CHRS for a primary text, resume marker information RSM_MRKI, disc representative picture information DISC_REP_PICTI, disc representative name DISC_REP_NM, start address EM_AVFIT_SA of the extended movie AV file information table, and start address ES_AVFIT_SA of the extended still AV file information table.

VMGI_MAT is configured to further include encrypted title key information ETKI, copy protection scheme information CPSI, and start address ESTR_FIT_SA of the extended stream file information table. VMGI_MAT is configured to further include start address EORG_PGCI_SA of the extended original PGC information, start address EUD_PGCIT_SA of the extended user-defined PGC information table, start address TXTDT_MG_SA of the extended text data manager, start address EMNFIT_SA of the extended manufacturer's information table, last modification time EVTMAP_LAST_MOD_TM of the extended video time map, and last modification time ESTMAP_LAST_ MOD_TM of the extended still time map.

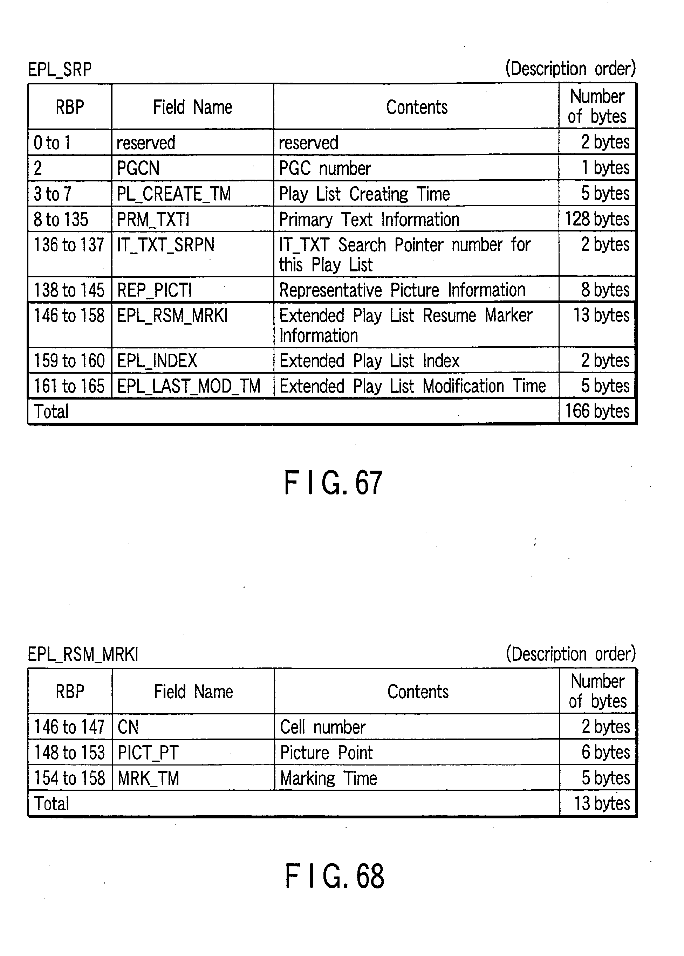

FIG. 67 exemplifies contents of the extended play list search pointer (EPL_SRP) shown in FIG. 65. Extended play list search pointer EPL_SRP is configured to include PGC number PGCN, play list creating time PL_CREATE_TM, primary text information PRM_TXTI, item text search pointer number IT_TXT_ SRPN for this play list, representative picture information REP_PICTI, extended play list resume marker information EPL_RSM_MRKI, extended play list index EPL_INDEX, and extended play list last modification time EPL_LAST_MOD_TM.

FIG. 68 exemplifies contents of the play list resume marker information (EPL_SRP) shown in FIG. 65. Play list resume marker information EPL_SRP is configured to include cell number CN (describing the cell number in which the picture point exists), picture point PICT_PT (describing the picture point in the target cell), and marking time MRK_TM (describing the time when this marker was made).

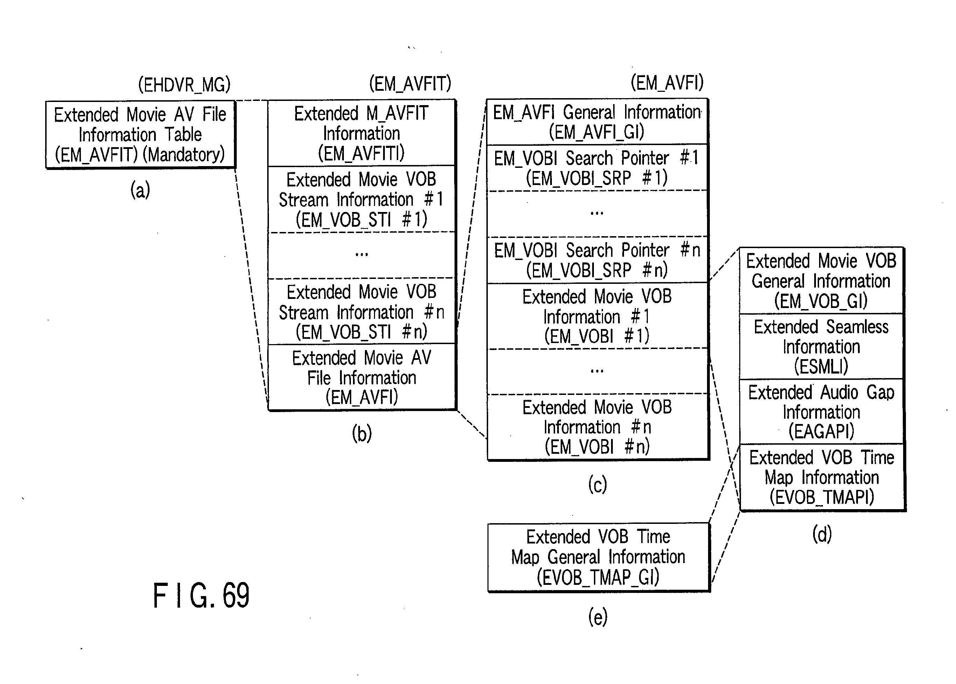

FIG. 69 exemplifies contents of the extended movie AV file information table (EM_AVFIT) shown in FIG. 65. Extended movie AV file information table EM_AVFIT is configured to include extended movie AV file information table information EM_AVFITI, one or more extended movie video object stream information EM_VOB_STI#1 to EM_VOB_STI#n, and extended movie AV file information EM_AVFI (FIG. 69(a)(b)). Extended movie AV file information EM_AVFI is configured to include EM_AVFI general information EM_AVFI_GI, one or more EM_VOBI search pointers EM_VOBI_ SRP#1 to EM_VOBI_SRP#n, and one or more extended movie VOB information EM_VOBI#1 to EM_VOBI#n (FIG. 69(b)(c)). Each EM_VOBI is configured to include extended movie VOB general information EM_VOB_GI, extended seamless information ESMLI, extended audio gap information EAGAPI, and extended VOB time map information EVOB_TMAPI (FIG. 69(c)(d)). This EVOB_TMAPI may comprise extended VOB time map general information EVOB_TMAP_GI (FIG. 69(d)(e)).

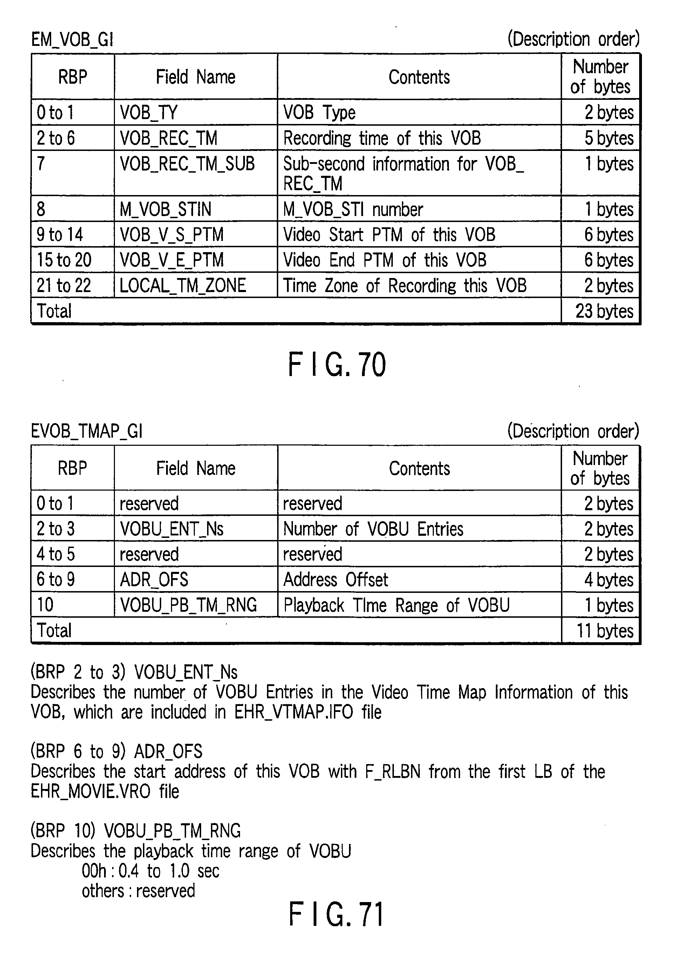

FIG. 70 exemplifies contents of the extended movie video object general information (EM_VOB_GI) shown in FIG. 69. Extended movie video object general information EM_VOB_GI is configured to include VOB type VOB_TY, recording time VOB_REC_TM of this VOB, sub-second information VOB_REC_TM_SUB for VOB_REC_TM, M_VOB_STI number M_VOB_STIN, video start presentation time VOB_V_S_PTM of this VOB, video end presentation time VOB_V_E_PTM of this VOB, and time zone LOCAL_TM_ZONE wherein the VOB has been originally recorded and VOB_REC_TM as well as VOB_REC_TM_SUB have been recorded.

FIG. 71 exemplifies contents of the extended video object time map general information (EVOB_TMAP_GI) shown in FIG. 69. Extended video object time map general information EVOB_TMAP_GI is configured to include number VOBU_ENT_Ns of the VOBU entries, address offset ADR_OFS, and playback time range VOBU_PB_TM_RNG of VOBU. One or more playback time ranges can be specified by VOBU_PB_ TM_RNG. For instance, when VOBU_PB_TM_RNG = 00h, the playback time range is 0.4 to 1.0 second. If VOBU_PB_TM_RNG is 01h, the playback time range may be, e.g., 1.0 to 2.0 seconds. Other time ranges can be specified by VOBU_PB_TM_RNG = 10h or 11h.

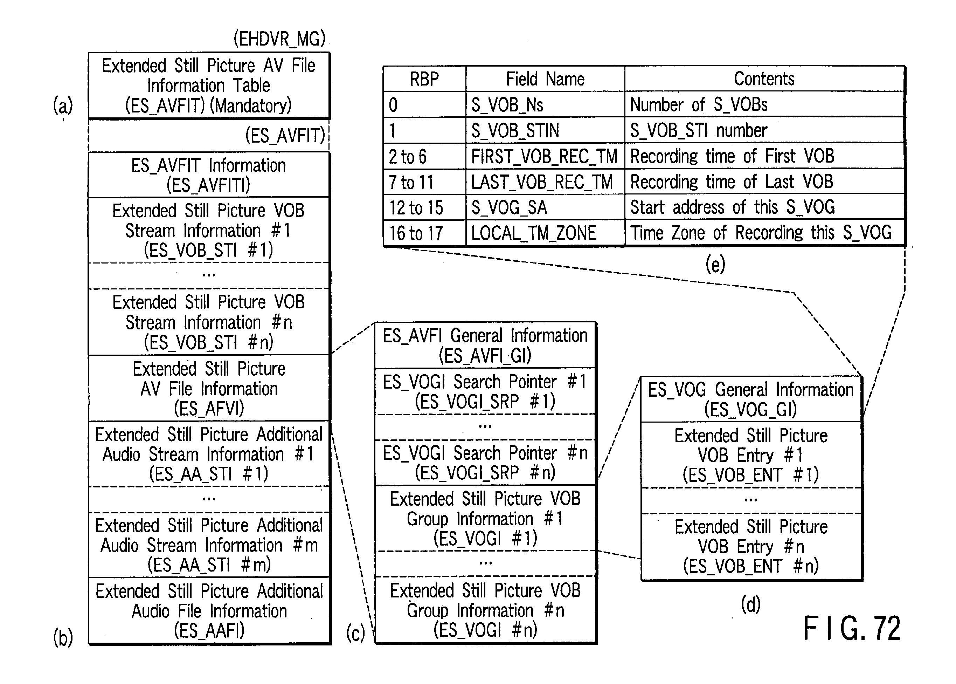

FIG. 72 exemplifies contents of the extended still picture AV file information table (ES_AVFIT) shown. in FIG. 65. Extended still picture AV file information table ES_AVFIT is configured to include extended S_AVFIT information ES_AVFITI, one or more extended still picture VOB stream information ES_VOB_STI#1 to ES_VOB_STI#n, extended still picture AV file information ES_AVFI, one or more extended still picture additional audio stream information ES_AA STI#1 to ES_AA_STI#m, and extended still picture additional audio file information ES_AAFI (FIG. 72(a)(b)). Extended still picture AV file information ES_AVFI is configured to include ES_AVFI general information ES_AVFI_GI, one or more extended still picture video object group information search pointers ES_VOGI_SRP#1 to ES_ VOGI_SRP#n, and one or more extended still picture video object group information ES_VOGI#1 to ES_VOGI#n (FIG. 72 (b) (c)).

Each ES_VOGI is configured to include extended still picture video object group general information ES_VOG_GI, and one or more extended still picture VOB entries ES_VOB_ENT#1 to ES_VOB_ENT#n (FIG. 72(c)(d)). Here, ES_VOG_GI is configured to include number S_VOB_Ns of S_VOBs, S_VOB_STI number S_VOB_STIN, recording time of the first video object FIRST_VOB_REC_TM, recording time of the last video object LAST_VOB_REC_TM, start address of the still picture video object group S_VOG_SA, and time zone LOCAL_TM_ZONE of this S_VOG (FIG. 72(d)(e)).

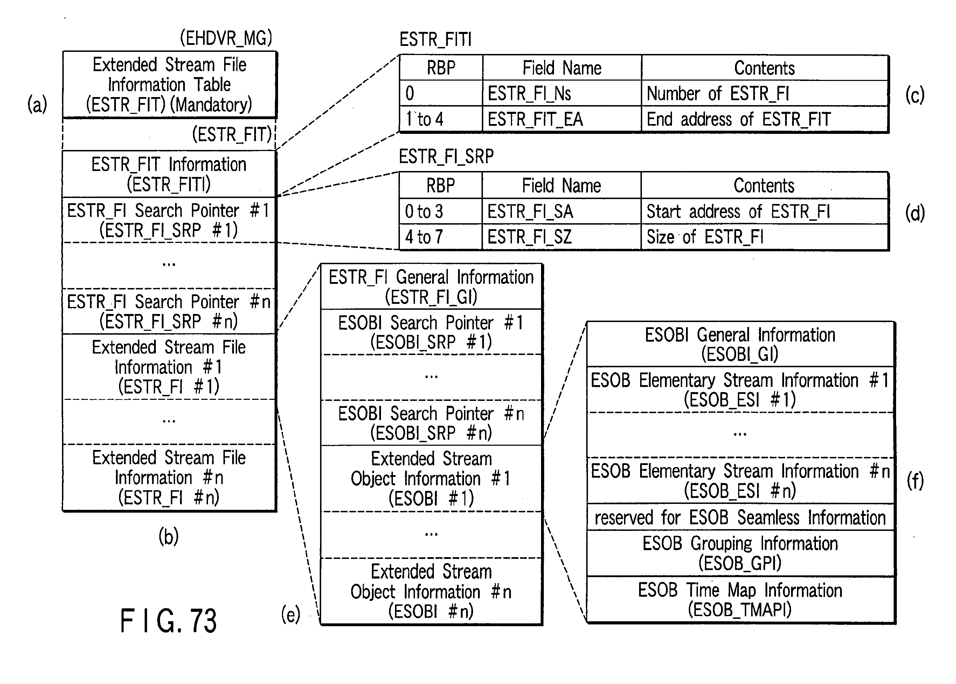

FIG. 73 exemplifies contents of the extended stream file information table (ESTR_FIT) shown in FIG. 65. Extended stream file information table ESTR_FIT is configured to include extended stream file information table information ESTR_FITI, one or more extended stream file information search pointers ESTR_FI_ SRP#1 to ESTR_FI_SRP#n, and one or more extended stream file information ESTR_FI#1 to ESTR_FI#n (FIG.

73(a)(b)). Extended stream file information table information ESTR_FITI is configured to include number ESTR_FI_Ns of ESTR_FI, and end address ESTR_FIT_EA of ESTR_FIT (FIG. 73(b)(c)). Extended stream file information search pointer ESTR_FI_SRP is configured to include start address ESTR_FI_SA of ESTR_FI, and size ESTR_FI_SZ of ESTR_FI (FIG. 73(b)(d)).

Extended stream file information ESTR_FI is configured to include ESTR_FI general information ESTR_FI_GI, one or more extended stream object information search pointers ESOBI_SRP#1 to ESOBI_SRP#n, and one or more extended stream object information ESOBI#1 to ESOBI#n (FIG. 73(b)(e)). Extended stream object information ESOBI is configured to include ESOBI general information ESOBI_GI, one or more extended stream object elementary stream information ESOB_ESI#1 to ESOB_ESI#n, a reserved are for ESOB seamless information, extended stream object grouping information ESOB_GPI, and extended stream object time map information ESOB_TMAPI (FIG. 73(e)(f)).

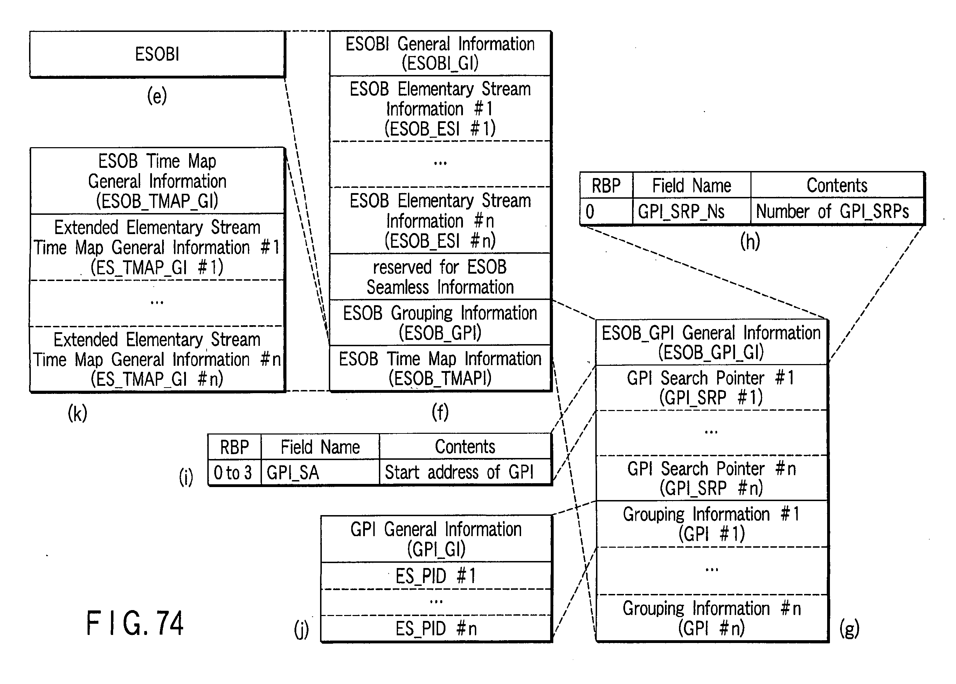

FIG. 74 exemplifies contents of the extended stream object information (ESOBI) shown in FIG. 73. Extended stream object information ESOBI is configured to include ESOBI_GI, ESOB_ESI#1 to ESOB_ESI#n, ESOB seamless information reserved area, ESOB_GPI, and ESOB_TMAPI (FIG. 74(e)(f)). ESOB_GI is configured to include ESOB_GPI general information ESOB_GPI_GI, one or more grouping information search pointers GPI_SRP#1 to GPI_SRP#n, and one or more grouping information GPI #1 to GPI #n (FIG. 74(f)(g)). ESOB_GPI_GI is configured to include number GPI_SRP_Ns of the GPI search pointers (FIG. 74(g)(h)). Each GPI search pointer GPI_SRP is configured to include start address GPI_SA of GPI (FIG. 74 (g)(i)). Each GPI is configured to include GPI general information GPI_GI, and one or more elementary stream PID ES_PID#1 to ES_PID#n (FIG. 74(g)(j)). Meanwhile, ESOB_TIMAPI is configured to include extended stream object time map general information ESOB_TMAP_GI, and one or more extended elementary stream time map general information EES_TMAP_GI#1 to EES_TMAP_GI#n (FIG. 74(f)(k)).

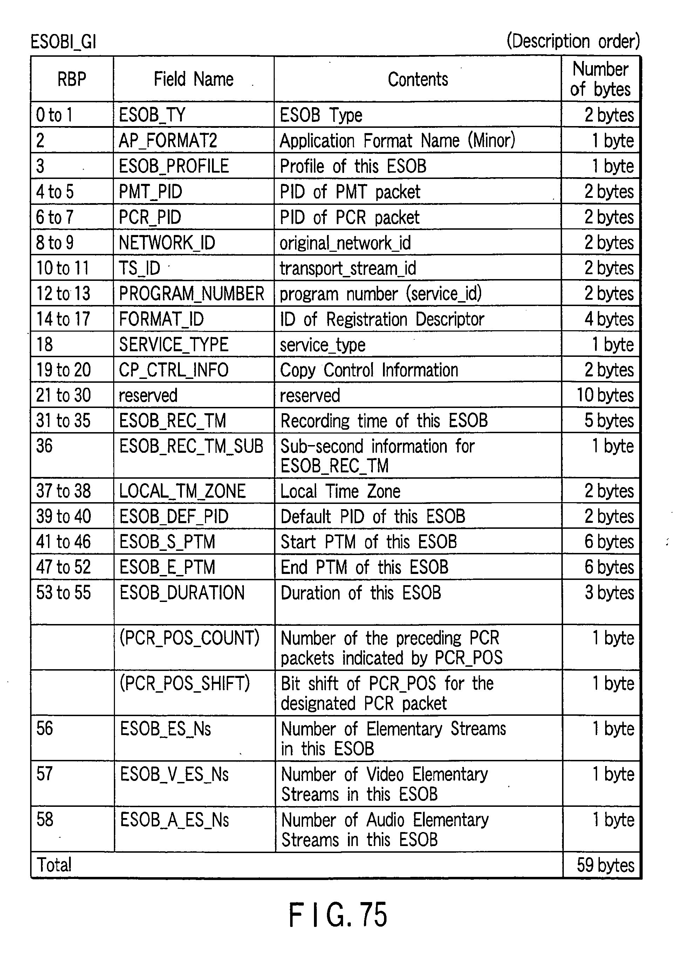

FIG. 75 exemplifies contents of the extended stream object information general information (ESOBI_GI) shown in FIG. 74. Extended stream object information general information ESOBI_GI is configured to include extended stream object type ESOB_TY, application format name (minor) APP_FORMAT2, profile ESOB_PROFILE of this ESOB, PID of PMT packet PMT_PID, PCR of PCR packet PCR_PID, original network identifier NETWORK_ID, transport stream identifier TS_ID, program number (service identifier) PROGRAM_NUMBER, ID of registration descriptor FORMAT_ID, service type SERVICE_TYPE, copy control information CP_CTRL_INFO, recording time ESOB_REC_TM of this ESOB, sub-second information ESOB_REC_TM_SUB for ESOB_REC_TM, local time zone LOCAL_TM_ZONE, default PID "ESOB_DEF_PID" of this ESOB, start presentation time "ESOB_S_PTM" of this ESOB, end presentation time "ESOB_E_PTM" of this ESOB, duration ESOB_DURATION of this ESOB, number (PCR_POS_COUNT) of the preceding PCR packets indicated by PCR_POS, bit shift (PCR_POS_SHIFT) of PCR_POS for the designated PCR packet, number ESOB_ES_Ns of elementary streams in this ESOB, number ESOB_V_ES_Ns of video elementary streams in this ESOB, and number ESOB_A_ES_Ns of audio elementary streams in this ESOB.

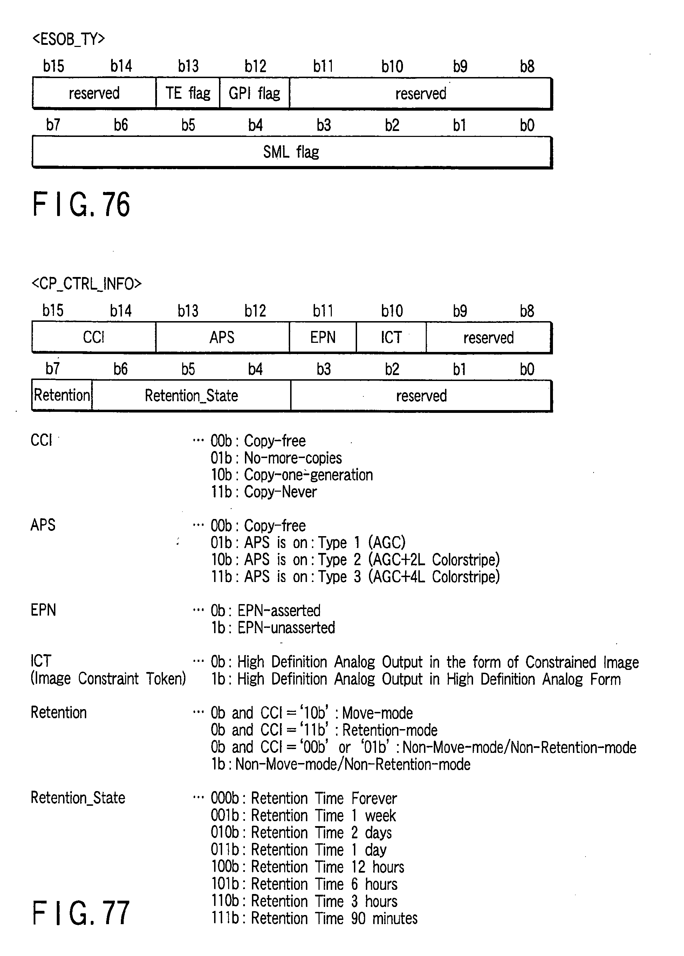

FIG. 76 exemplifies contents of the extended stream object type (ESOB_TY) shown in FIG. 75. Extended stream object type ESOB_TY is configured to include a reserved bit field followed by a temporarily erased state flag (TE flag), a grouping information flag (GPI flag), another reserved bit field, and a seamless flag (SML flag). Here, the TE flag may be used to indicate whether the corresponding ESOB is in a normal state or in a temporarily erased state. An ESOB in the temporarily erased state will not be referred to by a cell in a user defined PGC. An ESOB in the temporarily erased state will not be reproduced in a normal playback operation. The GPI flag may be used to indicate whether the corresponding ESOB is provided with an ESOB elementary stream grouping information.

FIG. 77 exemplifies contents of the copy control information (CP_CTRL_INFO) shown in FIG. 75. Copy control information CP_CTRL_INFO is configured to include a CCI field, an APS field, an EPN field, an ICT field, a retention fled, a retention state field, and reserved field. Bits of the CCI field may be used to specify a copy-free, no more copy, copy one generation (copy once), or copy never. Bits of the APS (analog protection system) field may be used to specify a copy-free, a type 1 APS is on (automatic gain control AGC), a type 2 APS is on (AGC + 2L color stripe), or a type 3 APS is on (AGC + 4L color stripe). A bit of the EPN field may be used to specify an EPN-asserted state, or an EPN-unasserted state. When the EPN-asserted state is specified, contents of the corresponding ESOB are prevented from being output (especially internet-output). When the EPN-unasserted state is specified, contents of the corresponding ESOB are not prevented from being output. A bit of the ICT (image constraint token) field may be used to specify a high definition analog output in the form of a constraint image, or a high definition analog output in a high definition analog form. A bit of the retention field may be used, with a combination of the CCI field, to specify a movie mode (retention = 0b and CCI = 10b), a retention mode (retention = 0b and CCI = 11b), a non-movie mode/non-retention mode (retention = 0b and CCI = 00b or 01b), or a non-movie mode/non-retention mode (retention = 1b). Bits of the retention state field may be used to specify the retention time forever, the retention time one week, the retention time two days, the retention time one day, the retention time 12 hours, the retention time 6 hours, the retention time 3 hours, or the retention time 90 minutes.

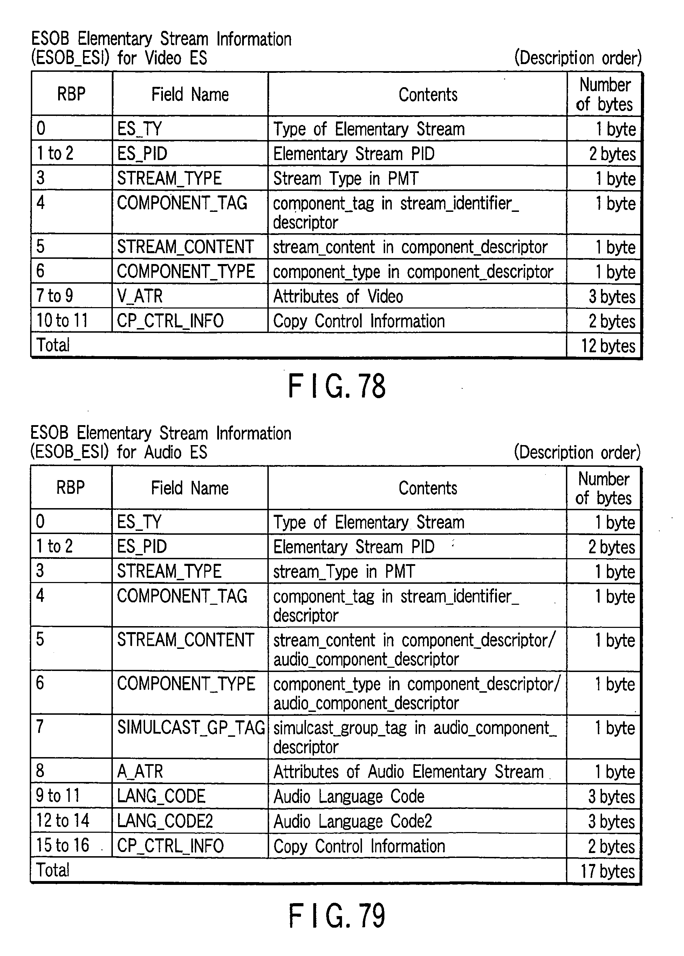

FIG. 78 exemplifies contents of extended stream object elementary stream information (ESOB_ESI for video ES) shown in FIG. 74. Extended stream object elementary stream information ESOB_ESI for video ES is configured to include type ES_TY of the elementary stream, PID of the elementary stream ES_PID, stream type STREAM_TYPE in PMT, component tag COMPONENT_TAG in the stream identifier descriptor, stream content STREAM_CONTENT in the component descriptor, component type COMPONENT_TYPE in the component descriptor, attributes of video V_ATR, and copy control information CP_CTRL_INFO.

FIG. 79 exemplifies contents of extended stream object elementary stream information (ESOB_ESI for audio ES) shown in FIG. 74. Extended stream object elementary stream information ESOB_ESI for audio ES is configured to include type ES_TY of the elementary stream, PID of the elementary stream ES_PID, stream type STREAM_TYPE in PMT, component tag COMPONENT_TAG in the stream identifier descriptor, stream content STREAM_CONTENT in the component descriptor/audio component descriptor, component type COMPONENT_TYPE in the component descriptor/ audio component descriptor, simulcast group tag SIMULCAST_GP_TAG in the audio component descriptor, attributes of audio elementary stream A_ATR, audio language code LANG_CODE, second audio language code LANG_CODE2 , and copy control information CP_CTRL_INFO.

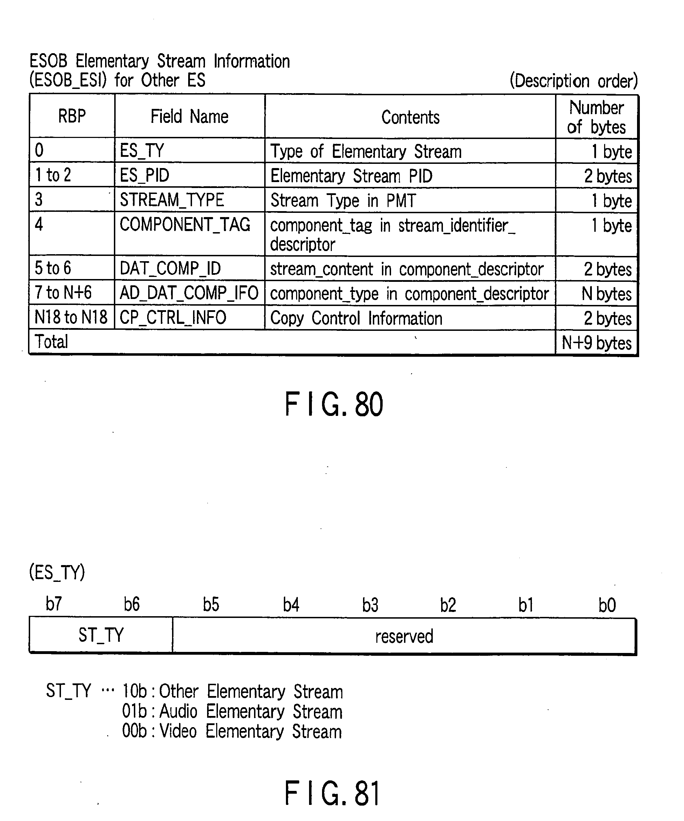

FIG. 80 exemplifies contents of extended stream object elementary stream information (ESOB_ESI for other ES) shown in FIG. 74. Extended stream object elementary stream information ESOB_ESI for other ES is configured to include type ES_TY of the elementary stream, PID of the elementary stream ES_PID, stream type STREAM_TYPE in PMT, component tag COMPONENT_TAG in the stream identifier descriptor, data component ID "DAT_COMP_ID" in the data component descriptor or data content descriptor for this other elementary stream in case of the ARIB standard, additional data component information "AD_DAT_COMP_IFO" in the data component descriptor for this other elementary stream in case of the ARIB standard, and copy control information CP_CTRL_INFO.

FIG. 81 exemplifies contents of stream type information (ES_TY) shown in each of FIGS. 59 to 61. Stream type information ES_TY is configured to include a field of stream type ST_TY. Bits of the ST_TY field may be used to specify the video elementary stream, audio elementary stream, or other elementary stream.

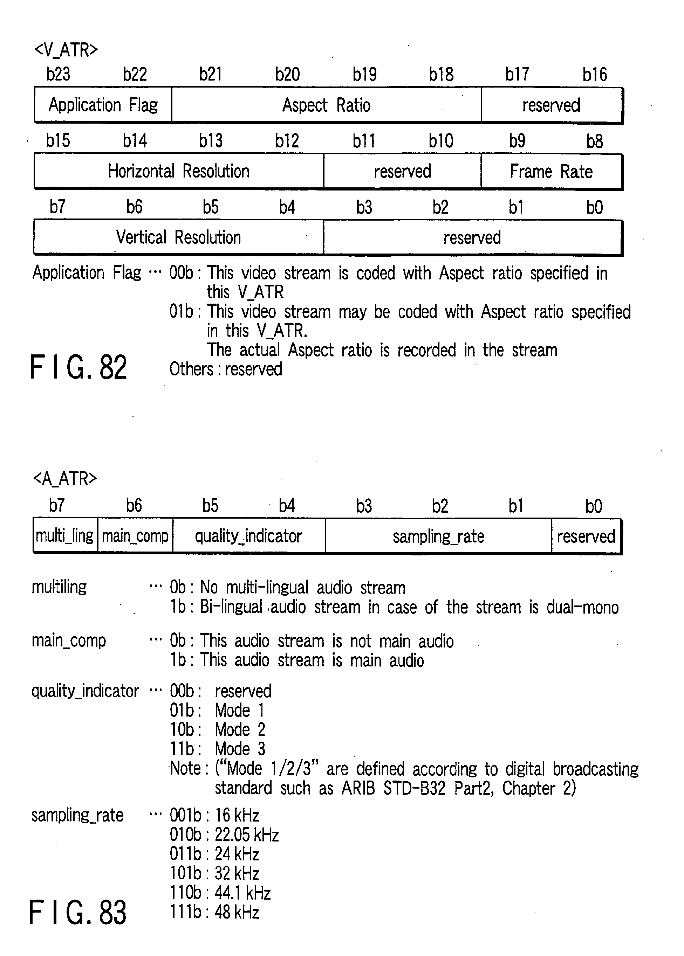

FIG. 82 exemplifies contents of the video attribute information (V_ATR) shown in FIG. 78. Video attribute information V_ATR is configured to include an application flag field, an aspect ratio field, a reserved field, a horizontal resolution field, another reserved field, a frame rate field, a vertical resolution field, and still another reserved field. Here, bits of the application flag field can be used to specify a first state in which the video stream is coded with the aspect ratio specified in the V_ATR, and a second state in which the video stream may be coded with the aspect ratio specified in the V_ATR. In the second state, the actual aspect ratio may be recorded in the corresponding stream. The bits of the application flag field can also be used to specify other (reserved) state.

FIG. 83 exemplifies contents of the audio attribute information (A_ATR) shown in FIG. 79. Audio attribute information A_ATR is configured to include a multi-lingual field (multi_ling), a main component field (main_comp), a quality indicator field (quality_indicator), a sampling rate field (sampling_rate), and a reserved field. Here, a bit of the multi-lingual field may be used to specify a no multi-lingual audio stream, or a bilingual audio stream in case where the stream is a dual mono. A bit of the main component field may be used to specify a case in which the audio stream is not a main audio, or another case in which the audio stream is the main audio. Bits of the quality indicator field may be used to specify a reserved state, a mode 1 state, a mode 2 state, or a mode 3 state (note that the mode 1 state to mode 3 state may be defined according to a digital broadcasting standard such as "ARIB STD-B32 Part 2, Chapter 2.") Bits of the sampling rate field may be used to specify a sampling frequency of 16 kHz, 22.05 kHz, 24 kHz, 32 kHz, 44.1 kHz, or 48 kHz.

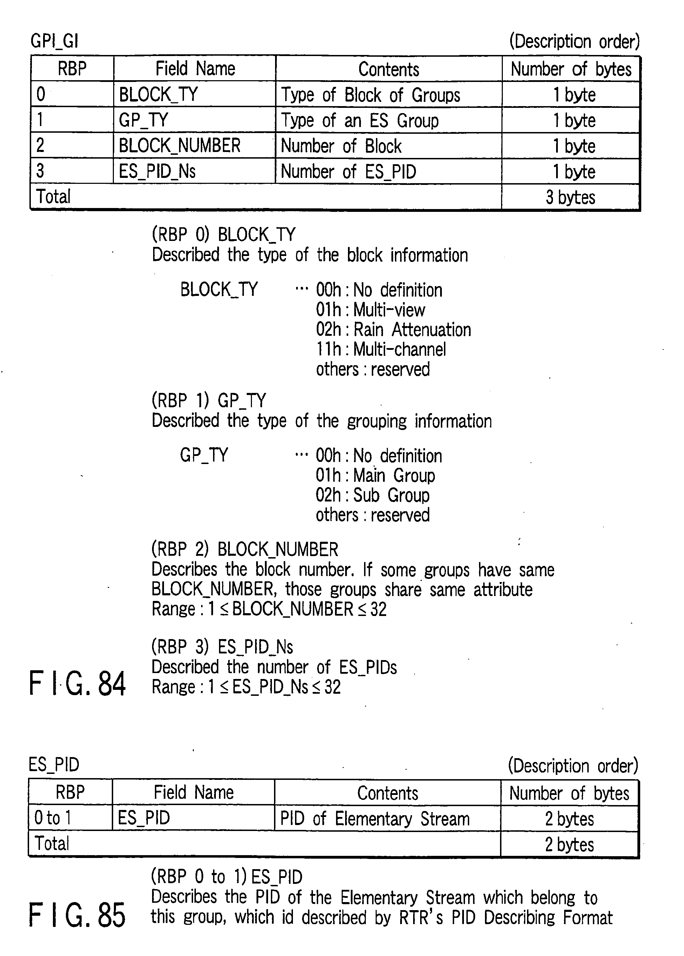

FIG. 84 exemplifies contents of the grouping information general information (GPI_GI) shown in FIG. 74. Grouping information general information GPI_GI is configured to include type BLOCK_TY of a block of groups, type GP_TY of an ES group, block number BLOCK_NUMBER, and number of the ES_PIDs "ES_PID_Ns." Here, bits of BLOCK_TY may be used to specify a no definition state, a multi-view state, a rain attenuation state, a multi-channel state, or other reserved states. Bits of GP_TY may be used to specify no definition, a main group, a sub-group, or other reserved ones. The range of BLOCK_NUMBER may be any of 1 to 32. The range of ES_PID_Ns may be any of 1 to 32.

FIG. 85 exemplifies contents of the elementary stream packet identifier (ES_PID) shown in FIG. 74. Elementary stream packet identifier ES_PID is configured to include a PID of elementary stream "ES_PID." This ES_PID describes the PID of the elementary stream belonging to the corresponding group.

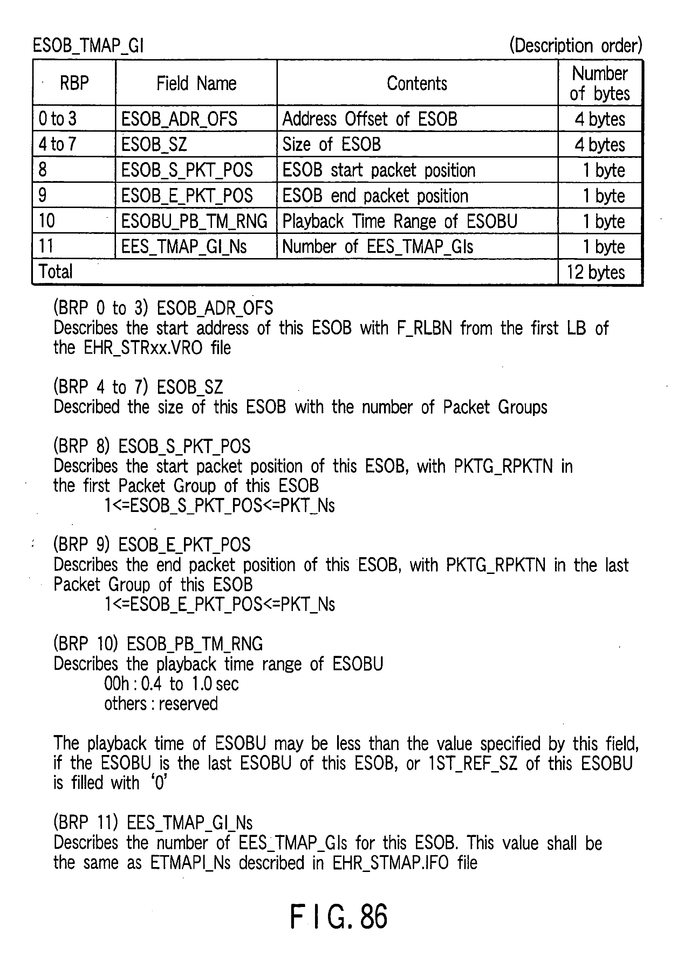

FIG. 86 exemplifies contents of the extended stream object time map general information (ESOB_TMAP_GI) shown in FIG. 74. Extended stream object time map general information ESOB_TMAP_GI is configured to include address offset ESOB_ADR_OFS of the ESOB, size ESOB_SZ of the ESOB, ESOB start packet position ESOB_S_PKT_POS, ESOB end packet position ESOB_E_PKT_POS, playback time range ESOBU_PB_TM_RNG of the ESOBU, and number EES_TMAP_GI_Ns of the extended elementary stream time map general information items (EES_TMAP_GIs).

Here, ESOB_ADR_OFS may be used to indicate the start address of the corresponding ESOB from the first logical block of an extended high-resolution stream video recording object file (EHR_STRxx.VRO file; not shown). ESOB_SZ may be used to indicate the size of the corresponding ESOB with the number of packet groups. In other words, the size of ESOB may be described in unit of a packet group.

ESOB_S_PKT_POS may be used to indicate the start packet position of the corresponding ESOB from the first packet group of this ESOB, where the value of ESOB_S_PKT_POS may be any of 1 to PKT_Ns. ESOB_E_PKT_POS may be used to indicate the end packet position of the corresponding ESOB from the last packet group of this ESOB, where the value of ESOB_E_PKT_POS may be any of 1 to PKT_Ns.

ESOBU_PB_TM_RNG may be used to indicate the playback time range of the corresponding ESOBU. More specifically, when ESOBU_PB_TM_RNG = 00h, the playback time range may be 0.4 to 1.0 second, for example. If ESOBU_PB_TM_RNG is 01h, the playback time range may be, e.g., 1.0 to 2.0 seconds, for example. Other time ranges may be specified by ESOBU_PB_TM_RNG = 10h or 11h.

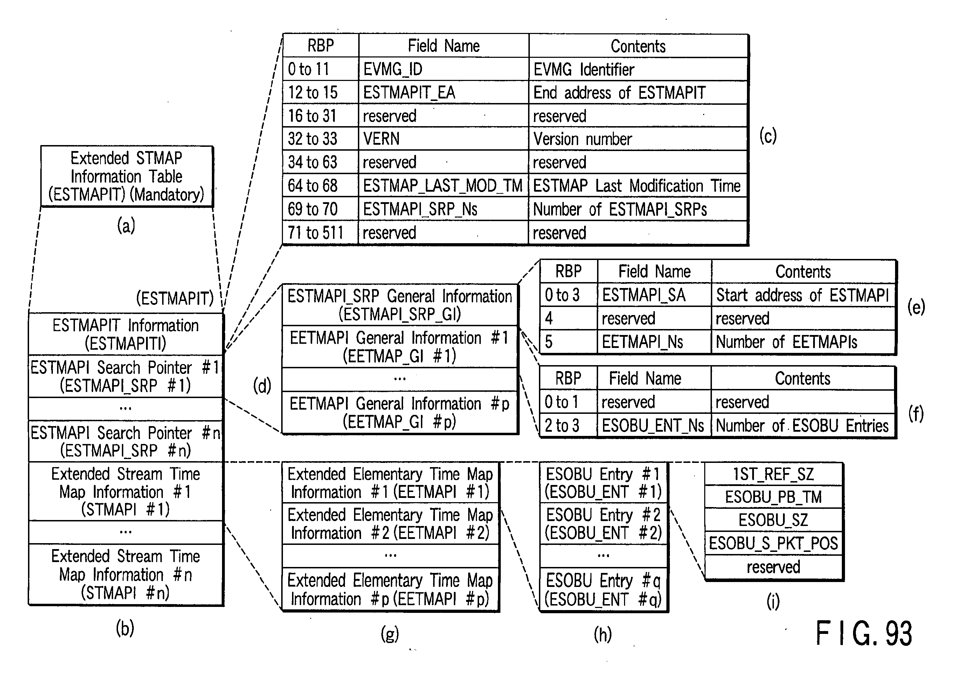

EES_TMAP_GI_Ns may be used to indicate the number of extended elementary stream time map general information items (EES_TMAP_GIs) for the corresponding ESOB. EES_TMAP_GI_Ns (corresponding to the number of EES_TMAP_GI#1 to EES_TMAP_GI#n in FIG. 74(k)) is selected to be the same as the number (ETMAPI_Ns described in, e.g., extended HR_STMAP.IFO file: not shown) of extended elementary time map information items (corresponding to ESTMAPI#1 to ESTMAPI#n in FIG. 93(b)).

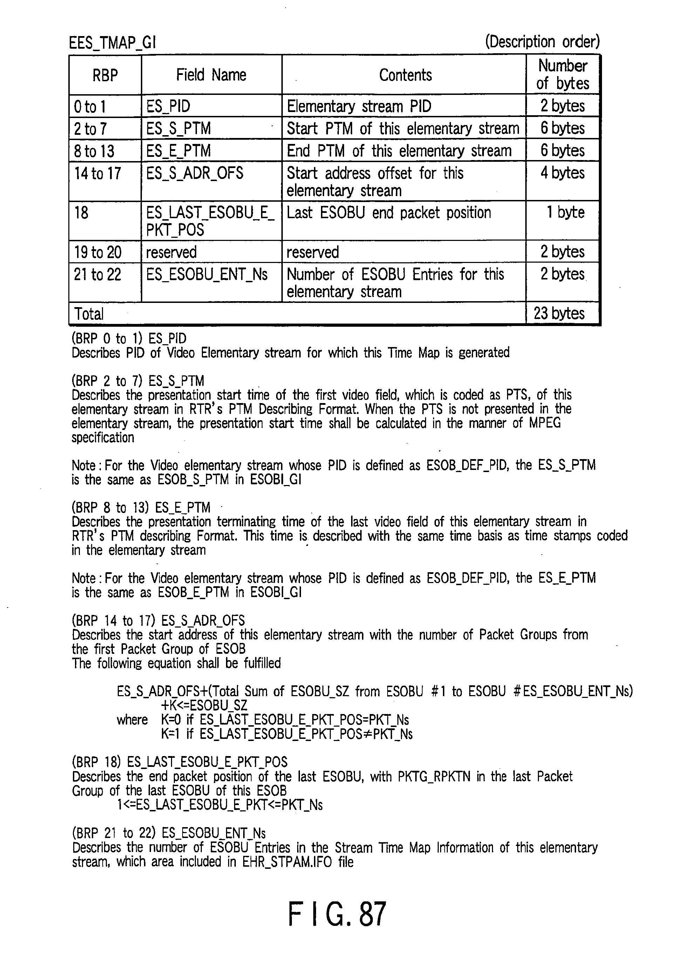

FIG. 87 exemplifies contents of the extended elementary stream time map general information (EES_TMAP_GI) shown in FIG. 74. Extended elementary stream time map general information EES_TMAP_GI is configured to include elementary stream PID "ES_PID", start presentation time "ES_S_PTM" of the corresponding elementary stream, end presentation time "ES_E_PTM" of the corresponding elementary stream, start address offset "ES_S_ADR_OFS" for the corresponding elementary stream, last ESOBU end packet position "ES_LAST_ESOBU_E_PKT_POS", and number "ES_ESOBU_ENT_Ns" of ESOBU entries for the corresponding elementary stream.

Here, ES_PID may be used to indicate the PID (packet identifier) of a video elementary stream for which the corresponding time map is generated. ES_S_PTM may be used to indicate the presentation start time (coded as presentation time stamp PTS) of the first video field of the corresponding elementary stream. ES_E_PTM may be used to indicate the presentation terminating time of the last video field of the corresponding elementary stream. ES_S_ADR_OFS may be used to indicate the start address of the corresponding elementary stream, with the number of packet groups from the first packet group of the ESOB. ES_LAST_ESOBU_E_PKT_POS may be used to indicate the end packet position of the last ESOBU, with the packet number (e.g., any one of 1 to 170 in the embodiment of FIG. 64(f)), in the last packet group of the corresponding ESOB. ES_ESOBU_ENT_Ns may be used to indicate the number of ESOBU entries (which are included in, e.g., the extended HR_STMAP.IFO file, not shown) in the extended stream time map information of the corresponding elementary stream.

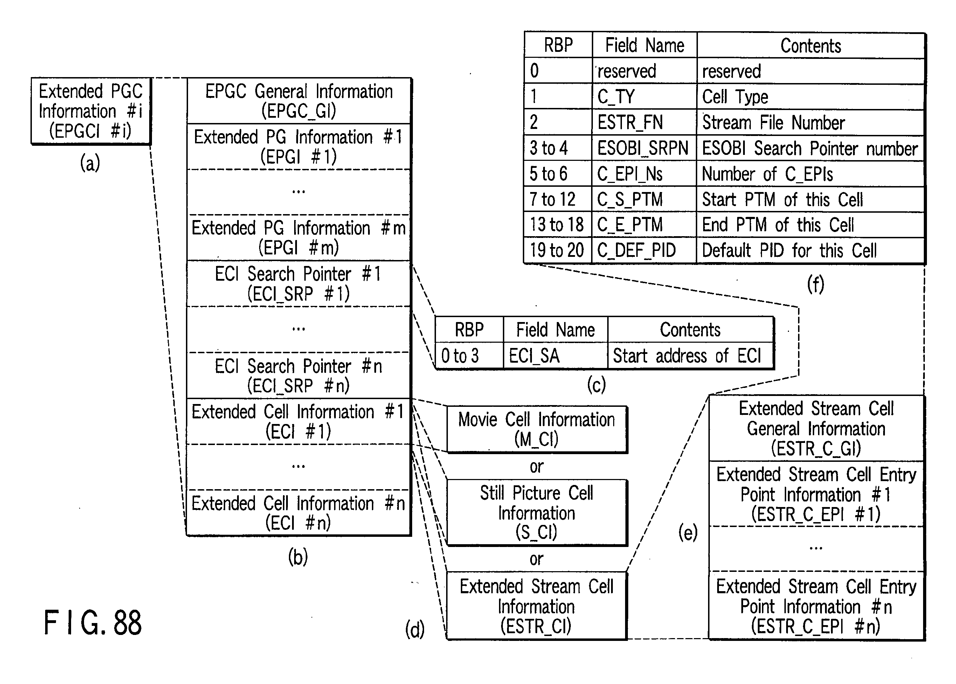

FIG. 88 exemplifies contents of the extended program chain information (EPGCI; or extended original PGC information EORG_PGCI) shown in FIG. 65. Extended program chain information EPGCI is configured to include extended program chain general information (EPGC_GI), extended program information #1 (EPGI#1) to extended program information #m (EPGI#m), extended cell information search pointer #1 (ECI_SRP#1) to extended cell information search pointer #n (ECI_SRP#n), and extended cell information #1 (ECI#1) to extended cell information #n (ECI#n) (FIG. 88(a)(b)). Each of ECI_SRP#1 to ECI_SRP#n may include start address ECI_SA of the corresponding ECI (FIG. 88(b)(c)). Incidentally, EPGCI is extended management information for managing PGC which comprises one or more programs each including one or more cells.

Here, there are three types of the extended cell information ECI; movie cell information M_CI, still picture cell information S_CI, and extended stream cell information ESTR_CI (FIG. 88(b)(d)). The data structure of M_CI and S_CI may be substantially the same as those of the current DVD Video Recording standard. Meanwhile, the data structure of ESTR_CI differs therefrom. More specifically, ESTR_CI is configured to include extended stream cell general information ESTR_C_GI, and one or more extended stream cell entry point information items #1 to #n (ESTR_C_EPI#1 to ESTR_C_EPI#n) (FIG. 88(d)(e)). Extended stream cell general information ESTR_C_GI may be configured to include cell type C_TY, stream file number ESTR_FN, extended stream object information search pointer number ESOBI_SRPN, number C_EPI_Ns of the C_EPIs, start PTM "C_S_PTM" of the corresponding cell, end PTM "C_E_PTM" of the corresponding cell, and default PID of the corresponding cell (FIG. 88(e)(f)).

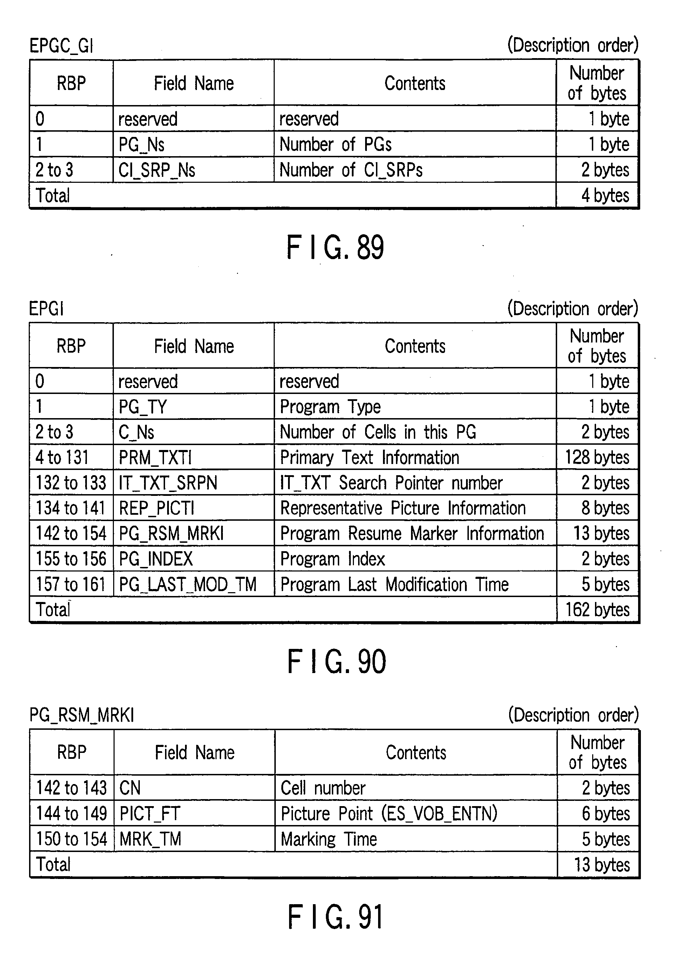

FIG. 89 exemplifies contents of the extended program chain general information (EPGCI_GI) shown in FIG. 88. Extended program chain general information EPGCI_GI is configured to include number PG_Ns of the programs in the corresponding extended PGC, and number CI_SRP_Ns of the extended CI_SRPs in the corresponding extended PGC. In case of the extended user defined PGC, this PG_Ns is set to '0'. In case of the extended original PGC, this PG_Ns may be any one of 1 to 99. The maximum number of this CI_SRP_Ns may be '1998' which is the sum of '999' for movie cells and '999' for still picture cells.

FIG. 90 exemplifies contents of the extended program information (EPGI) shown in FIG. 88. Extended program information EPGI is configured to include program type PG_TY, number C_Ns of the cells in the corresponding program, primary text information PRM_TXTI for this program, item text information search pointer number IT_TXT_SRPN indicating an item text whose text data may correspond to this program, representative picture information REP_PICTI, program resume marker information PG_RSM_MRKI, program index PG_INDEX, and program last modification time PG_LAST_MOD_TM describing the time when the corresponding program was modified last.

Here, PG_TY may be used to include protect information indicating whether the corresponding program is in a protected state. If the program is in the protected state, all data object referred to and used in the presentation (playback) of the program should not be erased temporarily or permanently.

REP_PICTI may be used to include cell number CN and picture point PICT_PT. The CN may describe the cell number in which the corresponding picture point (PICT_PT) exists. The PICT_PT may indicate the picture point in the target cell, using the presentation time (PTM).

PG_INDEX may be used to indicate the index number of the corresponding program. PG_INDEX is a unique number assigned to each program. Two or more programs should not have the same PG_INDEX value. Whenever creating a new program, unused available index value may be searched and described in PG_INDEX. The value of PG_INDEX may be kept unchanged until the corresponding program is deleted. The value of PG_INDEX may be kept unchanged when the corresponding program is modified. The value of PG_INDEX may be kept unchanged when other programs are deleted and/or newly created.

FIG. 91 exemplifies contents of the program resume marker information (PG_RSM_MRKI) shown in FIG. 90. Program resume marker information PG_RSM_MRKI is configured to include cell number CN, picture point PICT_PT, and marking time MRK_TM. The CN may describe the cell number in which the picture point (PICT_PT) exists. The PICT_PT may describe the picture point in the target cell. The MRK_TM may describe the time when the corresponding marker was made. In short, PG_RSM_MRKI may be used to include a resume marker of the corresponding program. PG_RSM_MRKI should not refer to the data object in a temporarily erased state.

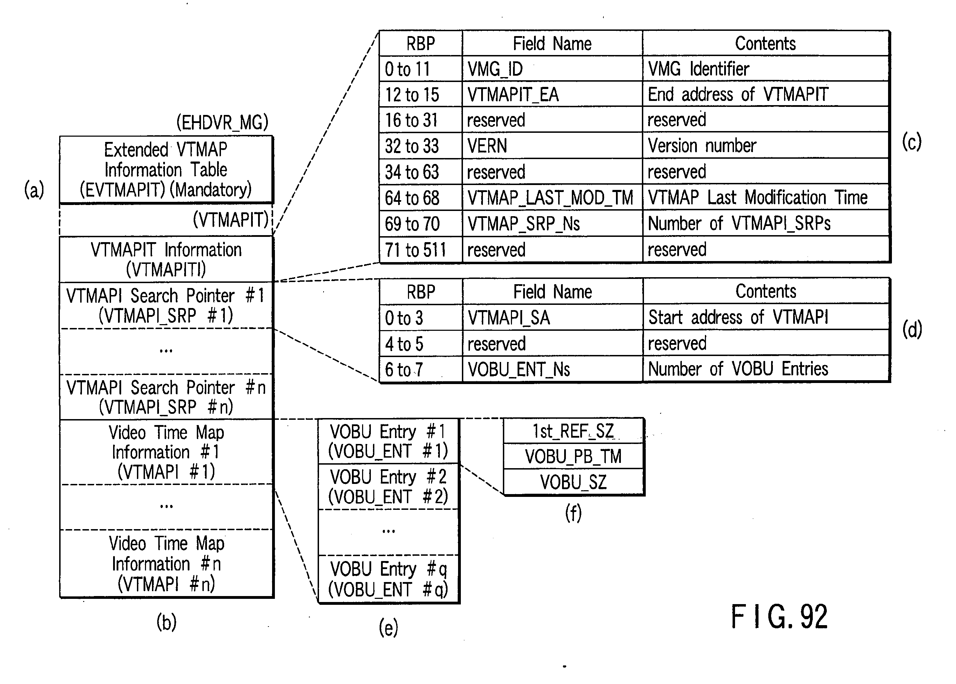

FIG. 92 exemplifies contents of the extended video time map information table (EVTMAPIT) shown in FIG. 65. Extended video time map information table EVTMAPIT is configured to include video time map information table information VTMAPITI, one or more video time map information search pointers #1 to #n (VTMAPI_SRP#1 to VTMAPI_SRP#n), and one or more video time map information items #1 to #n (VTMAPI#1 to VTMAPI#n) (FIG. 92 (a) (b) ) .

Here, VTMAPITI may be used to include video manager identifier VMG_ID, end address VTMAPIT_EA of video time map information table VTMAPIT, version number VERN of the used standard (e.g., DVD EHD_VR standard), last modification time VTMAP_LAST_MOD_TM of video time map VTMAP, and number VTMAPI_SRP_Ns of video time map information search pointers (FIG. 92(b)(c)). VMG_ID may be used to describe "DVD_EHR_VTMAP" to identify a video time map file (EHR_VTMAP.IFO; not shown) with character set code of ISO/IEC 646:1983. VTMAP_LAST_MOD_TM may be used to describe the time when the content of EHR_VTMAP.IFO was modified last.

Each VTMAPI_SRP may include start address VTMAPI_SA of VTMAPI, and number VOBU_ENT_Ns of VOBU entries shown in FIG. 92 (e) (FIG. 92(b)(d)). Each VTMAPI may include one or more VOBU entries #1 to #q (VOBU_ENT#1 to VOBU_ENT#q) (FIG. 92(b) (e)). Each VOBU_ENT may include first reference picture size 1ST_REF_SZ of the corresponding video object unit VOBU, playback time VOBU_PB_TM of the corresponding VOBU, and size VOBU_SZ of the corresponding VOBU (FIG. 92(e)(f)).

FIG. 93 exemplifies contents of the extended stream time map information table (ESTMAPIT) shown in FIG. 65. Extended stream time map information table ESTMAPIT is configured to include extended stream time map information table information ESTMAPITI, one or more extended stream time map information search pointers #1 to #n (ESTMAPI_SRP#1 to ESTMAPI_SRP#n), and one or more extended stream time map information items #1 to #n (ESTMAPI#1 to ESTMAPI#n) (FIG. 93(a) (b)).

Here, ESTMAPITI may be used to include extended video manager identifier EVMG_ID, end address ESTMAPIT_EA of the extended stream time map information table, version number VERN of the used standard (e.g., DVD EHD_VR standard), last modification time ESTMAP_LAST_MOD_TM of extended stream time map ESTMAP, and number ESTMAPI_SRP_Ns of extended stream time map information search pointers (FIG. 93(b)(c)). EVMG_ID may be used to describe "DVD_EHR_STMAP" to identify a stream time map file (EHR_STMAP.IFO; not shown) with character set code of ISO/IEC 646:1983. ESTMAP_LAST_MOD_TM may be used to describe the time when the content of EHR_STMAP.IFO was modified last.

Each ESTMAPI_SRP may include extended stream time map information search pointer general information ESTMAPI_SRP_GI, and one or more extended elementary time map information general information items #1 to #p (EETMAPI_GI#1 to EETMAPI_GI#p) (FIG. 93(b)(d)). Here, ESTMAPI_SRP_GI may be used to include start address ESTMAPI_SA of ESTMAPI, and number EETMAPI_Ns of extended elementary time map information items (EETMAPIs shown in FIG. 93(g)) (FIG. 93(d)(e)). Each EETMAPI_GI may be used to include number ESOBU_ENT_Ns of extended stream object unit entries (ESOBU_ENTs in FIG. 93(h)) (FIG. 93 (d)(f)). Each ESTMAPI may include extended elementary time map information items #1 to #p (EETMAPI#1 to EETMAPI#p) (FIG. 93(b)(g)). Each EETMAPI may be configured to include one or more extended SOBU entries #1 to #q (ESOBU_ENT#1 to ESOBU_ENT#q) (FIG. 93(g) (h)).

Each ESOBU_ENT may be configured to include first reference picture size 1ST_REF_SZ of the corresponding ESOBU, playback time ESOBU_PB_TM of the corresponding ESOBU, size ESOBU_SZ of the corresponding ESOBU, and start packet position ESOBU_S_PKT_POS of the corresponding ESOBU (FIG. 93(h)(i)). This ESOBU_S_PKT_POS may be used to describe the start packet position of the corresponding ESOBU, with the relative packet number (PKTG_RPKTN) in the first packet group of the corresponding ESOBU. The value of ESOBU_S_PKT_POS may be any one of 1 to PKT_Ns (number of packets in the packet group).

Note that the present invention is not limited to the aforementioned embodiments, and various modifications may be made without departing from the scope of the invention when it is practiced. The respective embodiments may be combined as needed as long as such combinations are possible, and combined effects can be obtained in such case. Furthermore, the embodiments include inventions of various stages, and various inventions can be extracted by appropriately combining a plurality of disclosed required constituent elements. For example, even when some required constituent elements are omitted from all required constituent elements described in the embodiment, an arrangement from which the required constituent elements are omitted can be extracted as an invention as long as the problems that have been discussed in the paragraphs of the problems to be solved by the invention, and the effects that have been explained in the paragraphs of the effect of the invention can be obtained.

As described above, according to the present invention, a mechanism which can prevent recording contents of various broadcasting schemes from being recorded on one information recording medium (optical disc or the like) together while supporting various broadcasting schemes can be provided.

**Claims**

1. A recording medium (100) which is configured to record a digital stream signal complying with a predetermined digital broadcasting scheme, **characterized in that** the recording medium has a management area (130) and data area (122, 131), the data area is configured to be able to record data of the digital stream signal as a plurality of objects (ESOB), and management information (ESOBI etc.) to be recorded on the management area includes specific information (APP_NAME) in which a value corresponding to a broadcasting scheme to be recorded is set.

2. A medium according to claim 1, **characterized in that** the specific information (APP_NAME) includes at least one of first information (Authority ID) indicating a type of the digital broadcasting scheme, second information (Packet Format) indicating a packet format of the digital stream signal, third information (Country ID) indicating a service country or region of digital broadcast, fourth information (NETWORK ID) indicating a network identifier, and fifth information (Version of Broadcasting) indicating a version of the broadcasting scheme, provided that the first information (Authority ID) be included at minimum.

3. A method of initializing an information recording medium as defined in claim 1, **characterized by** comprising:

   generating (ST1026 in FIG. 37) management information used to manage recording and/or playback of the digital stream signal; and setting (ST1026 in FIG. 37) a value corresponding to the broadcasting scheme to be recorded in the specific information included in the management information.

4. A recording pre-processing method using an information recording medium as defined in claim 1, **characterized by** comprising:

   checking (ST1116 in FIG. 39) a broadcasting scheme of the digital stream signal to be recorded; and aborting (ST1124 in FIG. 39), when (NO at ST1120 in FIG. 39) another digital stream signal is already recorded on the data area and a broadcasting scheme of the already recorded digital stream signal, which is detected from the specific information, is different from the broadcasting scheme of the digital stream signal to be recorded, recording of the digital stream signal to be recorded.

5. A management information setting method of an information recording medium as defined in claim 1, **characterized by** comprising:

   checking (ST1512 in FIG. 42) the broadcasting scheme to be recorded; and

setting (ST1512 in FIG. 42) a value corresponding to the checked broadcasting scheme in the specific information included in the management information.

6. A playback processing method of an information recording medium as defined in claim 1, **characterized by** comprising:

reading out (ST209 in FIG. 44) the broadcasting scheme of the already recorded digital stream signal from the specific information; and executing (ST220 in FIG. 45), only when (YES at ST210 in FIG. 44) the broadcasting scheme indicated by the readout specific information is a scheme that can be played back, a playback process of the already recorded digital stream signal.

7. A data transfer method of an information recording medium as defined in claim 1, **characterized by** comprising:

reading out (ST309 in FIG. 58) the broadcasting scheme of the already recorded digital stream signal from the specific information; and executing (ST320 in FIG. 59), only when (YES at ST310 in FIG. 58) the broadcasting scheme indicated by the readout specific information is a scheme that can be played back, a transfer process of data corresponding to the already recorded digital stream signal.

8. A method according to claim 3, **characterized in that** the specific information (APP_NAME) includes at least one of first information (Authority ID) indicating a type of the digital broadcasting scheme, second information (Packet Format) indicating a packet format of the digital stream signal, third information (Country ID) indicating a service country or region of digital broadcast, fourth information (NETWORK ID) indicating a type of broadcasting route, and fifth information (Version of Broadcasting) indicating a version of the broadcasting scheme, provided that the first information (Authority ID) be included at minimum.

9. An apparatus for recording a digital stream signal complying with an MPEG transport stream on a medium of claim 1, **characterized by** comprising:

an encoder unit (79 in FIG. 31) configured to record the digital stream signal on a data area of the medium; and a management unit (80 in FIG. 31) configured to record management information on a management area of the medium.

10. An apparatus for playing back an already recorded digital stream signal complying with an MPEG transport stream from a medium of claim 1, **characterized by** comprising:

a management unit (80 in FIG. 31) configured to play back management information from a management area of the medium; and a decoder unit (59 in FIG. 31) configured to play back the digital stream signal from a data area of the medium on the basis of the played back management information.

Disc-shaped information storage medium 100

(a)

(b)

| Lead-in area | Volume/file structure information area | Data area | Lead-out area |
|---|---|---|---|
| 110 | 111 | 112 | 113 |

(c)

| General computer information recording area | AV data recording area | General computer information recording area |
|---|---|---|
| 120 | 121 | 120 |

(d)

| AV data management information recording area | VR object group recording area | EStream object group recording area |
|---|---|---|
| 130 | 122 | 131 |

(e)

| EStream object | EStream object | ... | EStream object |
|---|---|---|---|
| 132 | 132 | | 132 |

(f)

| ESOBU | ESOBU | . . . . . . . . . . . . . . . | ESOBU |
|---|---|---|---|
| 134 | 134 | | 134 |

(g)

| Packet_Group | Packet_Group | . . . . . . . . . . . . . . | Packet_Group |
|---|---|---|---|
| 140 | 140 | | 140 |

Packet_Group length = 8 packets
(or 16 packets)

(h)

| DVD-TS packet recording area |
|---|
| 160 |

(i)

| Packet_Group Header | MPEG-TS packet | IAPAT | MPEG-TS packet | ... | MPEG-TS packet |
|---|---|---|---|---|---|
| 161 | 162 | 163 | 162 | | 162 |

F I G. 1

Program chain (PGC)

11
12 *
13 *

Program
Cell

Playback management information layer 10

Program
13 *
Cell

Program
13   12
Cell   Cell

Program
13   12   13   12   13
Cell   Cell   Cell   Cell   Cell

Playback time : designate playback location of CELL by PTS

Stream object management information layer 20

VOB management information layer 23

VOBI
24
25

VOBUI
VOBUI

VOBUI

25

VOB layer 35

VOB
36

VOBU
37
38

Pack
38

Pack

Stream object layer 30

ESOBI
21

ESOBUI   ESOBUI

ESOBI
ESOBUI   ...   ESOBUI
21

Global information 22

ESOB
132

ESOBU

ESOB
134
ESOBU   ESOBU   ...
140

ESOBU
132

ESOB
ESOBU
134

Packet_Group
140

Packet_Group

Packet_Group
140

16384 bytes

Packet_Group

152 bytes   161

Packet_Group Header

188 bytes   162

TS Packet_1

3 bytes   163

IAPAT

For playback time = 1 sec

140
Packet_Group

162
TS Packet_85

F I G. 2

42

RTR_VMG
(EHDVR_MG) ~130

RTR_VMGI
(EHDVR_MGI) ~1310

...

ESFIT
(ESTR_FIT) ~1320

Program chain information
(ORG_PGCI) ~1330

Playlist information
(UD_PGCIT/PL_SRPT) ~1340

...

1311~ Disc management identification information (VMG_ID/ESMG_ID)

...

1312~ Version information
(VERN)

...

1313~ EStream object management information start address
(ESFIT_SA) (ESTR_FIT_SA)

...

1315~ Program chain information start address (ORG_PGCI_SA)

1316~ Playlist information start address (UD_PGCI_SA)

**F I G. 3**

1321 ~ ESFITI (ESFITI_GI)

1322 ~ ESOB_STI #1

...

1322 ~ ESOB_STI #m

1323 ~ ESFI

Number of ESOBs ~13211

Number of ESOB_STIs ~13212

End Address of ESFIT ~13213

ESFI_GI ~13231

ESOBI_SRP #1 ~13232

...

ESOBI_SRP #m ~13232

ESOBI #1 ~13233

...

ESOBI #m ~13233

**F I G. 5**

43

EP 1 473 945 A2

| ESFITI (ESTR_FITI) | ~1321 |
| ESOB_STI #1 (ESOB_ESI#1) | ~1322 |
| ... | |
| ESOB_STI #m (ESOB_ESI#m) | ~1322 |
| ESFI (ESTR_FI) | ~1323 |

130 ~ RTR_VMG (EHDVR_MG)

Or

| RTR_VMGI (EHDVR_MGI) | 1310 ~ |
| ... | |
| ESFIT (ESTR_FIT) | 1320 ~ |
| Program chain information (ORG_PGCI) | 1330 ~ |
| Playlist information (UD_PGCIT) | 1340 ~ |
| ... | |

| ESFITI_GI | ~1321X |
| ESOBI_VSTI #1 | ~1322V |
| ... | |
| ESOBI_VSTI #m | ~1322V |
| ESOBI_ASTI #1 | ~1322A |
| ... | |
| ESOBI_ASTI #l | ~1322A |
| ESFI | ~1324 |

# FIG. 4

EP 1 473 945 A2

ESOB_STI (or ESOB_ESI)                                    1322

| RBP | | Contents | Number of bytes |
|---|---|---|---|
| 0 to 1 | V_ATR | Video attribute | |
| 2 to 2 | AST_Ns | Number of audio streams | |
| 3 to 3 | SP_Ns | Number of SP streams | |
| 4 to 6 | A_ATR0 | Attribute of audio stream #0 | |
| 7 to 9 | A_ATR1 | Attribute of audio stream #1 | |
| 10 to 11 | Reserved | | |
| 12 to 59 | SP_PLT | SP pallet data | |
| | | Total | 54 bytes |

# FIG.6

V_ATR

| Video compression mode | TV mode | Aspect ratio | Reserve |
|---|---|---|---|

| Reserve | Reserve | Video resolution | I/P |
|---|---|---|---|

Aspect ratio ··· 00b=4:3  01b=16:9
Video resolution ··· 000:720∗480, 001:704∗480, 010:352∗480,
                     011:352∗240, 100:544∗480, 101:480∗480,
                     110:1920∗1080
I/P ··· 00:Progressive, 01:Interlaced

# FIG.7

45

EP 1 473 945 A2

| | |
|---|---|
| Number of ESOBs | ~13211X |
| Number of ESOB_VSTIs | ~13212V |
| Number of ESOB_ASTIs | ~13212A |
| End Address of ESFIT | ~13213X |

| | |
|---|---|
| 1321X ~ | ESFITI_GI |
| 1322V ~ | ESOBI_VSTI #1 |
| | ... |
| 1322V ~ | ESOBI_VSTI #m |
| 1323A ~ | ESOBI_ASTI #1 |
| | ... |
| 1322A ~ | ESOBI_ASTI #I |
| 1324 ~ | ESFI |

| | |
|---|---|
| ESFI_GI | ~13241 |
| ESOBI_SRP #1 | ~13432 |
| ... | |
| ESOBI_SRP #m | ~13242 |
| ESOBI #1 | ~13243 |
| ... | |
| ESOBI #m | ~13243 |

# FIG.8

EP 1 473 945 A2

| | |
|---|---|
| 1321X | ESFITI_GI |
| 1322V | ESOBI_VSTI #1 |
| | ... |
| 1322V | ESOBI_VSTI #m |
| 1323A | ESOBI_ASTI #1 |
| | ... |
| 1322A | ESOBI_ASTI #I |
| 1324 | ESFI |

V_ATR ~ 13221V

(Example 1)
Video Compression mode : 0=MPEG-1, 1=MPEG-2
　　　　　　　　　　　　　　　2=MPEG-4(H264)
Tv system : 0=525/60, 1=625/50
Aspect Ratio : 0=4 : 3, 1=16 : 9
I/P : 0=Interance, 1=Progressive
Video Resolution : 0=720×480, 1=704×480, 2=352×480
　　　　　　　　　　　3=352×240, 4=544×480, 5=480×480
　　　　　　　　　　　6=1280×720, 7=1920×1080
(Example 2)
STREAM CONTENT : Value of Component descriptor ⎱ Contents of service
Component Type 　　 : Value of Component descriptor ⎰ information SI

A_ATR ~ 13231A

(Example 1)
Audio Compression mode : 0=AC-3, 2=MPEG-2
　　　　　　1=MPEG-1orMPEG2 without extension bitstream
　　　　　　3=LPCM, 4=AAC, 5=DTS
Quantization/DRC
fs : 0=48KHz, 1=96KHz
Number of Audio channels : 0~7=1ch~8ch, 8=2ch(dual mono)
(Example 2)
STREAM CONTENT : Value of Component descriptor ⎱ Contents of SI
Component Type 　　 : Value of Component descriptor ⎰

FIG. 9

| 13243 | ESOBI #1 |
|---|---|

| 132431 | Stream object general information (ESOB_GI) |
|---|---|
| 132432 | ESOB_ELEMENTARY Stream I#1 |
| | ... |
| 132432 | ESOB_ELEMENTARY Stream I#n |
| 132437 | Number of ES_groups |
| 132438 | ES_group number information #1 |
| | ... |
| 132438 | ES_group number information #m |
| 132433 | SMLI |
| 132434 | AGAPI |
| 132435 | TMAP_GI |
| 132436 | ES_MAPI#1 |
| | ... |
| 132436 | ES_MAPI#n |

| ESOBI_TY | 13243100 |
|---|---|
| ESOB_REC_TM | 13243101 |
| ESOB_REC_TM_SUB | 13243102 |
| ESOB start PTS/ATS | 13243103 |
| ESOB end PTS/ATS | 13243104 |
| PCR_POS_SHIFT | 13243105 |
| AP_PKT SZ | 13243106 |
| PKT_GRP_SZ | 13243107 |
| APP_NAME | 13243108 |
| TS_ID | 13243109 |
| NETWORK_PID | 13243110 |
| PMT_PID | 13243111 |
| SERVICE_PID | 13243112 |
| Format_Identifier | 13243113 |
| Version | 13243114 |
| SOB_REP_PID | 13243115 |
| PCR_PID | 13243116 |
| ESOB_ES_Ns | 13243117 |

*APP_NAME may be ESFI_GI and/or VMGI_MAT

F I G. 10

| | |
|---|---|
| 132431 — | Stream object general information (ESOB_GI) |
| 132432 — | ESOB_ELEMENTARY Stream I#1 |
| | ... |
| 132432 — | ESOB_ELEMENTARY Stream I#n |
| 132437 — | Number of ES_groups |
| 132438 — | ES_group number information #1 |
| | ... |
| 132438 — | ES_group number information #m |
| 132433 — | SMLI |
| 132434 — | AGAPI |
| 132435 — | TMAP_GI |
| 132436 — | ES_MAPI#1 |
| | ... |
| 132436 — | ES_MAPI#n |

| | |
|---|---|
| STREAM_TYPE | ~ 1324321 |
| ESOB_ES_PID | ~ 1324322 |
| ESOB_ES_VSTIN or ASTIN or Oxffff | ~ 1324323 |

| | |
|---|---|
| ES_Ns | ~ 1324381 |
| ESOB_ES_PID#1 | ~ 1324382 |
| ... | |
| ESOB_ES_PID#L | ~ 1324382 |

Group #1 stores main group

| | |
|---|---|
| ADR_OFS | ~ 1324351 |
| ESOB_S_PKT_POS | ~ 1324352 |
| ESOB_E_PKT_POS | ~ 1324353 |
| ES_MAP_Ns | ~ 1324354 |

ADR_OFS : Group #1 stores main group
ESOB_S_PKT_POS : Start address of SOB (LB precision) ] Packet count
ESOB_E_PKT_POS : Start packet number in LB of ESOB } information

| | |
|---|---|
| ES_MAP GI | ~ 1324361 |
| ESOB_ENT#1 | ~ 1324362 |
| ... | |
| ESOB_ENT#q | ~ 1324362 |

F I G. 11

EP 1 473 945 A2

1324361 ~ | ES_MAP GI |
1324362 ~ | ESOBU_ENT#1 |
| ... |
1324362 ~ | ESOBU_ENT#q |

| ES_PID | ~ 13243611 |
| ESOBU_ENT NUMs | ~ 13243612 |
| 1ST_ESOBU_S_PKT_POS | ~ 13243613 |
| ESOBU type | ~ 13243614 |
| PCR interval | ~ 13243615 |

ESOBU type : 00 = video data available, 01 = video data not available, audio data available, 10 = other

1ST_SOBU_S_PKT_POS : First packet number of first ESOBU in LB

PCR interval : 00 = position in ESOB_ENT of PCR immediately before REF_PIC
01 = position in ESOB_ENT two PCR data before REF_PIC
10 = position in ESOB_ENT three PCR data before REF_PIC
11 = other

## F I G. 12

1324361 ~ | ES_MAP GI |
1324362 ~ | ESOBU_ENT#1 |
| ... |
1324362 ~ | ESOBU_ENT#q |

| 1st_Ref_PIC_SZ | ~ 13243621 |
| ESOBU_PB_TM (number of fields) | ~ 13243622 |
| ESOBU SZ (number of LBs) | ~ 13243623 |
| PCR_POS | ~ 13243624 |

## F I G. 13

⟨1⟩ When video data is available
 ESOBU : (a) delimited at randomly accessible positions
     (b) delimited at minimum of 0.4s or more except for last ESOBU.
     (c) delimited within maximum of 1s
 1st_Ref_PIC_SZ : LB count from head of ESOBU to end of Ref_PIC
 When 1st_Ref_PIC_SZ = 0xffffffff, no Ref_PIC is included in SOBU.

 PCR_POS : PCR position indicated by PCR interval using address count from head of ESOBU
 If no PCR is available, PCR_POS = 0xffff
 LB count is given by PCR_POS×2^PCR_POS_SHIFT

⟨2⟩ When video data is not available, and audio data is available
 SOBU : delimited at 1s intervals.
 1st_Ref_PIC_SZ = number of last TS Packets of audio frame at head of ESOBU

 PCR_POS : PCR position indicated by PCR interval using address count from head of ESOBU
 If no PCR is available, PCR_POS = 0xffff
 LB count is given by PCR_POS×2^PCR_POS_SHIFT

⟨3⟩ When neither video data nor audio data are available, and data broadcast is available
 SOBU : delimited at 1s intervals.
 1st_Ref_PIC_SZ = 0xffffffff (fixed)
 PCR_POS = 0xffffffff (fixed)

# FIG. 14

EP 1 473 945 A2

**FIG. 15**

| | |
|---|---|
| ESOBI #1 | 13233 |

| | |
|---|---|
| Stream object general information (ESOB_GI) | 13221 |
| MAP_Groupl #1 (ETMAP #1) | 13222 |
| ... | |
| MAP_Groupl #n (ETMAP #n) | 13222 |

| | |
|---|---|
| PAT_PMT (1~n) | 1322100 |
| Recording start time (ESOB_REC_TM) | 1322101 |
| ESOB start PTS/ATS (ESOB_S_PTM) | 1322102 |
| ESOB end PTS/ATS (ESOB_E_PTM) | 1322103 |
| File pointer of head ESOBU | 1322104 |
| Stream Packet Length | 1322105 |
| Number of Stream Packets in PACK Group | 1322106 |
| Number of MAP Groups | 1322107 |
| Number of Entries of MAP_Group #1 | 1322108 |
| ... | |
| Number of Entries of MAP_Group #n | 1322109 |

| | |
|---|---|
| MAP Group GI (ESOB_TMAP_GI) | 132220 |
| MAP_ENT #1 | 132221 |
| ... | |
| MAP_ENT #r | 132221 |
| ESOBU_ENT #1 | 132222 |
| ... | |
| ESOBU_ENT #q | 132222 |

EP 1 473 945 A2

| 132220 | MAP Group GI (ESOB_TMAP_GI + EES_TMAP_GI) |
|---|---|
| 132221 | MAP_ENT #1 |
| | ... |
| 132221 | MAP_ENT #r |
| 132222 | ESOBU_ENT #1 |
| | ... |
| 132222 | ESOBU_ENT #q |

| | |
|---|---|
| M_ENT NUMs (ESOB_TMAP_GI/EES_TMAP_GI_Ns) | 1322201 |
| ESOBU_ENT NUMs (ETMAP_GI/ESOBU_ENT_Ns) | 1322202 |
| TM_OFS | 1322203 |
| ADD_OFS (EES_S_ADR_OFS) | 1322204 |
| ESOBU type (EES_PID) | 1322205 |
| PMT_ID/program ID | 1322206 |

| | |
|---|---|
| ESOBU_ENTN | 1322221 |
| TM DIFF | 1322222 |
| Target ESOBU_ADR (number of TS packets or number of Packs) | 1322223 |

ESOBU type : 00 = video data available, 01 = video data not available, audio data available, 10 = other

## F I G. 16

| 132220 | MAP Group GI |
|---|---|
| 132221 | MAP_ENT #1 |
| | ... |
| 132221 | MAP_ENT #r |
| 132222 | ESOBU_ENT #1 |
| | ... |
| 132222 | ESOBU_ENT #q |

| | |
|---|---|
| Number of 1st Ref PIC LBs or number of TS packets | 132231 |
| ESOBU_PB_TM (number of fields) | 132232 |
| ESOBU_SZ (number of TS packets or number of LBs) | 132233 |
| PCR_LB count number or 1st_Ref_PIC_PTM | 132234 |

## F I G. 17

⟨1⟩ When video data is available
　　SOBU : (a) delimited at randomly accessible positions
　　　　　　(b) delimited within maximum of 1s
　　1st_Ref_PIC_LB count : number of LBs from head of ESOBU to end of Ref_PIC
　　When 1st_Ref_PIC_LB count = 0xffffffff, no Ref_PIC is included in SOBU.
　　PCR_LB count number : number of LBs from head of ESOBU closest to 1st_Ref_PIC to
　　LB with PCR.　First 1 bit is ±flag (0 = +, 1 = −).　If no PCR is available,
　　PCR_LB count number = 0xffff or playback time of 1st_Ref_PIC

⟨2⟩ When video data is not available, and audio data is available
　　SOBU : delimited at 1s intervals.
　　1st_Ref_PIC_LB count = number of last LBs of audio frame at head of ESOBU
　　PCR_LB count number = number of LBs from head of SOBU closest to audio frame at
　　head of ESOBU to LB with PCR.　First 1 bit is ±flag (0 = +, 1 = −).
　　If no PCR is available, PCR_LB count number = 0xffff

⟨3⟩ When neither video data nor audio data are available, and data broadcast is available
　　SOBU : delimited at 1s intervals.
　　1st_Ref_PIC_LB count = 0xffffffff (fixed)
　　PCR_LB count number = 0xffffffff (fixed)

F I G. 18

EP 1 473 945 A2

Stream data management information recording area. (RTR_ESMG) (EHDVR_MG) — 130

- Disc management information (ESMGI_MAT) (EHDVR_MGI) — 1310
- Stream object management (ESFIT) (global) information — 1320
- Program chain information (ORG_PGCI) — 1330
- Playlist information (UD_PGCIT/PL_SRPT) — 1340

Program chain general information (PGC_GI) — 1331

Program information #1 (PGI#1) — 1332

...

Program information #p (PGI#p) — 1332

CELL_SRP #1 — 1333

...

CELL_SRP #q — 1333

Cell information #1 (CI#1) — 1334

...

Cell information #q (CI#q) — 1334

F I G. 19

**FIG. 20**

1331 — Program chain general information (PGC_GI)

1332 — Program information #1 (PGI#1)

...

1332 — Program information #p (PGI#p)

1333 — CELL_SRP #1

...

1333 — CELL_SRP #q

1334 — Cell information #1 (CI#1)

...

1334 — Cell information #q (CI#q)

- 13311 — Number of programs (PG_Ns)
- 13312 — Number of cells in program chain (C_SRP_Ns)

- 13321 — Program type (PG_TY)
- 13322 — Number of cells in program (C_Ns)
- 13323 — Program contents information (PRM_TXTI, IT_TXT_SRPN, REP_PICTI, etc.)

- 13341 — Cell type (C_TY)
- 13342 — Cell playback time (C_PB_TM)
- 13343 — Corresponding ESOB number (ESOBN)
- 13344 — Cell start PTS/ATS
- 13345 — Cell end PTS/ATS
- 13346 — MAP_Group number/PMT_ID

Cell type 0 : VR moving picture (M_VOB), 1 : VR still picture (S_VOB), 2 : streamer (ESOB)

| | UD_PGCT information | ~1341X |
| | UD_PGC search pointer #1 | ~1342X |
| | ... | |
| | UD_PGC search pointer #r | ~1342X |
| | UD_PGC information #1 | ~1345X |
| | ... | |
| | UD_PGC information #s | ~1345X |

130 ~ Stream data management information recording area (RTR_ESMG) (EHDVR_MG)

1310 ~ Disc management information (ESMGI_MAT) (EHDVR_MGI)

1320 ~ Stream object management (ESFIT) (global) information

1330 ~ Program chain information (ORG_PGCI)

1340 ~ UD_PGCIT information/ playlist information (UD_PGCIT/PL_SRPT)

Or

| | Playlist general information | ~1341 |
| | Playlist #1 (PL_SRP #1) | ~1342 |
| | ... | |
| | Playlist #r (PL_SRP #r) | ~1342 |
| | CELL_SRP #1 | ~1343 |
| | ... | |
| | CELL_SRP #s | ~1343 |
| | Cell information #1 (CI #1) | ~1344 |
| | ... | |
| | Cell information #s (CI #s) | ~1344 |

# FIG. 21

| Playlist general information<br>(UD_PGCITI/PL_SRPTI) | | Number of playlists (PL_SRP_Ns) | 13411 |
| | | Number of cells in all playlists (C_Ns) | 13412 |
| Playlist #1<br>(PL_SRP #1) | | | |
| ... | | Playlist type (PL_TY) | 13421 |
| Playlist #r<br>(PL_SRP #r) | | Number of cells in playlist (C_Ns) | 13422 |
| | | Playlist contents information<br>(PL_CREATE_TM, PRM_TXTI, IT_TXT_SRPN, REP_PICTI, etc.) | 13423 |
| CELL_SRP #1 | | | |
| ... | | | |
| CELL_SRP #s | | | |
| Cell information #1<br>(CI #1) | | Cell type (C_TY) | 13441 |
| | | Cell playback time (C_PB_TM) | 13442 |
| ... | | Reference ESOB number (ESOBN) | 13443 |
| | | Cell start PTS/ATS | 13444 |
| Cell information #s<br>(CI #s) | | Cell end PTS/ATS | 13445 |
| | | MAP_Group number/PMT_ID | 13446 |

Cell type 0 : VR moving picture (M_VOB), 1 : VR still picture (S_VOB), 2 : streamer (ESOB)

F I G. 22

1341

1342

1342

1343

1343

1344

1344

EP 1 473 945 A2

| 1331 | Program chain general information (PGC_GI) | | Number of programs (PG_Ns) | 13311 |
| | | | Number of CELL_SRPs (C_SRP_Ns) | 13312 |

| 1332 | Program information #1 (PGI#1) |
| | ... |
| 1332 | Program information #p (PGI#p) |
| 1333 | CELL_SRP #1 |
| | ... |
| 1333 | CELL_SRP #q |
| 1334 | Cell information #1 (CI#1) |
| | ... |
| 1334 | Cell information #q (CI#q) |

| Program type (PG_TY) | 13321 |
| Number of cells in program (C_Ns) | 13322 |
| PRIM_TXT information | 13323 |
| IT_TXT_SRP number | 13324 |
| Representative PIC information | 13325 |
| Editor ID (LAST_MNF ID) | 13326 |
| Program number | 13327 |
| MNFI | 13328 |

| Cell type (C_TY) | 13341 |
| Corresponding ESOB number (ESOBN) | 13343 |
| Reference ID | 13348 |
| C_EPI_Ns | 13349 |
| Cell start PTS/ATS | 13344 |
| Cell end PTS/ATS | 13345 |
| EPI | 13347 |

Cell type 0 : VR moving picture (M_VOB)
    1 : VR still (S_VOB), 2 : streamer (ESOB)

Reference ID : ⟨1⟩ PID or component tag of video to be
        played back (PID of audio if no video is available)
    ⟨2⟩ Describe Component_Group_Id (ARIB)
        ID = 0xffff when all views are to be displayed

F I G. 23

EP 1 473 945 A2

134 — ESOBU    ESOBU : 1 or more Gop or 1 or more sec. data

8 packets

140

140 — Packet_Group | Packet_Group | ...... | Packet_Group — 140

161    162    163

| Packet_Group_Header | MPEG-TS 1 packet | IAPAT | MPEG-TS 2 packet | ...... | MPEG-TS 85 (or 170) packet | — 162 |

152 bytes    188 bytes    3 bytes

162

| ATS : Arrival time | — 151X |
| DCI CCI SS : Validity of DCI/CCI | — 152X |
| DCI : Display control information | — 153X |
| CCI : Copy generation management information | — 154X |
| PCR information : PCR position information | — 155X |
| MNI | — 156X |

178    180

172  173  174  175  176  177

171 — | Sync byte | Transport error indicator | Payload unit start indicator | Transport priority | PID (packet identifier) | Transport scramble control | Adaptation field control | Continuity index | Adaptation field and/or payload |

Header 170 (4 bytes)

MPEG-TS packet 164 (188 bytes)

F I G. 24

EP 1 473 945 A2

ATS : 6 bytes

| PAT_base (38-0 bits) |
|---|
| PAT_exten (8-0 bits) |

PAT_base : Counter value of 90KHz
PAT_exten : Counter value of 27MHz
PAT=PAT_base/90000Hz+PAT_exten/27,000,000Hz

# F I G. 25

DCI_CCI_SS : 1 byte···

| DCI_SS (1 bit) | Reserved (3 bits) | CCI_SS (3 bits) | Reserved (1 bit) |
|---|---|---|---|

DCI_SS : 0 = invalid, 1 = valid CCI_SS : 0 = invalid, 1 = valid (ASP alone),
2 = valid (EPN alone), 3 = valid (ASP & EPN), 4 = valid (CGMS alone),
5 = valid (CGMS & ASP), 6 = valid (CGMS & EPN),
7 = valid (APS, EPN, & CGMS)

# F I G. 26

DCI (Display control information) : 1 bit×85+3=11 byte

| Reserved (3 bits) | Aspect (1 bit) |
|---|---|

Aspect : 0=4 : 3、1=16 : 9

Repeat 85 times

# F I G. 27

CCI : 5 bits×85+7=85 bytes

| Reserved (7 bits) | Digital copy control (2 bits) | Analog copy control (2 bits) | EPN | ...
|---|---|---|---|

Repeat 85 times

Digital copy control : 00 = inhibition, 01 = permission of one copy,
    11 = unlimited permission
Analog copy control : 0 = no APS, 1 = append APS type 1,
    2 = append APS type 2, 3 = append APS type 3
EPN 0 = EPN OFF、1 = EPN on

# F I G. 28

IAPAT : 3 bytes

| PAT_base (14-0 bits) |
|---|
| PAT_exten (8-0 bits) |

PAT_base : Counter value of 90KHz
PAT_exten : Counter value of 27MHz
PAT=ATS+PAT_base/90000Hz+PAT_exten/27,000,000Hz
(Or PAT = immediately preceding PAT + PAT_base/90 kHz + PAT_exten/27 MHz)

# F I G. 29

PCR position information : 2 bytes

| PCR_Packet number : number of Packets from head of ESOBU closest to 1st_Ref_PIC to Packet with PCR<br>first 1 bit is ±flag (0 = +, 1 = -)<br>if no PCR is available, PCR_Packet number = 0xffff |
|---|

# F I G. 30

F I G. 31

Start

Initial setup ST10

Display setup ST12

Key input ST14

Interpret key input ST16

Parallelly process for respective tasks

| Program setting process ST20 | Recording process ST22 | Playback process ST24 | Digital output process to STB ST26 | Edit process ST28 |

F I G. 32

Interrupt process

Check interrupt factor ST30

ST301 Interrupt process due to end of transfer for one pack to D-PRO unit 52

Rec pack++ (Count up number of recorded packs)

ST302 Interrupt process due to segmentation information fetched from formatter unit 90

Set segmentation information 1 fetch interrupt flag

Return 1

F I G. 33

Enter edit process

ST280

Edit contents ?

(EP edit) A

D (Playlist generation process)

(Copy, move) B

C (Delete process)

ST282A

EP edit process

ST282B

Copy/move process

ST282C

Delete process

ST282D

Playlist generation process

ST284

Set manufacturer ID of apparatus in LAST_MNF_ID (set upon changing one of PGI, CI, and ESOB/VOB)

Return

F I G. 34

Start

ST100
Load file system data

ST102
Free space ? — NO → ST104 "No recordable space available"

YES

ST106
Digital broadcast ? — NO → To VR recording process

YES

ST110
Recording pre-process : write respective management areas (generate VMG), etc.

End

ST111
Error ? — YES →

NO

ST112
Recording initial setup
Reset STC unit
Set write start address and write command in drive unit
Initialize formatter unit
Set CELL, ESOBU, PG, and Packet Group division, etc.

ST114
Recording start setup : Set data fetch start process from buffer in formatter unit

ST116
Extract PAT from buffer, and determine PMT based on user's program setup
Extract PMT for stream to be recorded, and save PAT and PMT upon starting in work RAM 80A as management information

1

PAT : TS_ID, NETWORK_PID, PMT_ID
PMT : SERVICE_ID, REG_DES_VALUE, PCR_PID, ESOB_Es_Ns

F I G. 35

①

Generate VSTI and ASTI for number of streams from PMT ——ST120

Buffer fetch process ——ST130

ST140
Recording data stored in buffer memory = predetermined size ? — NO

YES

Determine write address of drive unit, and issue write command ——ST142

ST144
Segmentation information fetch interrupt generated ? — NO

YES

Fetch segmentation information from formatter unit ——ST146

ST148
Recording end key input ? — NO

YES

Recording end process
Fetch remaining segmentation information from formatter unit & initialization
Write in management area
VMG (generate PGCI, generate SFI (or ESFI): segmentation information, I-PIC information, etc.) ——ST150

End

F I G. 36

Enter disc initialize process

ST1000

Format process

ST1002

Create DVD_HDR directory

ST1026

Generate VMG
· Set supported digital broadcasting scheme code in APP_NAME
(Country ID, authority ID, and Packet format are default values of tuner, and Network type and broadcasting scheme Version are set based on SI)

Return to normal process

## F I G. 37

| Country ID | Authority ID | Packet format |
|---|---|---|

| Network type | Broadcasting scheme Version |
|---|---|

| Country ID : 01=U.S.A., 81=Japan···<br>Authority ID : 01=ARIB, 02=ATSC, 03=DVB<br>Packet Format : 01=MPEG_TS··· | Default data of apparatus (STB, etc.) |
|---|---|
| NETWORK type : 01=Terrestrial digital, 02=CS, 03=BS digital···<br>Broadcasting scheme Version : 10=1.0, 11=1.1··· | Service information of digital broadcast |

## F I G. 38

Enter recording pre-process

ST1100
DVD_HDR directory ?
NO
YES

ST1102
Create DVD_HDR directory

ST1104
Error ?
YES
NO

ST1106
"Error has occurred in file system"

Return (error)

ST1108
VMG ?
YES
NO

ST1110
Load VMG

ST1112
Supported broadcasting scheme ?
YES
NO

ST1114
"Unsupported broadcasting scheme"

Return (error)

ST1116
Check broadcasting scheme of reception signal to be recorded
In case of built-in tuner:
  default scheme
In case of external digital input:
  Determine based on value of Registration_Descriptor

ST1120
Supported broadcasting scheme ?
NO
YES

Process executed when ESOBs of a plurality of schemes are inhibited from being recorded together

ST1122
Broadcasting scheme supported by this apparatus ?
YES
NO

ST1124
"Unsupported broadcasting scheme"

Return (OK)

ST1126
Generate VMG
· Set supported digital broadcasting scheme code in APP_NAME
(Country ID, authority ID, and Packet format are default values of tuner, and Network type and broadcasting scheme Version are set based on service information SI)

Return (OK)

F I G. 39

```
                          ┌──────────────────┐
                          │  Enter VSTI & ASTI │
                          │ generation process │
                          └─────────┬────────┘
                                    │ ◄──────────────────────────────┐
                          ┌─────────▼────────┐                       │
                          │ Check VSTI and ASTI in ESOB ├─ST1200     │
                          └─────────┬────────┘                       │
                          ┌─────────▼────────┐                       │
                          │ Check stream type in PMT ├─ST1201        │
                          └─────────┬────────┘                       │
                          ┌─────────▼────────┐                       │
                          │ Read out recorded VSTI ├─ST1202          │
                          └─────────┬────────┘                       │
                                    │  ST1203                        │
```

Stream type ?

0x01   0x02   0x03   0x04

ST1204 — Read out MPEG1 video packet of corresponding PID, and extract resolution data, aspect ratio, etc. from sequence header

ST1208 — Read out MPEG1 audio packet of corresponding PID, and extract sampling frequency, number of channels, etc. from data contents

ST1206 — Read out MPEG2 video packet of corresponding PID, and extract resolution data, aspect ratio, etc. from sequence header

ST1210 — Read out MPEG2 audio packet of corresponding PID, and extract sampling frequency, number of channels, etc. from data contents

ST1212 — VSTI with identical contents ? — YES

ST1222 — VSTI with identical contents ? — YES

NO — ST1214 — Generate new VSTI based on readout data

NO — ST1224 — Generate new VSTI based on readout data

ST1216 — Save VSTI number in work RAM in association with stream number (component group number)

ST1226 — Save ASTI number in work RAM in association with stream number (component group number)

ST1230 — Does stream for which VSTI and ASTI are to be generated still remain ? — YES

NO

Return

FIG. 40

Enter buffer fetch process

ST1300
Receive TS packet

ST1302
PCR ? — NO

YES ST1304
Set PCR value in STC

ST1306
Head of Packet Group ? — NO

YES ST1308
Save STC as ATS in Packet Group Header
Save PTS in Packet Group Header

ST1310
Allocate difference of ATS from STC as IAPAT after previous TS packet

ST1312
Does PMT include copy descriptor ? — YES

ST1313
Save copy information on PMT in Packet Group Header

NO ST1314
Does packet include copy descriptor ? — NO

ST1315
Save same copy information as previous information in Packet Group Header

YES ST1316
Save copy information of packet in Packet Group Header

ST1318
Does packet include component descriptor ? — YES

ST1320
Save resolution information of packet in Packet Group Header

NO ST1319
Save same resolution information as previous information in Packet Group Header

ST1322
PACKET_GROUP formed ? — NO

YES ST1323
Save 1 PACKET_GROUP in buffer

Return

F I G. 41

Enter SFI (ESFI)
generation process

ST1500
Increment number of SOBI_SRPs by 1

ST1502
Set recording start time in SOB_REC
_TM and SOB_REC_TM_SUB
Extract SOB_S_PTM and SOB_E_PTM
from stream and set them

ST1504
Set PCR_POS_SHIFT according to
rate

ST1506
Transport
stream (TS) ?          NO

YES          ST1508
Set AP_PKT_SZ = 0xbc (188)
Set PKT_GRP_SZ = 8

ST1510
Set AP_PKT_SZ to be value of
transfer packet length
Set PKT_GRP_SZ to be value
corresponding to transfer packet
length

ST1512
Check broadcasting scheme, and set
corresponding value in APP_NAME

Note 1) APP_NAME is either fixed or
changed for each SOB depending
on apparatus
Note 2) Setting value is input as
either text code indicating name
(e.g., "ARIB") or ID code
(ARIB = 01, DVB = 02,...)

ST1514
Read out PAT upon start of
recording from work RAM, and set
TS_ID, NETWORK_PID, and PMT_ID
(PID of PMT used in this ESOB)

ST1516
Read out PMT upon start of
recording from work RAM, and set
SERVICE_ID (Program_number in
PMT), Format_Id, version (value of
REG_DES), PCR_PID, and ESOB_Es_
Ns

ST1518
Generate group information based on
component group descriptor of event
information table EIT

ST1520
Set recording start LB address in
ADR_OFS
Generate MAPI for each stream
based on segmentation information
(except for unnecessary stream; or
set SOBU_ENT_Ns of such stream to
be zero)

F I G. 42

Return

Enter PG generation process

ST1700

PG_TY = 0 (0 : erase permission, 1 : erase inhibition)
Cell_Ns = number of CELLs
Set 0x12 in CHR of VMGI_MAT when Language code of short event
    descriptor in EIT is "jpn"
Second area of PRM_TXTI = program name : set event_name of short event
    descriptor in EIT
Set REP_PICTI

ST1702

Set manufacturer ID of apparatus in LAST_MNF_ID
(set upon changing one of PGI, CI, and VOB)
Set absolute number of PG in PG_INDEX
Set manufacturer required information in MNFI

ST1704

Set 2 : streamer (ESOB) in CELL_TY
Set reference ESOB number
Set representative (video) PID/Component_Group_Id as ID to be played back
Set number of pieces of EPI
Set playback start PTM and end PTM
Set EP

Return

F I G. 43

Start

ST200
Disk check ? — NO → ST202 Error process → End

YES

ST204
Recorded ? — NO → ST206 "No data is recorded" → End

YES

ST207
Load VMG

ST208
Determine PG, playback of which is to start (ORG_PGC, UD_PGC#1, UD_PGC#2, etc.)

ST209
Read out APP_NAME from work RAM

ST210
Supported scheme ? — NO → ST211 "Unsupported scheme" → End

YES

ST212
Determine ESOB to be played back based on CELL
Determine PMT and STI to be played back from ESOBI

ST214
Determine PID to be played back based on PMT, and set it in decoder unit
Initial setups of MPEG video decoder, SP decoder, and Audio decoder

(2)

F I G. 44

74

②

ST220
Process upon cell playback

ST230
End of playback ? — YES

NO ↓

ST232
Set next cell based on PGCI

ST234
Decoder setup changed ? — NO

YES ↓

ST236
Set to change decoder setup in response to next sequence end code

ST238
Seamless connection ? — YES

NO ↓

ST239
Set MPEG decoder in free run mode
Set Seamless connection flag

ST240
Error ? — YES

NO ↓

ST242
"Read error"

ST244
Playback end process

Return 1

ST246
Another process upon completion of playback

End

F I G. 45

**FIG. 46**

Enter process upon cell playback

ST2200
Determine cell start FP (LBN) and end FP based on contents of MAPI
   Determine start ESOBU_ENTRY and end ESOBU_ENTRY based on start time and end time in CI
   Accumulate ENTRY lengths up to target ESOBU_ENTRY to ADR_OFS to calculate start address (LB = FP) and end address
Remaining cell length←end address-start address
Set playback start time in STC

ST2201
Reference ID = 0xffff ?
YES / NO

ST2202
When reference ID = PID
   Specify group to which reference PID belongs based on component group descriptor, determine PIDs to be played back, and set them in decoder
When reference ID = group ID
   Specify PID in group based on component group descriptor, determine PIDs to be played back, and set them in decoder

ST2203
Full display on sub-windows ?
YES / NO

ST2204
Set PID of main group or group which is designated in advance of component group descriptor in decoder

ST2205
Set all video PIDs and main audio PID in decoder and set multi-view mode

ST2206
Set read start address and read length

ST2207
Read data length < remaining cell length ?
NO / YES

ST2208
Remaining cell length←remaining cell length-read data length
Set read length to default

ST2209
Set read length to be remaining cell length
Set remaining cell length to be zero

ST2210
Set data read command in drive unit

ST2212
Transfer start ?
YES / NO

ST2214
Data for 1 ESOBU stored in buffer RAM ?
NO / YES

4    3    5

④　③　⑤

ST2216
Read data for 1 ESOBU from buffer RAM

ST2222
Seamless connection flag set ?　—NO→

YES ↓　ST2224

Read FP ← read FP + read length Set MPEG decoder in normal mode (Read & set SCR)

ST2226
Transfer end ?　—NO→

YES ↓　ST2228

NO ←　Remaining cell length = 0 End of cell ?

YES ↓

Return

ST2230
Key input ?　—NO→

YES ↓　ST2231

Angle permitted ?　—NO→

YES ↓　ST2233

Angle change ?　—NO→

YES ↓　ST2235

Set PID of designated group of component group descriptor in decoder

↓　ST2237

Clear buffer in decoder (STC remains unchanged)

F I G. 47

EP 1 473 945 A2

| 3401 | 3402 | 3403 | 3404 | 3405 | 3406 | 3407 | 3408 | 3409 | 3410 |
|---|---|---|---|---|---|---|---|---|---|
| Table ID (0x02) 8 bits | Section tacks indicator (1) 1 bit | (0) 1 bit | (11) 2 bits | Section length 12 bits | Program number 16 bits | (11) 2 bits | Version number 5 bits | Current/ next indicator 1 bit | Section number 8 bits |

| 3412 | 3413 | 3414 | 3415 | 3416 | 3417 |
|---|---|---|---|---|---|
| Last section number 8 bits | (111) 3 bits | PCR PID 13 bits | (1111) 4 bits | Program information length 12 bits | Descriptor |

| 3421 | 3422 | 3423 | 3424 | 3425 | 3426 | | 3431 |
|---|---|---|---|---|---|---|---|
| Stream type 8 bits | (111) 3 bits | Elementary PID 13 bits | (1111) 4 bits | ES information length 12 bits | Descriptor | | CRC 32 bits |

← Repeat ←

Stream type : 0x01 MPEG1 Video
0x02 MPEG2 Video
0x03 MPEG1 Audio
0x03 MPEG2 Audio
⋮

F I G. 48

| Field name | Contents |
|---|---|
| Descriptor tag | 0xC1 |
| Descriptor length | Descriptor length |
| Digital recording control | Copy generation control data |
| Maximum bit rate flag | 0 : not describe maximum transfer rate of service of interest<br>1 : describe maximum transfer rate |
| Component control flag | 0 : specify entire program (in case of PMT)<br>1 : other |
| Copy control type | Copy generation control data |
| APS control data | Analog output control data |
| Maximum bit rate | Maximum transfer rate |
| ... | ... |

F I G. 49

EP 1 473 945 A2

For video data (CP_CTRL_INFO)

| Digital copy control | Analog copy control | Digital recording control | Copy control type (CCI) | APS control data (APS) |
|---|---|---|---|---|
| Unlimited copy permission | Unlimited copy permission | 01 | 00 | Don't care |
| Copy inhibition | Copy inhibition, but no Microvision copy protection is applied (analog copy permitted) | 01 | 11 | 00 |
| | Copy inhibition | 01 | 11 | Other than 00 |
| Copy permission of only one generation | Copy permission of only one generation, but no Microvision copy protection is applied (analog copy permitted) | 01 | 10 | 00 |
| | Copy inhibition after copy of one generation | 01 | 10 | Other than 00 |

F I G. 50

EP 1 473 945 A2

For audio data (CP_CTRL_INFO)

| Digital copy control | Digital recording control | Copy control type (CCI) |
|---|---|---|
| Unlimited copy permission | 01/11 | 00 |
| Copy permission of only one generation | 01/11 | 10 |
| Copy inhibition | 01/11 | 11 |

## F I G. 51

| Field name | Contents |
|---|---|
| Descriptor tag | 0x50 |
| Descriptor length | Descriptor length |
| Stream contents | 0x01 : video |
| Component type | Component type |
| Component tag | Common in program |
| ISO_639 language code | Language code "jpn" |
| Text_Char | Video type name |

## F I G. 52

| Component type | Contents |
|---|---|
| 0x01 | Video = 480i (525i), aspect ratio = 4 : 3 |
| 0x03 | Video = 480i (525i), aspect ratio = 16 : 9, pan vector = none |
| 0x04 | Video = 480i (525i), aspect ratio > 16 : 9 |
| 0xA1 | Video = 480p (525p), aspect ratio = 4 : 3 |
| 0xA3 | Video = 480p (525p), aspect ratio = 16 : 9, pan vector = none |
| 0xA4 | Video = 480p (525p), aspect ratio > 16 : 9 |
| 0xB1 | Video = 1080i (1125i), aspect ratio = 4 : 3 |
| 0xB3 | Video = 1080i (1125i), aspect ratio = 16 : 9, pan vector = none |
| 0xB4 | Video = 1080i (1125i), aspect ratio > 16 : 9 |

## F I G. 53

| Field name | Contents |
|---|---|
| Descriptor tag | 0x5 |
| Descriptor length | Descriptor length |
| Format_ID | Format type : 0x4d54524d="MTRM" |
| Format version | Format version : 0x10 |
| Reserved | Reserved |

"MTRM": "MPEG Transport stream
for Recording Media"
Value set in DVHS

F I G. 54

| Field name | Contents |
|---|---|
| Descriptor tag | 0x4d |
| Descriptor length | Descriptor length |
| 0x4dISO_639_LANGUAGE_CODE | ARIB : "jpn" |
| event_name_length | Program name length |

| event_name_char | Program name |
|---|---|

Repeat for program name length

F I G. 55

EP 1 473 945 A2

| Table ID (0x02) 8 bits | Section tacks indicator (1) 1 bit | (1) 1 bit | (11) 2 bits | Section length 12 bits | Service ID 16 bits | (11) 2 bits | Version number 5 bits | Current/next indicator 1 bit | Section number 8 bits |
|---|---|---|---|---|---|---|---|---|---|
| 3401a | 3402a | 3403X | 3404a | 3405a | 3406X | 3407a | 3408a | 3409a | 3410a |

| Last section number 8 bits | TS_ID 16 bits | Original network ID 16 bits | Segment last section number 8 bits | Last table ID 8 bits |
|---|---|---|---|---|
| 3412a | 3413X | 3414X | 3415X | 3416X |

| Event ID 16 bits | Start time 40 bits | Duration 24 bits | Progress state 3 bits | Scramble 0 : off, 1 : on 1 bit | Descriptor area length 12 bits | Descriptor |
|---|---|---|---|---|---|---|
| 3420X | 3421X | 3422X | 3423X | 3424X | 3425X | 3426a |

← Repeat ←

| CRC 32 bits |
|---|
| 3431a |

F I G. 56

| Field name | Contents |
|---|---|
| Descriptor tag | 0xD9 |
| Descriptor length | Descriptor length |
| Component group type | 000 : multi-view TV, 001-111 : undefined |
| Total bit rate flag | 0 : no total bit rate field is present in event<br>1 : total bit rate field is present in event |
| Number of groups | Number of groups |

| Component group ID | 0 : main group, 0x1-0xf : sub-group |
|---|---|
| Number of CA units | Number of charge account units<br>( number of charge account/<br>non-charge account units ) |

| CD unit ID | Charge account unit identification |
|---|---|
| Number of components | . . . |

| Component tag | . . . |
|---|---|

-- Repeat for number of components --

---- Repeat for number of CA units --

| Total bit rate | |
|---|---|

---- Present when total bit rate flag is 1 Not present when total bit rate flag is 0

| Text length | Length of subsequent text |
|---|---|

| Text | Text |
|---|---|

---- Repeat for text length --

---- Repeat for number of groups --

(Component group descriptor)

# F I G. 57

Start

ST300
Disk check ? — NO → ST302
Error process
End

YES

ST304
Recorded ? — NO → ST306
"No data is recorded"
End

YES

ST307
Load VMG

ST308
Determine PG, playback of which is to start (ORG_PGC, UD_PGC#1, UD_PGC#2, etc.)

ST309
Read out APP_NAME from work RAM

ST310
Supported scheme ? — NO → ST311
"Unsupported scheme"
End

YES

ST312
Determine ESOB to be transferred based on CELL information

ST314
Determine PID to be played back based on PMT, and set it in decoder unit
Reset STC, and make transfer setup of decoder unit

6

F I G. 58

⑥

Process upon cell transfer — ST320

End of playback ? — ST330

NO → Set next cell based on PGCI — ST332

YES

Error ? — ST340

NO → Another process upon completion of playback — ST346 → End

YES

"Read error" — ST342

Playback end process — ST344

Return 1

F I G. 59

EP 1 473 945 A2

Enter process upon
cell playback

ST3200

Determine cell start FP (LBN) and end FP based on contents of MAPI
Determine start ESOBU_ENTRY and end ESOBU_ENTRY based on start
time and end time in CI
Accumulate ENTRY lengths up to target ESOBU_ENTRY to ADR_OFS to
calculate start address (LB = FP) and end address
Remaining cell length ← end address-start address
Set playback start time in STC

ST3201

Reference ID
= 0xffff ?  — YES

NO  ST3202

When reference ID = PID
Specify group to which reference
PID belongs based on component
group descriptor, determine PIDs to
be played back, and set them in
decoder
When reference ID = group ID
Specify PID in group based on
component group descriptor,
determine PIDs to be played back,
and set them in decoder

ST3203

Full display
on sub-windows
?  — YES

NO  ST3204

Set PID of main group or group
which is designated in advance
of component group descriptor
in decoder

ST3205

Set all video PIDs and main audio PID
in decoder and set multi-view mode

ST3206

Set read start address and read
length

ST3207

Read
data length < remaining
cell length ?  — NO

YES  ST3208

Remaining cell length ← remaining
cell length-read data length
Set read length to default

ST3209

Set read length to be remaining cell
length
Set remaining cell length to be zero

ST3210

Set data read command in drive unit

ST3212

Transfer
start ?
YES  NO

Data for
1 ESOBU stored in
buffer RAM ?  — NO

ST3214

YES

⑧  F I G. 60  ⑦  ㊙

87

⑧   ⑦        〔ⁱ‾ⁱ〕 Process in decoder unit   ⑨

ST3216

Read data for 1 ESOBU from buffer RAM

ST3217

Read out ATS in Packet GH onto register 1, compare
ATS with STC, and transfer first TS packet when ATS
= STC

ST3221

Read out next IAPAT, add it to register 1, compare sum
with STC, and transfer next TS packet when sum = STC

ST3223

End of
transfer of 85 TS     NO
packets ?

YES

ST3224

Read FP ← read FP + read length
Set MPEG decoder in normal mode
(Read & set SCR)
Reset seamless connection flag

ST3226

Transfer       NO
end ?

YES

ST3228

Remaining
NO   cell length = 0
(End of cell ?)

YES

Return

ST3230

Key input ?    NO

YES

ST3231

Angle
movement permitted    NO
?

YES

ST3233

Angle         NO
movement ?

YES

ST3235

Set PID of designated
group of component group
descriptor in STB

# F I G. 61

( Enter process upon time search )

ST400
User sets title, playback time, and stream number

ST402
Determine PG to be played back from title

ST404
Determine PGI and CI

ST406
Determine ESOBI to be played back based on ESOB number in CI

ST408
Determine MAP Group (or ETMAP) in SOBI to be played back based on stream number

ST410
Determine MAP Group Entry to be played back based on playback time

Select Entry which is closest to playback time and has value smaller than playback time since MAP Group Entry is generated at 10s intervals

ST412
Extract ESOBU Entry information from ESOBU number in MAP Group Entry to find SOBU Entry which is closest to playback time and has value smaller than playback time

*Read out Pack Group if Pack Group Header includes PCR position information

ST414
Calculate start address of SOBU based on ESOBU address in MAP Group Entry and ESOBU size in each SOBU Entry information

ST416
Calculate reference picture address, and determine PCR position from PCR address information

ST418
Read out PCR and set it in STC

ST420
Set decode initial setup and display start time (playback time designated by user) in decoder

ST422
Set drive unit to start read process from reference picture address

( Return to normal playback process )

F I G. 62

( Enter process upon time search )

ST400

User sets title, playback time, and stream number

ST402

Determine PG to be played back from title

ST404

Determine PGI and CI

ST406

Determine ESOBI to be played back based on ESOB number in CI

ST409

Compare playback time with total of playback times of respective ESOBUs, and determine ESOBU Entry which is closest to playback time and has value smaller than playback time

ST411

Calculate total of data lengths to target ESOBU, and calculate address of head of ESOBU

ST413

Calculate address of reference picture, and determine PCR position by PCR address information (PCR_POS × 2^PCR_POS_SHIFT)

← *Read out Pack Group if Pack Group Header includes PCR position information

ST418

Read out PCR and set it in STC

ST420

Set decode initial setup and display start time (playback time designated by user) in decoder

ST422

Set drive unit to start read process from reference picture address

( Return to normal playback process )

F I G. 63

90

(a)

| ESOB |
| --- |

|  134  |  134  | 132 |  134  |
| --- | --- | --- | --- |

(b)

| ESOBU #1 | ESOBU #2 |  | ESOBU |
| --- | --- | --- | --- |

|  140  |  140  |  140  |
| --- | --- | --- |

(c)

| Packet Group | ⋯ | Packet Group |  | Packet Group | ⋯ |
| --- | --- | --- | --- | --- | --- |

SOBU #2 may not be aligned to Packet Group

|  139  |  139  |  139  |  139  |
| --- | --- | --- | --- |

(d)

| Logical Block #1 | Logical Block #(n+1) | ... | Logical Block #(n+14) | Logical Block #(n+15) |
| --- | --- | --- | --- | --- |

(e)

| Packet Group |
| --- |

|  161  |  163a  |  162  | 140 |  163a  |  162  |
| --- | --- | --- | --- | --- | --- |

(f)

| Packet Group Header | PATS #1 | Packet #1 | ... | PATS #170 | Packet #170 |
| --- | --- | --- | --- | --- | --- |

← 128 bytes → ← 4 bytes → ← 188 bytes →

16 Logical Block = 32768 bytes
(may be corresponding to a playback time of one or more seconds)

| Field Name | Contents |
| --- | --- |
| HEADER_ID | Header Identifier |
| PKT_GRP_GI | Packet Group General Information |
| DCI_CCI | Display Control Information and Copy Control Information |
| reserved | reserved |
| MNFI | Manufacturer's information |

(g)

(h)

| Field Name | Contents |
| --- | --- |
| PKT_GRP_TY | Type of Packet Group |
| VERSION | Version of Packet Group |
| reserved | reserved |

F I G. 64

EP 1 473 945 A2

(EHDVR_MGI)                    (EPL_SRPT)

| Extended High Definition Video Recording Manager (EHDVR_MG) |
| --- |

(a)

| Extended High Definition Video Recording Manager Information (EHDVR_MG) (Mandatory) |
| --- |
| Extended Movie AV File Information Table (EM_AVFIT) (Mandatory) |
| Extended Still Picture AV File Information Table (ES_AVFIT) (Mandatory) |
| Extended Stream File Information Table (ESTR_FIT) (Mandatory) |
| Extended Original PGC Information (EORG_PGCI) (Mandatory) |
| Extended User Defined PGC Information Table (EUD_PGCIT) (Mandatory when EUD_PGC esists) |
| Extended Text Data Manager (ETXTDT_MG) (Optional) |
| Extended Manufacturer's Information Table (EMNFIT) (Optional) |
| Extended Video Time Map Information Table (EVTMAPIT) (Mandatory) |
| Extended Stream Time Map Information Table (ESTMAPTI) (Mandatory) |

| Extended Video Manager Information Management Table (EVMGI_MAT) |
| --- |
| Extended Play List Search Pointer Table (EPL_SRPT) |

(c)

| EPL_SRPT Information (EPL_SRPTI) |
| --- |
| Extended Play List Search Pointer #1 (EPL_SRP #1) |
| Extended Play List Search Pointer #2 (EPL_SRP #2) |
| |
| Extended Play List Search Pointer #n (EPL_SRP #n) |

(d)

F I G. 65    (b)

EVMGI_MAT                                              (Description order)

| RBP | Field Name | Contents | Number of bytes |
|---|---|---|---|
| 0 to 11 | EVMG_ID | EVMG Identifier | 12 bytes |
| 12 to 15 | EHR_MANGR_EA | End address of those Navigation Data which are recorded in EHR_MANGR.IFO | 4 bytes |
| 16 to 27 | reserved | reserved | 12 bytes |
| 28 to 31 | EHDVR_MGI_EA | End address of EHDVR_MGI | 4 bytes |
| 32 to 33 | VERN | Version number of this Book | 2 bytes |
| 34 to 63 | reserved | reserved | 30 bytes |
| 64 to 65 | TM_ZONE | Time Zone | 2 bytes |
| 66 | STILL_TM | Still Time for Still Pictures | 1 bytes |
| 67 | CHRS | Character Set Code for Primary Text | 1 bytes |
| 68 to 82 | RSM_MRKI | Resume Marker Information | 15 bytes |
| 83 to 97 | DISC_REP_PICTI | Disc Representative Picture Information | 15 bytes |
| 98 to 225 | DISC_REP_NM | Disc Representative Name | 128 bytes |
| 226 to 255 | reserved | reserved | 30 bytes |
| 256 to 259 | EM_AVFIT_SA | Start address of EM_AVFIT | 4 bytes |
| 260 to 263 | ES_AVFIT_SA | Start address of ES_AVFIT | 4 bytes |
| 264 to 275 | ETKI | Encrypted Title Key Information | 12 bytes |
| 276 to 277 | CPSI | Copy Protection Scheme Information | 2 bytes |
| 278 to 303 | reserved | reserved | 26 bytes |
| 300 to 303 | ESTR_FIT_SA | Start address of ESTR_FIT | 4 bytes |
| 304 to 307 | EORG_PGCI_SA | Start address of EORG_PGCI | 4 bytes |
| 308 to 311 | EUD_PGCIT_SA | Start address of EUD_PGCIT | 4 bytes |
| 312 to 351 | reserved | reserved | 40 bytes |
| 352 to 355 | ETXTDT_MG_SA | Start address of ETXTDT_MG | 4 bytes |
| 356 to 359 | EMNFIT_SA | Start address of EMNFIT | 4 bytes |
| 360 to 364 | EVTMAP_LAST_MOD_TM | EVTMAP Last Modification Time | 5 bytes |
| 365 to 369 | ESTMAP_LAST_MOD_TM | ESTMAP Last Modification Time | 5 bytes |
| 370 to 511 | reserved | reserved | 142 bytes |
| Total | | | 512 bytes |

# F I G. 66

EPL_SRP  (Description order)

| RBP | Field Name | Contents | Number of bytes |
|---|---|---|---|
| 0 to 1 | reserved | reserved | 2 bytes |
| 2 | PGCN | PGC number | 1 bytes |
| 3 to 7 | PL_CREATE_TM | Play List Creating Time | 5 bytes |
| 8 to 135 | PRM_TXTI | Primary Text Information | 128 bytes |
| 136 to 137 | IT_TXT_SRPN | IT_TXT Search Pointer number for this Play List | 2 bytes |
| 138 to 145 | REP_PICTI | Representative Picture Information | 8 bytes |
| 146 to 158 | EPL_RSM_MRKI | Extended Play List Resume Marker Information | 13 bytes |
| 159 to 160 | EPL_INDEX | Extended Play List Index | 2 bytes |
| 161 to 165 | EPL_LAST_MOD_TM | Extended Play List Modification Time | 5 bytes |
| Total | | | 166 bytes |

## FIG. 67

EPL_RSM_MRKI  (Description order)

| RBP | Field Name | Contents | Number of bytes |
|---|---|---|---|
| 146 to 147 | CN | Cell number | 2 bytes |
| 148 to 153 | PICT_PT | Picture Point | 6 bytes |
| 154 to 158 | MRK_TM | Marking Time | 5 bytes |
| Total | | | 13 bytes |

## FIG. 68

(EHDVR_MG)

| Extended Movie AV File Information Table (EM_AVFIT) (Mandatory) |
| --- |

(a)

(EM_AVFIT)

| Extended M_AVFIT Information (EM_AVFITI) |
| --- |
| Extended Movie VOB Stream Information #1 (EM_VOB_STI #1) |
| ... |
| Extended Movie VOB Stream Information #n (EM_VOB_STI #n) |
| Extended Movie AV File Information (EM_AVFI) |

(b)

(EM_AVFI)

| EM_AVFI General Information (EM_AVFI_GI) |
| --- |
| EM_VOBI Search Pointer #1 (EM_VOBI_SRP #1) |
| ... |
| EM_VOBI Search Pointer #n (EM_VOBI_SRP #n) |
| Extended Movie VOB Information #1 (EM_VOBI #1) |
| ... |
| Extended Movie VOB Information #n (EM_VOBI #n) |

(c)

| Extended Movie VOB General Information (EM_VOB_GI) |
| --- |
| Extended Seamless Information (ESMLI) |
| Extended Audio Gap Information (EAGAPI) |
| Extended VOB Time Map Information (EVOB_TMAPI) |

(d)

| Extended VOB Time Map General Information (EVOB_TMAP_GI) |
| --- |

(e)

F I G. 69

EM_VOB_GI (Description order)

| RBP | Field Name | Contents | Number of bytes |
|---|---|---|---|
| 0 to 1 | VOB_TY | VOB Type | 2 bytes |
| 2 to 6 | VOB_REC_TM | Recording time of this VOB | 5 bytes |
| 7 | VOB_REC_TM_SUB | Sub-second information for VOB_REC_TM | 1 bytes |
| 8 | M_VOB_STIN | M_VOB_STI number | 1 bytes |
| 9 to 14 | VOB_V_S_PTM | Video Start PTM of this VOB | 6 bytes |
| 15 to 20 | VOB_V_E_PTM | Video End PTM of this VOB | 6 bytes |
| 21 to 22 | LOCAL_TM_ZONE | Time Zone of Recording this VOB | 2 bytes |
| Total | | | 23 bytes |

# F I G. 70

EVOB_TMAP_GI (Description order)

| RBP | Field Name | Contents | Number of bytes |
|---|---|---|---|
| 0 to 1 | reserved | reserved | 2 bytes |
| 2 to 3 | VOBU_ENT_Ns | Number of VOBU Entries | 2 bytes |
| 4 to 5 | reserved | reserved | 2 bytes |
| 6 to 9 | ADR_OFS | Address Offset | 4 bytes |
| 10 | VOBU_PB_TM_RNG | Playback TIme Range of VOBU | 1 bytes |
| Total | | | 11 bytes |

(BRP 2 to 3) VOBU_ENT_Ns
Describes the number of VOBU Entries in the Video Time Map Information of this VOB, which are included in EHR_VTMAP.IFO file

(BRP 6 to 9) ADR_OFS
Describes the start address of this VOB with F_RLBN from the first LB of the EHR_MOVIE.VRO file

(BRP 10) VOBU_PB_TM_RNG
Describes the playback time range of VOBU
  00h : 0.4 to 1.0 sec
   others : reserved

# F I G. 71

(EHDVR_MG)

(a)

| Extended Still Picture AV File Information Table (ES_AVFIT) (Mandatory) |
|---|

(b)

| (ES_AVFIT) |
|---|
| ES_AVFIT Information (ES_AVFITI) |
| Extended Still Picture VOB Stream Information #1 (ES_VOB_STI #1) |
| ... |
| Extended Still Picture VOB Stream Information #n (ES_VOB_STI #n) |
| Extended Still Picture AV File Information (ES_AFVI) |
| Extended Still Picture Additional Audio Stream Information #1 (ES_AA_STI #1) |
| ... |
| Extended Still Picture Additional Audio Stream Information #m (ES_AA_STI #m) |
| Extended Still Picture Additional Audio File Information (ES_AAFI) |

(c)

| ES_AVFI General Information (ES_AVFI_GI) |
|---|
| ES_VOGI Search Pointer #1 (ES_VOGI_SRP #1) |
| ... |
| ES_VOGI Search Pointer #n (ES_VOGI_SRP #n) |
| Extended Still Picture VOB Group Information #1 (ES_VOGI #1) |
| ... |
| Extended Still Picture VOB Group Information #n (ES_VOGI #n) |

(d)

| ES_VOG General Information (ES_VOG_GI) |
|---|
| Extended Still Picture VOB Entry #1 (ES_VOB_ENT #1) |
| ... |
| Extended Still Picture VOB Entry #n (ES_VOB_ENT #n) |

(e)

| RBP | Field Name | Contents |
|---|---|---|
| 0 | S_VOB_Ns | Number of S_VOBs |
| 1 | S_VOB_STIN | S_VOB_STI number |
| 2 to 6 | FIRST_VOB_REC_TM | Recording time of First VOB |
| 7 to 11 | LAST_VOB_REC_TM | Recording time of Last VOB |
| 12 to 15 | S_VOG_SA | Start address of this S_VOG |
| 16 to 17 | LOCAL_TM_ZONE | Time Zone of Recording this S_VOG |

F I G. 72

EP 1 473 945 A2

F I G. 73

(a) (EHDVR_MG)
Extended Stream File Information Table (ESTR_FIT) (Mandatory)

(b) (ESTR_FIT)
- ESTR_FIT Information (ESTR_FITI)
- ESTR_FI Search Pointer #1 (ESTR_FI_SRP #1)
- ...
- ESTR_FI Search Pointer #n (ESTR_FI_SRP #n)
- Extended Stream File Information #1 (ESTR_FI #1)
- ...
- Extended Stream File Information #n (ESTR_FI #n)

(c) ESTR_FITI

| RBP | Field Name | Contents |
|---|---|---|
| 0 | ESTR_FI_Ns | Number of ESTR_FI |
| 1 to 4 | ESTR_FIT_EA | End address of ESTR_FIT |

(d) ESTR_FI_SRP

| RBP | Field Name | Contents |
|---|---|---|
| 0 to 3 | ESTR_FI_SA | Start address of ESTR_FI |
| 4 to 7 | ESTR_FI_SZ | Size of ESTR_FI |

(e)
- ESTR_FI General Information (ESTR_FI_GI)
- ESOBI Search Pointer #1 (ESOBI_SRP #1)
- ...
- ESOBI Search Pointer #n (ESOBI_SRP #n)
- Extended Stream Object Information #1 (ESOBI #1)
- ...
- Extended Stream Object Information #n (ESOBI #n)

(f)
- ESOBI General Information (ESOBI_GI)
- ESOB Elementary Stream Information #1 (ESOB_ESI #1)
- ...
- ESOB Elementary Stream Information #n (ESOB_ESI #n)
- reserved for ESOB Seamless Information
- ESOB Grouping Information (ESOB_GPI)
- ESOB Time Map Information (ESOB_TMAPI)

EP 1 473 945 A2

| | ESOBI |
|---|---|

(e)

| ESOB Time Map General Information (ESOB_TMAP_GI) |
|---|
| Extended Elementary Stream Time Map General Information #1 (ES_TMAP_GI #1) |
| ... |
| Extended Elementary Stream Time Map General Information #n (ES_TMAP_GI #n) |

(k)

| ESOBI General Information (ESOBI_GI) |
|---|
| ESOB Elementary Stream Information #1 (ESOB_ESI #1) |
| ... |
| ESOB Elementary Stream Information #n (ESOB_ESI #n) |
| reserved for ESOB Seamless Information |
| ESOB Grouping Information (ESOB_GPI) |
| ESOB Time Map Information (ESOB_TMAPI) |

(f)

| RBP | Field Name | Contents |
|---|---|---|
| 0 | GPI_SRP_Ns | Number of GPI_SRPs |

(h)

| RBP | Field Name | Contents |
|---|---|---|
| 0 to 3 | GPI_SA | Start address of GPI |

(i)

| GPI General Information (GPI_GI) |
|---|
| ES_PID #1 |
| ... |
| ES_PID #n |

(j)

| ESOB_GPI General Information (ESOB_GPI_GI) |
|---|
| GPI Search Pointer #1 (GPI_SRP #1) |
| ... |
| GPI Search Pointer #n (GPI_SRP #n) |
| Grouping Information #1 (GPI #1) |
| ... |
| Grouping Information #n (GPI #n) |

(g)

F I G. 74

ESOBI_GI (Description order)

| RBP | Field Name | Contents | Number of bytes |
|---|---|---|---|
| 0 to 1 | ESOB_TY | ESOB Type | 2 bytes |
| 2 | AP_FORMAT2 | Application Format Name (Minor) | 1 byte |
| 3 | ESOB_PROFILE | Profile of this ESOB | 1 byte |
| 4 to 5 | PMT_PID | PID of PMT packet | 2 bytes |
| 6 to 7 | PCR_PID | PID of PCR packet | 2 bytes |
| 8 to 9 | NETWORK_ID | original_network_id | 2 bytes |
| 10 to 11 | TS_ID | transport_stream_id | 2 bytes |
| 12 to 13 | PROGRAM_NUMBER | program number (service_id) | 2 bytes |
| 14 to 17 | FORMAT_ID | ID of Registration Descriptor | 4 bytes |
| 18 | SERVICE_TYPE | service_type | 1 byte |
| 19 to 20 | CP_CTRL_INFO | Copy Control Information | 2 bytes |
| 21 to 30 | reserved | reserved | 10 bytes |
| 31 to 35 | ESOB_REC_TM | Recording time of this ESOB | 5 bytes |
| 36 | ESOB_REC_TM_SUB | Sub-second information for ESOB_REC_TM | 1 byte |
| 37 to 38 | LOCAL_TM_ZONE | Local Time Zone | 2 bytes |
| 39 to 40 | ESOB_DEF_PID | Default PID of this ESOB | 2 bytes |
| 41 to 46 | ESOB_S_PTM | Start PTM of this ESOB | 6 bytes |
| 47 to 52 | ESOB_E_PTM | End PTM of this ESOB | 6 bytes |
| 53 to 55 | ESOB_DURATION | Duration of this ESOB | 3 bytes |
|  | (PCR_POS_COUNT) | Number of the preceding PCR packets indicated by PCR_POS | 1 byte |
|  | (PCR_POS_SHIFT) | Bit shift of PCR_POS for the designated PCR packet | 1 byte |
| 56 | ESOB_ES_Ns | Number of Elementary Streams in this ESOB | 1 byte |
| 57 | ESOB_V_ES_Ns | Number of Video Elementary Streams in this ESOB | 1 byte |
| 58 | ESOB_A_ES_Ns | Number of Audio Elementary Streams in this ESOB | 1 byte |
| Total |  |  | 59 bytes |

F I G. 75

<ESOB_TY>

| b15 | b14 | b13 | b12 | b11 | b10 | b9 | b8 |
|---|---|---|---|---|---|---|---|
| reserved | | TE flag | GPI flag | reserved | | | |

| b7 | b6 | b5 | b4 | b3 | b2 | b1 | b0 |
|---|---|---|---|---|---|---|---|
| SML flag | | | | | | | |

# F I G. 76

<CP_CTRL_INFO>

| b15 | b14 | b13 | b12 | b11 | b10 | b9 | b8 |
|---|---|---|---|---|---|---|---|
| CCI | | APS | | EPN | ICT | reserved | |

| b7 | b6 | b5 | b4 | b3 | b2 | b1 | b0 |
|---|---|---|---|---|---|---|---|
| Retention | Retention_State | | | reserved | | | |

CCI ·        ⋯ 00b : Copy-free
01b : No-more-copies
10b : Copy-one-generation
11b : Copy-Never

APS        ⋯ 00b : Copy-free
01b : APS is on : Type 1 (AGC)
10b : APS is on : Type 2 (AGC+2L Colorstripe)
11b : APS is on : Type 3 (AGC+4L Colorstripe)

EPN        ⋯ 0b : EPN-asserted
1b : EPN-unasserted

ICT        ⋯ 0b : High Definition Analog Output in the form of Constrained Image
(Image Constraint Token)    1b : High Definition Analog Output in High Definition Analog Form

Retention        ⋯ 0b and CCI = '10b' : Move-mode
0b and CCI = '11b' : Retention-mode
0b and CCI = '00b' or '01b' : Non-Move-mode/Non-Retention-mode
1b : Non-Move-mode/Non-Retention-mode

Retention_State        ⋯ 000b : Retention Time Forever
001b : Retention Time 1 week
010b : Retention Time 2 days
011b : Retention Time 1 day
100b : Retention Time 12 hours
101b : Retention Time 6 hours
110b : Retention Time 3 hours

# F I G. 77
111b : Retention Time 90 minutes

ESOB Elementary Stream Information
(ESOB_ESI) for Video ES                                    (Description order)

| RBP | Field Name | Contents | Number of bytes |
|---|---|---|---|
| 0 | ES_TY | Type of Elementary Stream | 1 byte |
| 1 to 2 | ES_PID | Elementary Stream PID | 2 bytes |
| 3 | STREAM_TYPE | Stream Type in PMT | 1 byte |
| 4 | COMPONENT_TAG | component_tag in stream_identifier_ descriptor | 1 byte |
| 5 | STREAM_CONTENT | stream_content in component_descriptor | 1 byte |
| 6 | COMPONENT_TYPE | component_type in component_descriptor | 1 byte |
| 7 to 9 | V_ATR | Attributes of Video | 3 bytes |
| 10 to 11 | CP_CTRL_INFO | Copy Control Information | 2 bytes |
| Total | | | 12 bytes |

# F I G. 78

ESOB Elementary Stream Information
(ESOB_ESI) for Audio ES                                    (Description order)

| RBP | Field Name | Contents | Number of bytes |
|---|---|---|---|
| 0 | ES_TY | Type of Elementary Stream | 1 byte |
| 1 to 2 | ES_PID | Elementary Stream PID | 2 bytes |
| 3 | STREAM_TYPE | stream_Type in PMT | 1 byte |
| 4 | COMPONENT_TAG | component_tag in stream_identifier_ descriptor | 1 byte |
| 5 | STREAM_CONTENT | stream_content in component_descriptor/ audio_component_descriptor | 1 byte |
| 6 | COMPONENT_TYPE | component_type in component_descriptor/ audio_component_descriptor | 1 byte |
| 7 | SIMULCAST_GP_TAG | simulcast_group_tag in audio_component_ descriptor | 1 byte |
| 8 | A_ATR | Attributes of Audio Elementary Stream | 1 byte |
| 9 to 11 | LANG_CODE | Audio Language Code | 3 bytes |
| 12 to 14 | LANG_CODE2 | Audio Language Code2 | 3 bytes |
| 15 to 16 | CP_CTRL_INFO | Copy Control Information | 2 bytes |
| Total | | | 17 bytes |

# F I G. 79

ESOB Elementary Stream Information
(ESOB_ESI) for Other ES                                    (Description order)

| RBP | Field Name | Contents | Number of bytes |
|---|---|---|---|
| 0 | ES_TY | Type of Elementary Stream | 1 byte |
| 1 to 2 | ES_PID | Elementary Stream PID | 2 bytes |
| 3 | STREAM_TYPE | Stream Type in PMT | 1 byte |
| 4 | COMPONENT_TAG | component_tag in stream_identifier_ descriptor | 1 byte |
| 5 to 6 | DAT_COMP_ID | stream_content in component_descriptor | 2 bytes |
| 7 to N+6 | AD_DAT_COMP_IFO | component_type in component_descriptor | N bytes |
| N18 to N18 | CP_CTRL_INFO | Copy Control Information | 2 bytes |
| Total | | | N+9 bytes |

# FIG. 80

(ES_TY)

| b7 | b6 | b5 | b4 | b3 | b2 | b1 | b0 |
|---|---|---|---|---|---|---|---|
| ST_TY | | reserved | | | | | |

ST_TY ··· 10b : Other Elementary Stream
        01b : Audio Elementary Stream
        00b : Video Elementary Stream

# FIG. 81

<V_ATR>

| b23 | b22 | b21 | b20 | b19 | b18 | b17 | b16 |
|---|---|---|---|---|---|---|---|
| Application Flag | | Aspect Ratio | | | | reserved | |

| b15 | b14 | b13 | b12 | b11 | b10 | b9 | b8 |
|---|---|---|---|---|---|---|---|
| Horizontal Resolution | | | | reserved | | Frame Rate | |

| b7 | b6 | b5 | b4 | b3 | b2 | b1 | b0 |
|---|---|---|---|---|---|---|---|
| Vertical Resolution | | | | reserved | | | |

Application Flag ··· 00b : This video stream is coded with Aspect ratio specified in this V_ATR

01b : This video stream may be coded with Aspect ratio specified in this V_ATR.

The actual Aspect ratio is recorded in the stream

Others : reserved

F I G. 82

<A_ATR>

| b7 | b6 | b5 | b4 | b3 | b2 | b1 | b0 |
|---|---|---|---|---|---|---|---|
| multi_ling | main_comp | quality_indicator | | sampling_rate | | | reserved |

multiling ··· 0b : No multi-lingual audio stream
1b : Bi-lingual audio stream in case of the stream is dual-mono

main_comp ··· 0b : This audio stream is not main audio
1b : This audio stream is main audio

quality_indicator ··· 00b : reserved
01b : Mode 1
10b : Mode 2
11b : Mode 3
Note : ("Mode 1/2/3" are defined according to digital broadcasting standard such as ARIB STD-B32 Part2, Chapter 2)

sampling_rate ··· 001b : 16 kHz
010b : 22.05 kHz
011b : 24 kHz
101b : 32 kHz
110b : 44.1 kHz
111b : 48 kHz

F I G. 83

GPI_GI                                                    (Description order)

| RBP | Field Name | Contents | Number of bytes |
|-----|------------|----------|-----------------|
| 0 | BLOCK_TY | Type of Block of Groups | 1 byte |
| 1 | GP_TY | Type of an ES Group | 1 byte |
| 2 | BLOCK_NUMBER | Number of Block | 1 byte |
| 3 | ES_PID_Ns | Number of ES_PID | 1 byte |
| Total | | | 3 bytes |

(RBP 0) BLOCK_TY
Described the type of the block information

BLOCK_TY        ··· 00h : No definition
                    01h : Multi-view
                    02h : Rain Attenuation
                    11h : Multi-channel
                    others : reserved

(RBP 1) GP_TY
Described the type of the grouping information

GP_TY           ··· 00h : No definition
                    01h : Main Group
                    02h : Sub Group
                    others : reserved

(RBP 2) BLOCK_NUMBER
Describes the block number. If some groups have same
BLOCK_NUMBER, those groups share same attribute
Range : $1 \leq$ BLOCK_NUMBER $\leq 32$

(RBP 3) ES_PID_Ns
Described the number of ES_PIDs
Range : $1 \leq$ ES_PID_Ns $\leq 32$

F I G. 84

ES_PID                                                   (Description order)

| RBP | Field Name | Contents | Number of bytes |
|-----|------------|----------|-----------------|
| 0 to 1 | ES_PID | PID of Elementary Stream | 2 bytes |
| Total | | | 2 bytes |

(RBP 0 to 1) ES_PID
Describes the PID of the Elementary Stream which belong to
this group, which id described by RTR's PID Describing Format

F I G. 85

ESOB_TMAP_GI                                                    (Description order)

| RBP | Field Name | Contents | Number of bytes |
|---|---|---|---|
| 0 to 3 | ESOB_ADR_OFS | Address Offset of ESOB | 4 bytes |
| 4 to 7 | ESOB_SZ | Size of ESOB | 4 bytes |
| 8 | ESOB_S_PKT_POS | ESOB start packet position | 1 byte |
| 9 | ESOB_E_PKT_POS | ESOB end packet position | 1 byte |
| 10 | ESOBU_PB_TM_RNG | Playback Time Range of ESOBU | 1 byte |
| 11 | EES_TMAP_GI_Ns | Number of EES_TMAP_GIs | 1 byte |
| Total | | | 12 bytes |

(BRP 0 to 3) ESOB_ADR_OFS
Describes the start address of this ESOB with F_RLBN from the first LB of
the EHR_STRxx.VRO file

(BRP 4 to 7) ESOB_SZ
Described the size of this ESOB with the number of Packet Groups

(BRP 8) ESOB_S_PKT_POS
Describes the start packet position of this ESOB, with PKTG_RPKTN in
the first Packet Group of this ESOB
        1<=ESOB_S_PKT_POS<=PKT_Ns

(BRP 9) ESOB_E_PKT_POS
Describes the end packet position of this ESOB, with PKTG_RPKTN in the last
Packet Group of this ESOB
        1<=ESOB_E_PKT_POS<=PKT_Ns

(BRP 10) ESOB_PB_TM_RNG
Describes the playback time range of ESOBU
        00h : 0.4 to 1.0 sec
        others : reserved

The playback time of ESOBU may be less than the value specified by this field,
if the ESOBU is the last ESOBU of this ESOB, or 1ST_REF_SZ of this ESOBU
is filled with '0'

(BRP 11) EES_TMAP_GI_Ns
Describes the number of EES_TMAP_GIs for this ESOB. This value shall be
the same as ETMAPI_Ns described in EHR_STMAP.IFO file

# F I G. 86

EES_TMAP_GI                                                                    (Description order)

| RBP | Field Name | Contents | Number of bytes |
|---|---|---|---|
| 0 to 1 | ES_PID | Elementary stream PID | 2 bytes |
| 2 to 7 | ES_S_PTM | Start PTM of this elementary stream | 6 bytes |
| 8 to 13 | ES_E_PTM | End PTM of this elementary stream | 6 bytes |
| 14 to 17 | ES_S_ADR_OFS | Start address offset for this elementary stream | 4 bytes |
| 18 | ES_LAST_ESOBU_E_PKT_POS | Last ESOBU end packet position | 1 byte |
| 19 to 20 | reserved | reserved | 2 bytes |
| 21 to 22 | ES_ESOBU_ENT_Ns | Number of ESOBU Entries for this elementary stream | 2 bytes |
| Total | | | 23 bytes |

(BRP 0 to 1) ES_PID
Describes PID of Video Elementary stream for which this Time Map is generated

(BRP 2 to 7) ES_S_PTM
Describes the presentation start time of the first video field, which is coded as PTS, of this
elementary stream in RTR's PTM Describing Format. When the PTS is not presented in the
elementary stream, the presentation start time shall be calculated in the manner of MPEG
specification

Note : For the Video elementary stream whose PID is defined as ESOB_DEF_PID, the ES_S_PTM
is the same as ESOB_S_PTM in ESOBI_GI

(BRP 8 to 13) ES_E_PTM
Describes the presentation terminating time of the last video field of this elementary stream in
RTR's PTM describing Format. This time is described with the same time basis as time stamps coded
in the elementary stream

Note : For the Video elementary stream whose PID is defined as ESOB_DEF_PID, the ES_E_PTM
is the same as ESOB_E_PTM in ESOBI_GI

(BRP 14 to 17) ES_S_ADR_OFS
Describes the start address of this elementary stream with the number of Packet Groups from
the first Packet Group of ESOB
The following equation shall be fulfilled

$$ES\_S\_ADR\_OFS+(Total\ Sum\ of\ ESOBU\_SZ\ from\ ESOBU\ \#1\ to\ ESOBU\ \#ES\_ESOBU\_ENT\_Ns)$$
$$+K<=ESOBU\_SZ$$
where  K=0 if ES_LAST_ESOBU_E_PKT_POS=PKT_Ns
       K=1 if ES_LAST_ESOBU_E_PKT_POS≠PKT_Ns

(BRP 18) ES_LAST_ESOBU_E_PKT_POS
Describes the end packet position of the last ESOBU, with PKTG_RPKTN in the last Packet
Group of the last ESOBU of this ESOB
       $1<=ES\_LAST\_ESOBU\_E\_PKT<=PKT\_Ns$

(BRP 21 to 22) ES_ESOBU_ENT_Ns
Describes the number of ESOBU Entries in the Stream Time Map Information of this elementary
stream, which area included in EHR_STPAM.IFO file

# FIG. 87

| RBP | Field Name | Contents |
|---|---|---|
| 0 | reserved | reserved |
| 1 | C_TY | Cell Type |
| 2 | ESTR_FN | Stream File Number |
| 3 to 4 | ESOBI_SRPN | ESOBI Search Pointer number |
| 5 to 6 | C_EPI_Ns | Number of C_EPIs |
| 7 to 12 | C_S_PTM | Start PTM of this Cell |
| 13 to 18 | C_E_PTM | End PTM of this Cell |
| 19 to 20 | C_DEF_PID | Default PID for this Cell |

(f)

Extended PGC
Information #i
(EPGCI #i)

(a)

EPGC General Information
(EPGC_GI)

Extended PG Information #1
(EPGI #1)

...

Extended PG Information #m
(EPGI #m)

ECI Search Pointer #1
(ECI_SRP #1)

...

ECI Search Pointer #n
(ECI_SRP #n)

Extended Cell Information #1
(ECI #1)

...

Extended Cell Information #n
(ECI #n)

(b)

| RBP | Field Name | Contents |
|---|---|---|
| 0 to 3 | ECI_SA | Start address of ECI |

(c)

Movie Cell Information
(M_CI)

or

Still Picture Cell
Information
(S_CI)

or

Extended Stream Cell
Information
(ESTR_CI)

(d)

Extended Stream Cell
General Information
(ESTR_C_GI)

Extended Stream Cell Entry
Point Information #1
(ESTR_C_EPI #1)

...

Extended Stream Cell Entry
Point Information #n
(ESTR_C_EPI #n)

(e)

FIG. 88

EP 1 473 945 A2

EPGC_GI (Description order)

| RBP | Field Name | Contents | Number of bytes |
|---|---|---|---|
| 0 | reserved | reserved | 1 byte |
| 1 | PG_Ns | Number of PGs | 1 byte |
| 2 to 3 | CI_SRP_Ns | Number of CI_SRPs | 2 bytes |
| Total | | | 4 bytes |

# F I G. 89

EPGI (Description order)

| RBP | Field Name | Contents | Number of bytes |
|---|---|---|---|
| 0 | reserved | reserved | 1 byte |
| 1 | PG_TY | Program Type | 1 byte |
| 2 to 3 | C_Ns | Number of Cells in this PG | 2 bytes |
| 4 to 131 | PRM_TXTI | Primary Text Information | 128 bytes |
| 132 to 133 | IT_TXT_SRPN | IT_TXT Search Pointer number | 2 bytes |
| 134 to 141 | REP_PICTI | Representative Picture Information | 8 bytes |
| 142 to 154 | PG_RSM_MRKI | Program Resume Marker Information | 13 bytes |
| 155 to 156 | PG_INDEX | Program Index | 2 bytes |
| 157 to 161 | PG_LAST_MOD_TM | Program Last Modification Time | 5 bytes |
| Total | | | 162 bytes |

# F I G. 90

PG_RSM_MRKI (Description order)

| RBP | Field Name | Contents | Number of bytes |
|---|---|---|---|
| 142 to 143 | CN | Cell number | 2 bytes |
| 144 to 149 | PICT_FT | Picture Point (ES_VOB_ENTN) | 6 bytes |
| 150 to 154 | MRK_TM | Marking Time | 5 bytes |
| Total | | | 13 bytes |

# F I G. 91

(EHDVR_MG)

(a)
| Extended VTMAP Information Table (EVTMAPIT) (Mandatory) |
| --- |

(VTMAPIT)

(b)
| VTMAPIT Information (VTMAPITI) |
| --- |
| VTMAPI Search Pointer #1 (VTMAPI_SRP #1) |
| ... |
| VTMAPI Search Pointer #n (VTMAPI_SRP #n) |
| Video Time Map Information #1 (VTMAPI #1) |
| ... |
| Video Time Map Information #n (VTMAPI #n) |

(c)

| RBP | Field Name | Contents |
| --- | --- | --- |
| 0 to 11 | VMG_ID | VMG Identifier |
| 12 to 15 | VTMAPIT_EA | End address of VTMAPIT |
| 16 to 31 | reserved | reserved |
| 32 to 33 | VERN | Version number |
| 34 to 63 | reserved | reserved |
| 64 to 68 | VTMAP_LAST_MOD_TM | VTMAP Last Modification Time |
| 69 to 70 | VTMAP_SRP_Ns | Number of VTMAPI_SRPs |
| 71 to 511 | reserved | reserved |

(d)

| RBP | Field Name | Contents |
| --- | --- | --- |
| 0 to 3 | VTMAPI_SA | Start address of VTMAPI |
| 4 to 5 | reserved | reserved |
| 6 to 7 | VOBU_ENT_Ns | Number of VOBU Entries |

(e)
| VOBU Entry #1 (VOBU_ENT #1) |
| --- |
| VOBU Entry #2 (VOBU_ENT #2) |
| ... |
| VOBU Entry #q (VOBU_ENT #q) |

(f)
| 1st_REF_SZ |
| --- |
| VOBU_PB_TM |
| VOBU_SZ |

F I G. 92

EP 1 473 945 A2

EP 1 473 945 A2

Extended STMAP
Information Table
(ESTMAPIT) (Mandatory)

(a)

| RBP | Field Name | Contents |
|---|---|---|
| 0 to 11 | EVMG_ID | EVMG Identifier |
| 12 to 15 | ESTMAPIT_EA | End address of ESTMAPIT |
| 16 to 31 | reserved | reserved |
| 32 to 33 | VERN | Version number |
| 34 to 63 | reserved | reserved |
| 64 to 68 | ESTMAP_LAST_MOD_TM | ESTMAP Last Modification Time |
| 69 to 70 | ESTMAPI_SRP_Ns | Number of ESTMAPI_SRPs |
| 71 to 511 | reserved | reserved |

(c)

(ESTMAPIT)

ESTMAPIT Information
(ESTMAPITI)

ESTMAPI Search Pointer #1
(ESTMAPI_SRP #1)

...

ESTMAPI Search Pointer #n
(ESTMAPI_SRP #n)

Extended Stream Time
Map Information #1
(STMAPI #1)

...

Extended Stream Time
Map Information #n
(STMAPI #n)

(b)

ESTMAPI_SRP General Information
(ESTMAPI_SRP_GI)

EETMAPI General Information #1
(EETMAP_GI #1)

...

EETMAPI General Information #p
(EETMAP_GI #p)

(d)

| RBP | Field Name | Contents |
|---|---|---|
| 0 to 3 | ESTMAPI_SA | Start address of ESTMAPI |
| 4 | reserved | reserved |
| 5 | EETMAPI_Ns | Number of EETMAPIs |

(e)

| RBP | Field Name | Contents |
|---|---|---|
| 0 to 1 | reserved | reserved |
| 2 to 3 | ESOBU_ENT_Ns | Number of ESOBU Entries |

(f)

Extended Elementary Time Map
Information #1 (EETMAPI #1)

Extended Elementary Time Map
Information #2 (EETMAPI #2)

...

Extended Elementary Time Map
Information #p (EETMAPI #p)

(g)

ESOBU Entry #1
(ESOBU_ENT #1)

ESOBU Entry #2
(ESOBU_ENT #2)

...

ESOBU Entry #q
(ESOBU_ENT #q)

(h)

1ST_REF_SZ

ESOBU_PB_TM

ESOBU_SZ

ESOBU_S_PKT_POS

reserved

(i)

F I G. 93